(19) Europäisches Patentamt
European Patent Office
Office européen des brevets

(11) **EP 4 223 144 B1**

(12) **EUROPÄISCHE PATENTSCHRIFT**

(45) Veröffentlichungstag und Bekanntmachung des Hinweises auf die Patenterteilung:
**17.07.2024   Patentblatt 2024/29**

(21) Anmeldenummer: **23155178.9**

(22) Anmeldetag: **06.02.2023**

(51) Internationale Patentklassifikation (IPC):
**A23L 13/72** (2023.01)    **A23L 19/00** (2016.01)
**A23L 29/231** (2016.01)    **A23L 33/21** (2016.01)

(52) Gemeinsame Patentklassifikation (CPC):
**A23L 29/231; A23L 13/72; A23L 19/07; A23L 33/21**

(54) **VERWENDUNG EINER AKTIVIERBAREN, ENTESTERTEN, PEKTIN-KONVERTIERTEN FRUCHTFASER ZUR HERSTELLUNG EINER KOCHPÖKELWARE**

USE OF AN ACTIVATABLE, DEESTERIFIED PECTIN-CONVERTED FRUIT FIBRE FOR THE MANUFACTURE OF A COOK-IN BRINE

UTILISATION D'UNE FIBRE DE FRUIT DÉSESTÉRIFIÉE ACTIVABLE ET DÉESTÉRIFIÉE POUR LA FABRICATION D'UN PRODUIT CUIT SALAISON

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.02.2022   DE 102022102798**

(43) Veröffentlichungstag der Anmeldung:
**09.08.2023   Patentblatt 2023/32**

(73) Patentinhaber: **Herbstreith & Fox GmbH & Co. KG Pektin-Fabriken**
**75305 Neuenbürg (DE)**

(72) Erfinder: **Fox, Gerhard F.**
**75305 Neuenbürg (DE)**

(74) Vertreter: **Viering, Jentschura & Partner mbB Patent- und Rechtsanwälte**
**Hamborner Straße 53**
**40472 Düsseldorf (DE)**

(56) Entgegenhaltungen:
WO-A1-2020/221400     WO-A1-2021/250154
DE-A1- 102020 121 404     DE-A1- 102020 122 510

## Beschreibung

Die vorliegende Erfindung betrifft die Verwendung einer aktivierbaren, entesterten, pektin-konvertierten Fruchtfaser zur Herstellung einer Kochpökelware. Die Erfindung betrifft zudem eine Zusammensetzung, die diese Fruchtfaser enthält, ein Verfahren zur Herstellung der Kochpökelware unter Verwendung dieser Zusammensetzung und eine Kochpökelware, enthaltend die aktivierbare, entesterte, pektin-konvertierte Fruchtfaser.

## Hintergrund der Erfindung

Salzlaken für das Rohmaterial Fleisch verbessern den Eiweißaufschluss und die Wasserbindefähigkeit in einer Kochpökelware. Zur Herstellung von Laken, die zumeist in Form eines Injektionsmittels verwendet werden, werden Mischungen eingesetzt, die häufig aus Phosphaten, Hydrokolloiden und Eiweißen zusammengesetzt sind. Diese Mischungen werden gelöst und in das rohe Fleisch injiziert. Das Fleisch wird oftmals noch mechanisch behandelt ("tumbeln") und danach gekocht. Durch den Einsatz von Injektionsmitteln kann der Wasserverlust beim Kochen des Fleisches deutlich reduziert werden. Phosphate im Injektionsmittel erhöhen den pH-Wert und verbessern dadurch den Eiweißaufschluss und das Wasserbindevermögen. Die Hydrokolloide tragen ebenfalls zu einer Erhöhung der Wasserbindefähigkeit bei. Zusätzlich wird der Eiweißaufschluss und das Wasserbindevermögen durch die mechanische Behandlung während des Tumbelns unterstützt.

Bisherige Injektionsmittel weisen als Hauptkomponenten oft Carrageene, teilweise in Verbindung mit Cellulosefasern auf. Der Nachteil der genannten Komponenten ist jedoch, dass die Kochpökelware oftmals einen unnatürlichen, gummiartigen Biss aufweist und somit ein für den Konsumenten unangenehmes Mundgefühl erzeugt. Außerdem steht Carrageen schon seit längerem im Verdacht die Darmschleimhaut zu schädigen, weshalb es beim Verbraucher keine hohe Akzeptanz findet. Ferner ist das finale Aroma der Kochpökelware oftmals nicht zufriedenstellend. Dadurch ergibt sich eine Notwendigkeit für alternative Zusammensetzungen zur Herstellung von Injektionsmitteln, welche die oben genannten Nachteile nicht aufweisen.

Die WO 2020/221400 lehrt eine Zusammensetzung zur Herstellung eines Injektionsmittels für das Rohmaterial Fleisch, wobei diese Zusammensetzung neben Pflanzenfasern auch niederverestertes lösliches Pektin enthält. Diese Zusammensetzung hat den Nachteil, dass in der Anwendung weiterhin Phosphatsalze benötigt werden, um eine ausreichende Wasserbindungskapazität in der Kochpökelware zu erzielen.

Die Verwendung von Phosphaten in Fleischprodukten ist aus Gesundheitserwägungen kritisch zu sehen. Dass phosphatreiche Lebensmittel eine Gefahr für Menschen sind, die Nierenprobleme haben, ist schon länger bekannt. Neue Studien zeigen, dass künstlich zugesetzte Phosphate zu einem erhöhten Phosphatspiegel im Blut führen, der auch für gesunde Menschen ein Risiko darstellen kann, und warnen hier vor möglichen Gesundheitsrisiken. Entsprechend prüft zurzeit die Europäische Behörde für Lebensmittelsicherheit, ob für Phosphate in Lebensmitteln eine bessere Kennzeichnung und strengere Grenzwerte nötig sind.

Basierend auf den oben geschilderten Nebenwirkungen verringert sich beim Verbraucher zunehmend die Akzeptanz für Phosphat-Zusätze in Lebensmitteln.

Es besteht daher Bedarf an verbesserten, und insbesondere phosphatfreien Verfahren und Zusammensetzungen zur Herstellung von Kochpökelwaren.

Der vorliegenden Erfindung liegt die Aufgabe zugrunde, den Stand der Technik zu verbessern oder ihm eine Alternative zu bieten.

## Zusammenfassung der Erfindung

Nach einem ersten Aspekt der vorliegenden Erfindung wird die gestellte Aufgabe durch die Verwendung einer aktivierbaren, entesterten, pektin-konvertierten Fruchtfaser zur Herstellung einer Kochpökelware gelöst, wobei die Fruchtfaser eine aktivierbare, entesterte, pektin-konvertierte Citrusfaser ist aufweisend eine Fließgrenze I (Rotation) in der Faserdispersion von mehr als 1,0 Pa und einem wasserlöslichen Pektingehalt von 10 bis 35 Gew%, wobei das wasserlösliche Pektin ein niederverestertes Pektin mit einem Veresterungsgrad von weniger 50% ist, oder die Fruchtfaser eine aktivierbare, entesterte, pektin-konvertierte Apfelfaser ist aufweisend eine Fließgrenze I (Rotation) in der Faserdispersion von mehr als 1,0 Pa und einem wasserlöslichen Pektingehalt von 10 bis 22 Gew%, wobei das wasserlösliche Pektin ein niederverestertes Pektin mit einem Veresterungsgrad von weniger 50% ist.

Die Verwendung der vorab definierten Fruchtfaser hat mehrere Vorteile gegenüber dem Stand der Technik.

Als Fruchtfaser mit einem hohen Anteil an wasserlöslichem Pektin zeigt sie eine gute Texturbildung und darüber hinaus ein erhöhtes Wasserbindungsvermögen. Hierdurch kann sie bereits bei einem Einsatz in geringer Menge das in der Kochpökelware vorhandene Wasser effizient aufnehmen und anbinden.

Das aufgenommene Wasser bleibt auch im Endprodukt an der Faser gebunden, so dass keine nachträgliche Wasserfreisetzung des Produkts zu beobachten ist.

Das niederveresterte Pektin zeigt gerade in der Anwendung im Fleischbereich, bei dem eher neutrale pH-Bedingungen und kaum oder kein Zucker vorliegt, eine ausreichende Gelbildung.

Durch die Tatsache, dass das wasserlösliche Pektin nicht separat vorliegt, sondern fasergebunden vorliegt, quillt die Faser als homogene texturbildende Struktur auf und zeigt dadurch verbesserte organoleptische Eigenschaften, insofern der Kochpökelware im Vergleich zu Phosphatzugabe eine bessere, d.h. fleisch-ähnlichere Konsistenz und Biss verliehen wird.

Da die erfindungsgemäße Faser die Struktur der Fleischmuskelzellen nicht so deutlich wie Phosphate verändert, erhält man durch die erfindungsgemäße Zusammensetzung in der Kochpökelware eine natürlichere Fleischstruktur.

Die erfindungsmäßige Zusammensetzung bietet zunächst den Vorteil, dass auf Phosphate verzichtet werden kann. Dies vereinfacht den Herstellungsprozess in entscheidender Weise, insofern eine Zutat weniger benötigt wird, die zudem immer in Abhängigkeit von der Wasserbindungserfordernissen hinzudosiert werden muss und zu den oben beschriebenen Nachteilen hinsichtlich Nebenwirkungen und Compliance führt.

Wie die Erfinder festgestellt haben, weisen die mit der erfindungsgemäßen Zusammensetzung hergestellten Kochpökelwaren einen natürlichen und unverfälschten Fleischgeschmack auf. Das Aroma der Kochpökelware wird nicht maskiert und kann sich optimal freisetzen.

Die erfindungsgemäße Zusammensetzung beeinträchtigt das bekannte Verhalten der Fleischware nicht, so dass sowohl die etablierten Fleischwaren als auch die etablierten Kochpökel-Backbedingungen unverändert eingesetzt werden können. Damit ist eine schnelle und unkomplizierte Implementierung in bereits etablierte Herstellungsprozesse möglich.

Die erfindungsgemäße Fruchtfaser ist universell einsetzbar, insofern man sie in allen bekannten Fleischsorten, wie beispielsweise Schwein, Pute oder Rindfleisch verwendet werden kann.

Die erfindungsgemäße Faser kann bereits beim kalten Einrühren in die Lake eine deutliche Viskosität auf, so dass die Sedimentation von ungelösten oder unlöslichen Lake-Bestandteilen wie Stärke, Kräuter oder Gewürze verlangsamt oder sogar verhindert wird.

Die erfindungsgemäßen Fruchtfasern stellen im Gegensatz zu künstlichen Phosphaten keine deklarationspflichtige Zusatzstoffe dar.

Es hat sich zudem herausgestellt, dass die mit der erfindungsgemäßen Fruchtfaser hergestellten Zusammensetzungen eine gute Pumpbarkeit besitzen, was für eine industrielle Verarbeitung als Injektionsmittel von entscheidender Bedeutung ist.

## Die Erfindung im Einzelnen

Erfindungsgemäß ist die aktivierbare, entesterte, pektin-konvertierte Fruchtfaser eine aktivierbare, entesterte, pektin-konvertierte Citrusfaser oder eine aktivierbare, entesterte, pektin-konvertierte Apfelfaser.

Die erfindungsgemäße, aktivierbare entesterte, pektin-konvertierte Citrusfaser weist einen wasserlöslichen Pektingehalt von 10 Gew% bis 35 Gew% und besonders bevorzugt von 15 bis 30 Gew% auf. Der Gehalt an wasserlöslichem Pektin in der aktivierbaren pektinhaltigen Citrusfaser kann beispielsweise 11 Gew%, 12 Gew%, 13 Gew%, 14 Gew%, 15 Gew%, 16 Gew%, 17 Gew%, 18 Gew%, 19 Gew%, 20 Gew%, 21 Gew%, 22 Gew%, 23 Gew%, 24 Gew%, 25 Gew%, 26 Gew%, 27 Gew%, 28Gew%, 29 Gew%, 30 Gew%, 31 Gew%, Gew%, 33 Gew% oder 34 Gew% betragen.

Das nachfolgend beschriebene Herstellungsverfahren führt zu aktivierbaren, entesterten, pektin-konvertierten Fruchtfasern mit einer großen inneren Oberfläche, was auch das Wasserbindungsvermögen erhöht und mit einer guten Viskositätsbildung einhergeht. Insbesondere in Calcium-haltigen Anwendungen kann zusätzlich eine deutliche Gelbildung beobachtet werden.

Diese Fasern stellen aktivierbare Fasern dar, die durch die Partialaktivierung im Herstellungsverfahren eine zufriedenstellende Festigkeit aufweisen. Zum Erhalten der optimalen rheologischen Eigenschaften wie Viskosität, Gelierung oder Texturierung bedarf es allerdings anwenderseitig der Anwendung von zusätzlichen Scherkräften. Es handelt sich damit um partiell-aktivierte Fasern, die aber noch weiter aktivierbar sind. Der Begriff der "partiell-aktivierte Fasern" ist damit im Rahmen der vorliegenden Anmeldung synonym, zum Begriff der "aktivierbaren Fasern".

Zudem ist die erfindungsgemäß verwendete aktivierbare, entesterte, pektin-konvertierte Fruchtfaser in ihrer Wirkung potenter. So kann im Vergleich mit anderen Salzlaken bzw. Injektionsmitteln weniger an Menge eingesetzt werden, um eine Kochpökelware mit vergleichbarer Stabilität zu erzeugen.

Die durch das hier beschriebene Verfahren erhaltene aktivierbare entesterte, pektin-konvertierte Fruchtfaser (bspw. wasserlöslicher Pektingehalt ca. 35 Gew% im Falle der Citrusfaser und 22 Gew% im Falle der Apfelfaser) und niedrigveresterte Fruchtfaser wird im Rahmen der Erfindung auch kurz als "entesterte Fruchtfaser" bzw. im Einzelfall konkretisiert als "entesterte Apfelfaser" oder "entesterte Citrusfaser" bezeichnet.

Wie die Erfinder festgestellt haben, weisen die mit diesem Verfahren hergestellten Fruchtfasern gute rheologische Eigenschaften auf. Die erfindungsgemäß verwendeten Fasern können einfach in Calcium-freiem Wasser rehydratisiert werden und die vorteilhaften rheologischen Eigenschaften bleiben auch nach der Rehydratisierung erhalten.

Das nachfolgend beschriebene Herstellungsverfahren führt zu Fruchtfasern, die in hohem Maße geschmacks- und geruchsneutral sind und daher vorteilhaft für die Anwendung im Lebensmittelbereich sind. Das Eigenaroma der übrigen Zutaten wird nicht maskiert und kann sich daher optimal entfalten.

Die aktivierbaren, entesterten, pektin-konvertierten Fruchtfasern werden aus Früchten gewonnen und stellen so natürliche Inhaltsstoffe mit bekannten positiven Eigenschaften dar.

Als Rohstoff können bei dem nachfolgend beschriebenen Herstellungsverfahren pflanzliche Verarbeitungsrückstände wie Apfel-Trester oder Citrus-Trester eingesetzt werden. Diese Verarbeitungsrückstände sind kostengünstig, liegen in ausreichender Menge vor und bieten eine nachhaltige und ökologisch sinnvolle Quelle für die erfindungsgemäß verwendbaren Fruchtfasern.

Fruchtfasern sind in der Lebensmittelindustrie etabliert und akzeptiert, so dass entsprechende Zusammensetzungen ohne langwierige Zulassungsverfahren sofort und auch international zum Einsatz kommen können.

Die Erfindung betrifft in einer Ausführungsform die Verwendung einer aktivierbaren, entesterten, pektin-konvertierten Fruchtfaser zur Herstellung einer Kochpökelware. Eine solche aktivierbare, entesterte, pektin-konvertierte Fruchtfaser kann aus Trester wie Apfel-, oder Citrus-Trester gewonnen werden, der durch Inkubation einer wässrigen Citrus- oder Apfeltrester-Suspension als Ausgangsmaterial aufgeschlossen wird.

## Die aktivierbare, entesterte, pektin-konvertierte Fruchtfaser

Die aktivierbare, entesterte, pektin-konvertierte Fruchtfaser ist eine aktivierbare, entesterte, pektin-konvertierte Citrusfaser oder eine aktivierbare, entesterte, pektin-konvertierte Apfelfaser. Hierzu im Einzelnen:

## Die entesterte Citrusfaser

Die erfindungsgemäß verwendete aktivierbare, entesterte, pektin-konvertierte Citrusfaser hat einen wasser-löslichen Pektingehalt von 10 bis 35 Gew%, wobei das Pektin einen Veresterungsgrad von weniger als 50% aufweist und somit ein niederverestertes Pektin ist. Diese aktivierbare pektinhaltige, niedrigveresterte Citrusfaser wird im Rahmen der Erfindung auch kurz als "entesterte Citrusfaser" bezeichnet. Diese entesterte Citrusfaser ist vorzugsweise durch das hierin beschriebene Verfahren erhältlich oder wird dadurch erhalten.

Die erfindungsgemäß verwendete entesterte Citrusfaser weist einen wasserlöslichen Pektingehalt von 10 Gew% bis 35 Gew% und besonders bevorzugt von zwischen 15 und 30 Gew% auf. Der Gehalt an wasserlöslichem Pektin in der aktivierbaren pektinhaltigen Citrusfaser kann beispielsweise 10 Gew%, 11 Gew%, 12 Gew%, 13 Gew%, 14 Gew%, 15 Gew%, 16 Gew%, 17 Gew%, 18 Gew%, 19 Gew%, 20 Gew%, 21 Gew%, 22 Gew%, 23 Gew%, 24 Gew%, 25 Gew%, 26 Gew%, 27 Gew%, 28 Gew%, 29 Gew% oder 30 Gew% betragen.

Die entesterte Citrusfaser weist hinsichtlich Texturierungs- und Viskosifizierungsverhalten vorteilhafte Eigenschaften auf, was durch die Fließgrenze bzw. durch die dynamische Weissenbergzahl ablesbar ist. Die entesterte Citrusfaser hat eine Fließgrenze I (Rotation) in der Faserdispersion von mehr als 1,0 Pa und kann entsprechend eine oder mehrere der folgenden Charakteristika hinsichtlich Fließgrenze und dynamischer Weissenbergzahl aufweisen und vorteilhafterweise alle diese Charakteristika erfüllen.

In einer Ausführungsform hat die entesterte Citrusfaser in einer 2,5 Gew%igen wässrigen Suspension eine Fließgrenze II (Rotation) von größer 0,1 Pa, vorteilhafterweise von größer 0,6 Pa, und besonders vorteilhafterweise von 1,0 Pa.

Vorteilhafterweise hat die entesterte Citrusfaser in einer 2,5 Gew%igen wässrigen Suspension eine Fließgrenze II (Cross Over) von größer 0,1 Pa, vorteilhafterweise von größer 0,4 Pa und besonders vorteilhafterweise von größer 0,6 Pa.

Die entesterte Citrusfaser kann in einer 2,5 Gew%igen wässrigen Dispersion eine Fließgrenze I (Rotation) von größer 3,5 Pa und besonders vorteilhafterweise von größer 5,5 Pa aufweisen.

In einer weiteren Ausführungsform hat die entesterte Citrusfaser in einer 2,5 Gew%igen wässrigen Dispersion eine Fließgrenze I (Cross Over) von größer 1,0 Pa, vorteilhafterweise von größer 4,0 Pa und besonders vorteilhafterweise von größer 6,0 Pa.

Vorteilhafterweise hat die entesterte Citrusfaser in einer 2,5 Gew%igen wässrigen Suspension eine dynamische Weissenbergzahl von größer 5,5, vorteilhafterweise von größer 6,5 und besonders vorteilhaft von größer 8,0.

Geeigneterweise hat die entesterte Citrusfaser in einer 2,5 Gew%igen wässrigen Dispersion eine dynamische Weissenbergzahl von größer 6,0 vorteilhafterweise von größer 7,0 und besonders vorteilhaft von größer 8,5.

Für die entesterte Citrusfaser können die Merkmale der vorstehenden beschriebenen Charakteristika hinsichtlich Fließgrenze und dynamischer Weissenbergzahl gegebenenfalls auch in beliebiger Permutation kombiniert werden. So kann die erfindungsgemäß verwendete entesterte Citrusfaser in einer speziellen Ausführungsform alle Merkmale hinsichtlich Fließgrenze und dynamischer Weissenbergzahl aufweisen, wobei diese entesterte Citrusfaser vorzugsweise durch das vorliegende Verfahren erhältlich ist oder dadurch erhalten wird.

Zur Bestimmung der Fließgrenze I (Rotation), Fließgrenze I (Cross over), und der dynamischen Weissenbergzahl in einer 2,5 Gew%igen wässrige Dispersion wird die entesterte Citrusfaser entsprechend der in den Beispielen offenbarten Methode als 2,5 Gew%ige wässrige Lösung dispergiert, die Messung erfolgt nach 1 h bei 20°C.

Zur Bestimmung der Fließgrenze II (Rotation), der Fließgrenze II (Cross Over) und der dynamischen Weissenbergzahl in einer 2,5 Gew%igen wässrige Suspension wird die entesterte Citrusfaser entsprechend der in den Beispielen offenbarten Methode als 2,5 Gew%ige wässrige Lösung suspendiert, die Messung erfolgt nach 1 h bei 20°C.

Die entesterte Citrusfaser hat nach einer vorteilhaften Ausführungsform in einer wässrigen 4 Gew%igen Suspension eine Festigkeit von größer 100 g, bevorzugt von größer 125 g und besonders bevorzugt von größer 150 g.

Die entesterte Citrusfaser hat nach einer besonderen Ausführungsform in einer Zusammensetzung mit 22°Brix und 2,5 Gew% Faserkonzentration eine Bruchfestigkeit von 50 HPE oder größer, vorteilhaft von größer 150 HPE und noch vorteilhafter von größer 250 HPE. Die vergleichsweise hohe Bruchfestigkeit ist auf das niederveresterte Pektin zurückzuführen. Die Bruchfestigkeit kann für 2,5 Gew% Faserkonzentration bei 22°Brix beispielsweise 50, 60, 70, 80, 90, 100, 110, 120, 130, 140, 150, 160, 170, 180, 190, 200, 210, 220, 230, 240, 250, 270, 300 oder 400 HPE aufweisen.

Die entesterte Citrusfaser hat nach einer besonderen Ausführungsform in einer Zusammensetzung mit 40°Brix und 2,5 Gew% Faserkonzentration eine Bruchfestigkeit von 250 HPE oder größer, vorteilhaft von größer 500 HPE und noch vorteilhafter von größer 700 HPE. Die vergleichsweise hohe Bruchfestigkeit ist auf das niederveresterte Pektin zurückzuführen. Die Bruchfestigkeit kann für 2,5 Gew% Faserkonzentration bei 40°Brix beispielsweise 250, 300, 350 400, 450, 500, 550, 600, 650, 700, 800, 900 oder 1000 HPE aufweisen.

Der Begriff "Bruchfestigkeit" ist gemäß der vorliegenden Erfindung ein Maß für die Festigkeit eines Gels, welches mit Saccharose in einer Pufferlösung bei pH ca. 3,0 hergestellt wird und sich bei 22°Brix oder 40°Brix ausbildet. Die Bruchfestigkeit wird nach zweistündigem Abkühlen im Wasserbad bei 20 °C bestimmt. Die Bestimmung der Bruchfestigkeit erfolgt mittels des Herbstreith-Pektinometers Mark IV oder einem entsprechenden Vorläufermodell. Die angewandte Methode wird nachfolgend als Bruchfestigkeitstest bezeichnet, der Messwert als Bruchfestigkeit, die Maßeinheit sind Herbstreith-Pektinometer-Einheiten (HPE).

Vorzugsweise weist die entesterte Citrusfaser eine Viskosität von zwischen größer 300 mPas, bevorzugt von größer 400 mPas, und besonders bevorzugt von größer 500 mPas auf, wobei die entesterte Citrusfaser in Wasser als 2,5 Gew%ige Lösung dispergiert wird und die Viskosität mit einer Scherrate von 50 s$^{-1}$ bei 20°C gemessen wird. Die entesterte Citrusfaser kann beispielsweise eine Viskosität von 325, 350, 375, 400, 425, 450, 475, 500, 525, 550, 575, 600, 625, 650, 675, 700, 725, 750, 775, 800, 825, 850, 875, 900, 925, 950, 975 oder 1000 mPas aufweisen.

Zur Viskositätsbestimmung wird die Citrusfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Auswertung jeweils bei einer Schergeschwindigkeit von 50 s$^{-1}$) bestimmt (Rheometer; Physica MCR Serie, Messkörper CC25 (entspricht Z3 DIN), Fa. Anton Paar, Graz, Österreich). Eine entesterte Citrusfaser mit dieser hohen Viskosität hat den Vorteil, dass für das Andicken des Endprodukts geringere Mengen an Fasern notwendig sind. Zudem erzeugt die Faser damit eine homogene Textur.

Die entesterte Citrusfaser hat vorteilhafterweise ein Wasserbindevermögen von mehr als 22 g/g, bevorzugt von mehr als 24 g/g, besonders bevorzugt von mehr als 26 g/g. Ein solch vorteilhaft hohes Wasserbindevermögen führt zu einer hohen Viskosität und über diese dann auch zu einem geringeren Faserverbrauch bei homogener Textur.

Gemäß einer Ausführungsform weist die entesterte Citrusfaser eine Feuchtigkeit von weniger als 15 Gew%, bevorzugt von weniger als 10 Gew% und besonders bevorzugt von weniger als 8 Gew% auf.

Es ist auch bevorzugt, dass die entesterte Citrusfaser in 1,0 Gew%iger wässriger Suspension einen pH-Wert von 3,0 bis 7,0 und bevorzugt von 4,0 bis 6,0 aufweist.

Die entesterte Citrusfaser hat vorteilhaftweise eine Korngröße, bei der mindestens 90 Gew% der Partikel kleiner als 450 μm, bevorzugt kleiner als 350 μm und insbesondere kleiner als 100 μm sind. Gerade für Verwendung der Faser in einer Injektionslösung ist eine besonders geringe Korngröße, wie beispielsweise kleiner als 100 μm, vorteilhaft, weil dies ein Verstopfen der Injektionsnadeln verhindert.

Gemäß einer vorteilhaften Ausführungsform hat die entesterte Citrusfaser einen Helligkeitswert L* > 84, bevorzugt von L* > 86 und besonders bevorzugt von L* > 88. Damit sind die Citrusfasern nahezu farblos und führen bei einem Einsatz in Lebensmittelprodukten nicht zu einer nennenswerten Verfärbung der Produkte.

In vorteilhafter Weise hat die die entesterte Citrusfaser einen Ballaststoffgehalt von 80 bis 95 Gew%.

Aufgrund des sauren Aufschlusses ist das Pektin der Citrusfaser dahingehend geändert worden, dass das unlösliche Protopektin in lösliches Pektin konvertiert wird, so dass die entesterte Citrusfaser ca. 35 Gew% oder weniger an wasserlöslichem Pektin aufweist.

Bei diesem konvertierten Pektin handelt es sich durch den anschließenden enzymatischen Entesterungsschritt um niedrigverestertes Pektin. Unter einem niedrigveresterten Pektin wird erfindungsgemäß ein Pektin verstanden, das einen Veresterungsgrad von weniger als 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden. Durch die Kombination aus Entpektinisierung und Entesterung wird damit die erfindungsgemäß verwendbare Citrusfaser erhalten, die im Rahmen der Erfindung als "entesterte Citrusfaser" bezeichnet wird.

**Die entesterte Apfelfaser**

Die erfindungsgemäß verwendete aktivierbare, entesterte, pektin-konvertierte Apfelfaser hat einen Pektingehalt von 10 Gew% oder mehr, wobei das Pektin einen Veresterungsgrad von weniger als 50% aufweist und somit ein niederverestertes Pektin ist. Diese aktivierbare pektinhaltige niedrigveresterte Apfelfaser wird im Rahmen der Erfindung auch kurz als "entesterte Apfelfaser" bezeichnet. Diese entesterte Apfelfaser ist vorzugsweise durch das hierin Verfahren erhältlich oder wird dadurch erhalten.

Die entesterte Apfelfaser weist erfindungsgemäß einen wasserlöslichen Pektingehalt von 10 Gew% bis 22 Gew% und besonders bevorzugt von 10 bis 15 Gew% auf. Der Gehalt an wasserlöslichem Pektin in der entesterten Apfelfaser kann beispielsweise 10 Gew%, 11 Gew%, 12 Gew%, 13 Gew%, 14 Gew%, 16 Gew%, 17 Gew%, 18 Gew%, 19 Gew%, 20 Gew%, 21 Gew% oder 22 Gew% betragen.

Die entesterte Apfelfaser weist hinsichtlich Texturierungs- und Viskosifizierungsverhalten vorteilhafte Eigenschaften auf, was durch die Fließgrenze bzw. durch die dynamische Weissenbergzahl ablesbar ist. Die entesterte Apfelfaser hat eine Fließgrenze I (Rotation) in der Faserdispersion von mehr als 1,0 Pa und kann entsprechend eine oder mehrere der folgenden Charakteristika hinsichtlich Fließgrenze und dynamischer Weissenbergzahl aufweisen und vorteilhafterweise alle diese Charakteristika erfüllen.

In einer Ausführungsform hat die entesterte Apfelfaser in einer 2,5 Gew%igen wässrigen Suspension eine Fließgrenze II (Rotation) von größer 0,1Pa, vorteilhafterweise von größer 0,6 Pa, und besonders vorteilhafterweise von größer 1,0 Pa.

Vorteilhafterweise hat die entesterte Apfelfaser in einer 2,5 Gew%igen wässrigen Suspension eine Fließgrenze II (Cross Over) von größer 0,1 Pa, vorteilhafterweise von größer 0,4 Pa und besonders vorteilhafterweise von größer 0,6 Pa.

Die entesterte Apfelfaser kann in einer 2,5 Gew%igen wässrigen Dispersion eine Fließgrenze I (Rotation) von größer 1,0 Pa, vorteilhafterweise von größer 3,5 Pa und besonders vorteilhafterweise von größer 5,5 Pa aufweisen.

Die entesterte Apfelfaser hat in einer 2,5 Gew%igen wässrigen Dispersion eine Fließgrenze I (Cross Over) von größer 1,0 Pa, vorteilhafterweise von größer 4,0 Pa und besonders vorteilhafterweise von größer 6,0 Pa.

Vorteilhafterweise hat die entesterte Apfelfaser in einer 2,5 Gew%igen wässrigen Suspension eine dynamische Weissenbergzahl von größer 5,5, vorteilhafterweise von größer 6,5 und besonders vorteilhaft von größer 8,0.

Geeigneterweise hat die entesterte Apfelfaser in einer 2,5 Gew%igen wässrigen Dispersion eine dynamische Weissenbergzahl von größer 6,0 vorteilhafterweise von größer 7,0 und besonders vorteilhaft von größer 8,5.

Für die entesterte Apfelfaser können die Merkmale der vorstehenden beschriebenen Charakteristika hinsichtlich Fließgrenze und dynamischer Weissenbergzahl gegebenenfalls auch in beliebiger Permutation kombiniert werden. So kann die erfindungsgemäß verwendbare entesterte Apfelfaser in einer speziellen Ausführungsform alle Merkmale hinsichtlich Fließgrenze und dynamischer Weissenbergzahl aufweisen, wobei diese entesterte Apfelfaser vorzugsweise durch das hierin beschriebene Verfahren erhältlich ist oder dadurch erhalten wird.

Zur Bestimmung der Fließgrenze I (Rotation), Fließgrenze I (Cross over), und der dynamischen Weissenbergzahl in einer 2,5 Gew%igen wässrigen Dispersion wird die entesterte Apfelfaser entsprechend der in den Beispielen offenbarten Methode als 2,5 Gew%ige wässrige Lösung dispergiert, die Messung erfolgt nach 1 h bei 20°C.

Zur Bestimmung der Fließgrenze II (Rotation), der Fließgrenze II (Cross Over) und der dynamischen Weissenbergzahl in einer 2,5 Gew%igen wässrigen Suspension wird die entesterte Apfelfaser entsprechend der in den Beispielen offenbarten Methode als 2,5 Gew%ige wässrige Lösung suspendiert, die Messung erfolgt nach 1 h bei 20°C.

Die entesterte Apfelfaser hat nach einer vorteilhaften Ausführungsform in einer wässrigen 4 Gew%igen Suspension eine Festigkeit von größer 100 g, bevorzugt von größer 125 g und besonders bevorzugt von größer 150 g.

Die entesterte Apfelfaser hat nach einer besonderen Ausführungsform in einer Zusammensetzung mit 22°Brix und 2,5 Gew% Faserkonzentration eine Bruchfestigkeit von 50 HPE bis 200 HPE, vorteilhaft von 80 HPE bis 170 HPE und noch vorteilhafter von 110 HPE bis 150 HPE. Die vergleichsweise hohe Bruchfestigkeit ist auf das niederveresterte Pektin zurückzuführen. Die Bruchfestigkeit kann für 2,5 Gew% Faserkonzentration bei 22°Brix beispielsweise 80, 85, 90, 95, 100, 105, 110, 115, 120, 125, 130, 135, 140, 145, 150, 155, 160, 165, 170, 175, 180, 185, 190, 195 oder 200 HPE aufweisen.

Die entesterte Apfelfaser hat nach einer besonderen Ausführungsform in einer Zusammensetzung mit 40°Brix und 2,5 Gew% Faserkonzentration eine Bruchfestigkeit von 180 HPE bis 380 HPE, vorteilhaft von 230 HPE bis 330 HPE und noch vorteilhafter von 250 HPE bis 300 HPE. Die vergleichsweise hohe Bruchfestigkeit ist auf das niederveresterte Pektin zurückzuführen. Die Bruchfestigkeit kann für 2,5 Gew% Faserkonzentration bei 40°Brix beispielsweise 230, 240, 250, 260, 270, 280, 290, 300, 310, 320, oder 330 HPE aufweisen.

Der Begriff "Bruchfestigkeit" ist gemäß der vorliegenden Erfindung ein Maß für die Festigkeit eines Gels, welches mit Saccharose in einer Pufferlösung bei pH ca. 3,0 hergestellt wird und sich bei 22°Brix oder 40°Brix ausbildet. Die Bruchfestigkeit wird nach zweistündigem Abkühlen im Wasserbad bei 20 °C bestimmt. Die Bestimmung der Bruchfestigkeit erfolgt mittels des Herbstreith-Pektinometers Mark IV oder einem Vorläufermodell. Die angewandte Methode wird nachfolgend als Bruchfestigkeitstest bezeichnet, der Messwert als Bruchfestigkeit, die Maßeinheit sind Herbstreith-Pektinometer-Einheiten (HPE).

Vorzugsweise weist die entesterte Apfelfaser eine Viskosität von größer 300 mPas, bevorzugt von größer 400 mPas, und besonders bevorzugt von größer 500 mPas auf, wobei die entesterte Apfelfaser in Wasser als 2,5 Gew%ige Lösung dispergiert wird und die Viskosität mit einer Scherrate von 50 $s^{-1}$ bei 20°C gemessen wird. Die entesterte Apfelfaser kann beispielsweise eine Viskosität von 325, 350, 375, 400, 425, 450, 475, 500, 525, 550, 575, 600, 625, 650, 675, 700, 725, 750, 775, 800, 825, 850, 875, 900, 925, 950, 975 oder 1000 mPas aufweisen.

Zur Viskositätsbestimmung wird die Apfelfaser in demineralisiertem Wasser mit der in den Beispielen offenbarten Methode als 2,5 Gew%ige Lösung dispergiert und die Viskosität bei 20°C und vier Scherabschnitten (erster und dritter Abschnitt = konstantes Profil; zweiter und vierter Abschnitt = lineare Rampe; Auswertung jeweils bei einer Schergeschwindigkeit von 50 $s^{-1}$) bestimmt (Rheometer; Physica MCR Serie, Messkörper CC25 (entspricht Z3 DIN), Fa. Anton Paar, Graz, Österreich). Eine entesterte Apfelfaser mit dieser hohen Viskosität hat den Vorteil, dass für das Andicken des Endprodukts geringere Mengen an Fasern notwendig sind. Zudem erzeugt die Faser damit eine homogene Textur.

Die entesterte Apfelfaser hat vorteilhafterweise ein Wasserbindevermögen von mehr als 22 g/g, bevorzugt von mehr als 24 g/g, besonders bevorzugt von mehr als 26 g/g. Ein solch vorteilhaft hohes Wasserbindevermögen führt zu einer hohen Viskosität und über diese dann auch zu einem geringeren Faserverbrauch bei homogener Textur.

Gemäß einer Ausführungsform weist die entesterte Apfelfaser eine Feuchtigkeit von weniger als 15 Gew%, bevorzugt von weniger als 10 Gew% und besonders bevorzugt von weniger als 8 Gew% auf.

Es ist auch bevorzugt, dass die entesterte Apfelfaser in 1,0 Gew%iger wässriger Suspension einen pH-Wert von 3,0 bis 7,0 und bevorzugt von 4,0 bis 6,0 aufweist.

Die entesterte Apfelfaser hat vorteilhaftweise eine Korngröße, bei der mindestens 90 Gew% der Partikel kleiner als 450 $\mu$m, bevorzugt kleiner als 350 $\mu$m und insbesondere kleiner als 100 $\mu$m sind. Gerade für Verwendung der Faser in einer Injektionslösung ist eine besonders geringe Korngröße, wie beispielsweise kleiner als 100 $\mu$m, vorteilhaft, weil dies ein Verstopfen der Injektionsnadeln verhindert.

Gemäß einer vorteilhaften Ausführungsform hat die entesterte Apfelfaser einen Helligkeitswert L* > 60, bevorzugt von L* > 61 und besonders bevorzugt von L* > 62. Damit sind die Apfelfasern nahezu farblos und führen bei einem Einsatz in Lebensmittelprodukten nicht zu einer nennenswerten Verfärbung der Produkte.

In vorteilhafter Weise hat die entesterte Apfelfaser einen Ballaststoffgehalt von 80 bis 95 Gew%.

Bei dem Pektin der entesterten Apfelfaser handelt es sich durch den Entesterungsschritt um niedrigverestertes Pektin. Unter einem niedrigveresterten Pektin wird erfindungsgemäß ein Pektin verstanden, das einen Veresterungsgrad von weniger als 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JEFCA (Monograph 19-2016, Joint FAO/WHO Expert Committee on Food Additives) bestimmt werden. Durch die Kombination aus Entesterung und optional vorgeschalteter schonender Teilextraktion wird die erfindungsgemäß verwendbare Apfelfaser erhalten, die im Rahmen der Erfindung als "entesterte Apfelfaser" bezeichnet wird.

**Herstellung der aktivierbaren, entesterten, pektin-konvertierten Fruchtfaser**

Die aktivierbare, entesterte, pektin-konvertierte Fruchtfaser ist eine entesterte Citrusfaser oder eine entesterte Apfelfaser und ist durch ein Verfahren erhältlich, das die folgenden Schritte umfasst:

(a) Bereitstellen eines Rohmaterials, das Zellwandmaterial einer essbaren Citrusfrucht oder Apfelfrucht, enthält;

(b) Optionaler Aufschluss des Rohmaterials aus Schritt (a) mit Teilextraktion des Pektins aus diesem Rohmaterial durch Inkubation des Rohmaterials aus Schritt (a) in wässriger Suspension bei einem pH-Wert von 2,5 bis 5,0 und anschließender Trennung des teilweise entpektinisierten Materials von der Mischung;

(c) Suspendieren des Rohmaterials aus Schritt (a) oder des teilweise entpektinisierten Materials aus Schritt (b) in einer wässrigen Flüssigkeit und Inkubation dieser wässrigen Suspension bei einem pH-Wert von zwischen 0,5 und 2,5 zur Erzielung einer partiell-aktivierten, pektin-konvertierten Apfelfaser mit einem wasser-löslichen Pektingehalt von 10 bis 22 Gew% oder einer partiell-aktivierten, pektin-konvertierten Citrusfaser mit einem wasserlöslichen Pektingehalt von 10 bis 35 Gew%;

(d) Optionale Zugabe einer Lauge, eines alkalischen Salzes oder eines alkalischen Puffersystems zu der wässrigen Suspension aus Schritt (c) zur Einstellung eines pH-Wertes von zwischen pH = 3,0 und pH = 9,0;

(e) Entesterung der partiell-aktivierten Fasersuspension aus Schritt (c) oder der pH-Wert-angepassten Fasersuspension aus Schritt (d) durch enzymatische Behandlung mit Pektinmethylesterase oder saure Entesterung;

(f) Mindestens zweimaliges Waschen der entesterten aktivierten Faser aus Schritt (e) mit einem organischen Lösungsmittel und jeweils anschließender Trennung der gewaschenen Faser von dem organischen Lösungsmittel;

(g) Optionale zusätzliche Entfernung des organischen Lösungsmittels durch Inkontaktbringen der gewaschenen Faser aus Schritt (f) mit Wasserdampf;

(h) Trocknen des Materials aus Schritt (f) oder (g) umfassend eine Trocknung bei Normaldruck oder eine Vakuumtrocknung zum Erhalten der aktivierbaren entesterten, pektin-konvertierten Fruchtfaser.

Eine Fruchtfaser gemäß der Erfindung ist eine Pflanzenfaser, also eine Faser, die aus einer nichtverholzten pflanzlichen Zellwand isoliert wird und hauptsächlich aus Cellulose besteht, und die hierbei aus einer Frucht isoliert wird. Unter einer Frucht ist hierbei die Gesamtheit der Organe einer Pflanze zu verstehen, die aus einer Blüte hervorgehen, wobei sowohl die klassischen Obstfrüchte als auch Fruchtgemüse enthalten sind.

Erfindungsgemäß ist diese Fruchtfaser ausgewählt aus der Gruppe bestehend aus Citrusfaser und Apfelfaser. Nicht Teil der Erfindung sind Zuckerrübenfaser, Möhrenfaser und Erbsenfaser.

Eine "Apfelfaser" gemäß der Anmeldung ist eine hauptsächlich aus Fasern bestehende Komponente, die aus einer nichtverholzten pflanzlichen Zellwand eines Apfels isoliert wird und hauptsächlich aus Cellulose besteht. Der Begriff der Faser stellt in gewisser Hinsicht ein Misnomer dar, weil die Apfelfasern makroskopisch nicht als Fasern in Erscheinung treten, sondern ein pulverförmiges Produkt darstellen. Weitere Bestandteile der Apfelfaser sind unter anderem Hemicellulose und Pektin.

Die Apfelfaser kann aus allen dem Fachmann bekannten Kulturäpfeln (*malus domesticus*) gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hiervon verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Eine "Citrusfaser" gemäß der Anmeldung ist eine hauptsächlich aus Fasern bestehende Komponente, die aus einer nichtverholzten pflanzlichen Zellwand einer Citrusfrucht isoliert wird und hauptsächlich aus Cellulose besteht. Der Begriff der Faser stellt in gewisser Hinsicht ein Misnomer dar, weil die Citrusfasern makroskopisch nicht als Fasern in Erscheinung treten, sondern ein pulverförmiges Produkt darstellen. Weitere Bestandteile der Citrusfaser sind unter anderem Hemicellulose und Pektin. Die Citrusfaser kann vorteilhafterweise aus Citruspulpe, Citrusschale, Citrusvesikel, Segmentmembranen oder einer Kombination hiervon gewonnen werden.

Zur Herstellung einer entesterten Citrusfaser können als Rohmaterial Citrusfrüchte und bevorzugt Verarbeitungsrückstände von Citrusfrüchten eingesetzt werden. Als Rohmaterial zum Einsatz in dem vorliegenden Verfahren kann entsprechend Citrusschale, (und hier Albedo und/oder Flavedo), Citrusvesikel, Segmentmembranen oder eine Kombination hiervon verwendet werden. In bevorzugter Weise wird als Rohmaterial Citrustrester verwendet, also die Pressrückstände von Citrusfrüchten, die neben den Schalen typischerweise auch das Fruchtfleisch enthalten.

Als Citrusfrüchte können hierbei alle dem Fachmann bekannten Citrusfrüchte verwendet werden. In nicht einschränkender Weise seien hier beispielhaft aufgeführt: Mandarine (*Citrus reticulata*), Clementine (*Citrus × aurantium* Clementine-Gruppe, Syn.: *Citrus clementina*), Satsuma *(Citrus *aurantium* Satsuma-Gruppe, Syn.: *Citrus unshiu*), Mangshan (*Citrus mangshanensis*), Orange *(Citrus *aurantium* Orangen-Gruppe, Syn.: *Citrus sinensis*), Bitterorange *(Citrus *aurantium* Bitterorangen-Gruppe), Bergamotte (*Citrus × limon* Bergamotte-Gruppe, Syn.: *Citrus bergamia*), Pampelmuse (*Citrus maxima*), Grapefruit *(Citrus *aurantium* Grapefruit-Gruppe, Syn.: *Citrus paradisi*) Pomelo (*Citrus *aurantium* Pomelo-Gruppe), echte Limette (*Citrus × aurantiifolia*), gewöhnliche Limette (*Citrus × aurantiifolia,* Syn.: *Citrus latifolia*), Kaffernlimette (*Citrus hystrix*), Rangpur-Limette (*Citrus × jambhiri*), Zitrone (*Citrus × limon* Zitronen-Gruppe), Zitronatzitrone (*Citrus medica*) und Kumquats (*Citrus japonica,* Syn.: *Fortunella*). Bevorzugt sind hierbei die Orange (*Citrus *aurantium* Orangen-Gruppe, Syn.: *Citrus sinensis*) und die Zitrone (*Citrus × limon* Zitronen-Gruppe).

Der optionale saure Aufschluss im Schritt (b) des Verfahrens dient der partiellen Entfernung von Pektin aus dem Zellverband durch Überführung einer Teilfraktion des Protopektins in lösliches Pektin und gleichzeitiger Aktivierung der Faser durch Vergrößerung der inneren Oberfläche. Weiterhin wird das Rohmaterial durch den Aufschluss thermisch zerkleinert. Durch die saure Inkubation im wässrigen Milieu unter Einwirkung von Hitze zerfällt es in Fruchtfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Der saure Aufschluss im Schritt (b) ist so gestaltet, dass das bei der Teilextraktion extrahierte Pektin ein hochverestertes Pektin mit hoher Gelierkraft und gutem Viskosifizierungsvermögen darstellt. Es wird daher im Rahmen der vorliegenden Anmeldung auch als "hochwertiges Pektin" bezeichnet. Bei dem sauren Aufschluss gemäß Schritt (b) handelt es sich um eine vollwertige Pektin-Extraktion in dem Sinne, dass das in Lösung gebrachte Pektin danach durch eine Fest-Flüssig-Trennung von dem Fasermaterial abgetrennt wird.

Bei dem durch die Teilextraktion anfallenden hochwertigen Pektin handelt es sich um hochverestertes Pektin. Unter einem hochveresterten Pektin wird erfindungsgemäß ein Pektin verstanden, das einen Veresterungsgrad von mindestens 50% besitzt. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Nach einer vorteilhaften Ausführungsform weist das hochwertige Pektin, das ein hochverestertes lösliches Citruspektin oder Apfelpektin ist, einen Veresterungsgrad von 50 bis 80%, bevorzugt von 60 bis 80%, besonders bevorzugt von 70 bis 80% und insbesondere bevorzugt von 72% bis 75% auf. Beispielsweise kann der Veresterungsgrad des hochveresterten löslichen Pektins, das bevorzugt ein hochverestertes lösliches Citruspektin oder Apfelpektin ist 70%, 71%, 72%, 73%, 74%, 75%, 76%, 77%, 78%, 79% oder 80% betragen.

Nach einer Ausführungsform weist das hochwertige Pektin, das bevorzugt ein hochverestertes lösliches Citruspektin ist, eine Viskosität, gemessen in mPas, von 500 bis 1500 mPas, bevorzugt von 600 bis 1400 mPas, besonders bevorzugt von 700 bis 1300 mPas und insbesondere bevorzugt von 800 bis 1200 mPas auf.

Nach einer Ausführungsform weist das hochwertige Pektin, das bevorzugt ein hochverestertes lösliches Citruspektin ist, einen Gelierkraft, gemessen in °SAG, von 150 bis 300°SAG, bevorzugt von 200 bis 280°SAG, besonders bevorzugt von 240 bis 270°SAG und insbesondere bevorzugt von 260 bis 265°SAG auf. Beispielsweise kann die Gelierkraft des hochveresterten löslichen Pektins, das bevorzugt ein hochverestertes lösliches Citruspektin ist 160, 170, 180, 190, 200, 210, 220, 230, 240, 250, 260, 261, 262, 263, 264, 265, 266, 267, 268, 269, 270, 280, 290, und 300°SAG betragen.

Nach einer weiteren Ausführungsform weist das hochwertige Pektin, das bevorzugt ein hochverestertes lösliches Apfelpektin ist, einen Gelierkraft, gemessen in °SAG, von 150 bis 250°SAG, bevorzugt von 170 bis 240°SAG, besonders bevorzugt von 180 bis 220°SAG und insbesondere bevorzugt von 190 bis 200°SAG auf. Beispielsweise kann die Gelierkraft des hochveresterten löslichen Pektins, das bevorzugt ein hochverestertes lösliches Apfelpektin ist 160, 170, 180, 190, 191, 192, 193, 194, 195, 196, 197, 198, 199, 200, 210, 220, 230 und 240°SAG betragen.

Das Rohmaterial liegt bei dem Aufschluss gemäß Schritt (b) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Krafteintrag, also beispielsweise durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes im Schritt (b) kann der Fachmann auf alle ihm bekannten Säuren oder sauren Pufferlösungen zurückgreifen. So kann beispielsweise eine organische Säure die als Calcium-Chelator wirkt und damit überschüssige Calcium-Ionen binden kann. Beispiele für eine solche chelatbildende Säure sind Citronensäure, Gluconsäure oder Oxalsäure.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure oder Schwefelsäure eingesetzt.

Bei dem optionalen sauren Aufschluss im Schritt (b) kann zusätzlich noch ein Komplexbildner für zweiwertige Kationen hinzugegeben werden. Beispielhaft sind hier Polyphosphate oder EDTA erwähnt.

Bei dem optionalen sauren Aufschluss im Schritt (b) des Verfahrens liegt der pH-Wert der Suspension zwischen pH = 2,5 und pH = 5,0, bevorzugt zwischen pH = 2,8 und pH = 4,5 und besonders bevorzugt zwischen pH = 3,0 und pH = 4,0. Der optionale saure Aufschluss kann beispielsweise bei einem pH-Wert von 2,8, 2,9, 3,0, 3,1, 3,2, 3,3, 3,3, 3,4, 3,5, 3,6, 3,7, 3,8, 3,9 oder 4,0 durchgeführt werden.

Vorteilhafterweise besteht bei dem optionalen sauren Aufschluss im Schritt (b) die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

Die Inkubation erfolgt bei dem optionalen sauren Aufschluss in Schritt (b) bei einer Temperatur von zwischen 55°C und 80°C, bevorzugt von zwischen 60°C und 75°C und besonders bevorzugt von zwischen 65°C und 70°C. Der optionale saure Aufschluss kann beispielsweise bei einer Temperatur von 60°C, 61°C, 62°C, 63°C, 64°C, 65°C, 66°C, 67°C, 68°C oder 69°C durchgeführt werden.

Die Inkubation erfolgt bei dem optionalen sauren Aufschluss in Schritt (b) über eine Zeitdauer von zwischen 60 min und 8 Stunden und bevorzugt von zwischen 2 h und 6 Stunden. Der optionale saure Aufschluss kann beispielsweise über eine Zeitdauer von 1,5 h, 2,0 h, 2,5 h, 3,0 h, 3,5 h, 4,0 h, 4,5 h, 5,0 h, 5,5 h oder 6,0 h durchgeführt werden.

Die wässrige Suspension hat bei dem sauren Aufschluss in Schritt (b) geeignetermaßen eine Trockenmasse von zwischen 0,5 Gew% und 20 Gew%, bevorzugt von zwischen 3 Gew% und 16 Gew%, und besonders bevorzugt von zwischen 5 Gew% und 14 Gew%. Die Trockenmasse kann bei dem optionalen sauren Aufschluss beispielsweise 1, 2, 3, 4, 5, 6, 7, 8, 9, 10, 11, 12, 13, 14, 15, oder 16 Gew% betragen.

Die wässrige Suspension wird während des Aufschlusses in Schritt (b) geeigneterweise durch Krafteintrag in Bewegung versetzt, also beispielsweise gerührt oder geschüttelt. Dies erfolgt bevorzugt in kontinuierlicher Weise, damit die Partikel in der Suspension in der Schwebe gehalten werden.

Der saure Aufschluss im Schritt (c) des Verfahrens dient der Konvertierung des unlöslichen Protopektins in lösliches Pektin und gleichzeitiger Aktivierung der Faser durch Vergrößerung der inneren Oberfläche. Bei dem sauren Aufschluss gemäß Schritt (c) handelt es sich nicht um eine funktionelle Pektin-Extraktion. Das löslich gemachte Pektin wird nicht durch eine Fest-Flüssig-Trennung von dem Fasermaterial abgetrennt, sondern bleibt bei den folgenden Prozessschritten (d) und/oder (e) zusammen mit der partiell-aktivierten Faser in der Suspension enthalten. Es findet also im Endergebnis keine Pektinentfernung, sondern eine Pektinkonversion von Protopektin zu wasserlöslichem faserassoziiertem Pektin statt. Im Ergebnis resultiert also eine aktivierbare, entesterte, pektin-konvertierte Faser.

Weiterhin wird das Rohmaterial durch den Aufschluss in Schritt (c) thermisch zerkleinert. Durch die saure Inkubation im wässrigen Milieu unter Einwirkung von Hitze zerfällt es in Fruchtfasern. Damit wird eine thermische Zerkleinerung erreicht, ein mechanischer Zerkleinerungsschritt ist im Rahmen des Herstellungsverfahrens damit nicht notwendig. Dies stellt einen entscheidenden Vorteil gegenüber herkömmlichen Faser-Herstellungsverfahren dar, die im Gegensatz dazu einen Scherungsschritt (wie beispielsweise durch eine (Hoch-)Druckhomogenisierung) benötigen, um eine Faser mit ausreichenden rheologischen Eigenschaften zu erhalten.

Für den Fall, dass das dem sauren Aufschluss gemäß Schritt (c) zugeführte Material bereits dem optionalen sauren Aufschluss gemäß Schritt (b) unterzogen wurde, kann der saure Aufschluss im Schritt (c) eine zusätzliche Pektinextraktion leisten, indem ein weiterer Teil des Protopektins in lösliches Pektin überführt und extrahiert werden kann.

Das Rohmaterial liegt bei dem Aufschluss in Schritt (c) als wässrige Suspension vor. Eine Suspension ist gemäß der Erfindung ein heterogenes Stoffgemisch aus einer Flüssigkeit und darin fein verteilten Festkörpern (Rohmaterial-Partikel). Da die Suspension zur Sedimentation und Phasentrennung tendiert, werden die Partikel geeignetermaßen durch Krafteintrag, also beispielsweise durch Schütteln oder Rühren in der Schwebe gehalten. Es liegt somit keine Dispersion vor, bei der die Partikel durch mechanische Einwirkung (Scherung) so zerkleinert werden, dass sie feindispers vorliegen.

Zur Erzielung eines sauren pH-Wertes in Schritt (c) kann der Fachmann auf alle ihm bekannten Säuren oder sauren Pufferlösungen zurückgreifen. So kann beispielsweise eine organische Säure die als Calcium-Chelator wirkt und damit überschüssige Calcium-Ionen binden kann. Beispiele für eine solche chelatbildende Säure sind Citronensäure, Gluconsäure oder Oxalsäure.

Alternativ oder in Kombination hierzu kann auch eine Mineralsäure eingesetzt werden. Beispielhaft seien erwähnt: Schwefelsäure, Salzsäure, Salpetersäure oder schweflige Säure. Bevorzugt wird Salpetersäure oder Schwefelsäure eingesetzt. Bei dem sauren Aufschluss im Schritt (c) kann zusätzlich noch ein Komplexbildner für zweiwertige Kationen hinzugegeben werden. Beispielhaft sind hier Polyphosphate oder EDTA erwähnt.

Bei dem sauren Aufschluss im Schritt (c) des Verfahrens liegt der pH-Wert der Suspension zwischen pH = 0,5 und pH = 2,5, bevorzugt zwischen pH = 1,0 und pH = 2,3 und besonders bevorzugt zwischen pH = 1,5 und pH = 2,0. Der saure Aufschluss nach Schritt (c) kann beispielsweise bei einem pH-Wert von 0,5, 0,6, 0,7, 0,8, 0,9, 1,0, 1,1, 1,2, 1,3, 1,4, 1,5, 1,6 1,7, 1,8, 1,9, 2,0, 2,1, 2,2, 2,3, 2,3, 2,4, oder 2,5 durchgeführt werden.

Vorteilhafterweise besteht bei dem sauren Aufschluss im Schritt (c) die Flüssigkeit zur Herstellung der wässrigen Suspension zu mehr als 50 Vol%, bevorzugt zu mehr als 60, 70, 80 oder sogar 90 Vol% aus Wasser. In einer bevorzugten Ausführungsform enthält die Flüssigkeit kein organisches Lösungsmittel und insbesondere keinen Alkohol. Damit liegt eine wasserbasierte saure Extraktion vor.

Die Inkubation erfolgt bei dem sauren Aufschluss gemäß Schritt (c) bei einer Temperatur von zwischen 60°C und 95°C, bevorzugt von zwischen 70°C und 90°C und besonders bevorzugt von zwischen 75°C und 85°C. Der saure Aufschluss nach Schritt (c) kann beispielsweise bei einer Temperatur von 70°C, 71°C, 72°C, 73°C, 74°C, 75°C, 76°C, 77°C, 78°C, 79°C, 80°C, 81°C, 82°C, 83°C, 84°C oder 85°C durchgeführt werden.

Die Inkubation erfolgt bei dem sauren Aufschluss gemäß Schritt (c) über eine Zeitdauer von zwischen 60 min und 8 Stunden und bevorzugt von zwischen 2 h und 6 Stunden. Der saure Aufschluss nach Schritt (c) kann beispielsweise über eine Zeitdauer von 1,5 h, 2,0 h, 2,5 h, 3,0 h, 3,5 h, 4,0 h, 4,5 h, 5,0 h, 5,5 h oder 6,0 h durchgeführt werden.

Die wässrige Suspension hat bei dem sauren Aufschluss nach Schritt (c) geeignetermaßen eine Trockenmasse von zwischen 0,5 Gew% und 20 Gew%, bevorzugt von zwischen 3 Gew% und 16 Gew%, und besonders bevorzugt von zwischen 5 Gew% und 14 Gew%. Die Trockenmasse kann bei dem sauren Aufschluss nach Schritt (c) beispielsweise 5, 6, 7, 8, 9, 10, 11, 12, 13, oder 14 Gew% betragen.

Die wässrige Suspension wird während des Aufschlusses in Schritt (c) durch Krafteintrag in Bewegung versetzt, geeignetermaßen durch Rühren oder Schütteln. Dies erfolgt bevorzugt in kontinuierlicher Weise, damit die Partikel in der Suspension in der Schwebe gehalten werden.

Im Schritt (d) des Verfahrens kann optional die Zugabe einer Lauge, eines alkalischen Salzes oder eines Puffersystems zu der wässrigen Suspension aus Schritt (c) durchgeführt werden, um hier einen pH-Wert von zwischen pH 3,0 und pH 9,0 einzustellen. Dies hat den Sinn, den optimalen pH-Wert für die folgende Entesterung einzustellen, die entweder als enzymatische Entesterung oder als saure Entesterung durchgeführt werden kann.

Für diese pH-Werteinstellung, die ausgehend von dem stark aciden pH-Wertes des Schrittes (c) eine pH-Werterhöhung darstellt, kann eine Lauge wie NaOH, KOH oder ein alkalisches Salz wie Natriumcarbonat, Natriumhydrogencarbonat, Kaliumcarbonat, oder Kaliumhydrogencarbonat verwendet werden. Alternativ kann auch ein Puffersystem, also ein Gemisch einer schwachen Säure mit ihrer konjugierten Base verwendet werden, dass einen Pufferbereich von zwischen pH 3.0 und pH 9,0 aufweist.

Gemäß Schritt (e) wird die aktivierbare pektin-konvertierte Fasersuspension aus Schritt (c) oder die pH-Wert-angepasste Fasersuspension aus Schritt (d) entestert, d.h. die veresterten Galacturonsäuregruppen des Pektins hydrolysiert. Dies kann einerseits durch eine enzymatische Behandlung mit Pektinmethylesterase (PME) oder alternativ durch eine saure Entesterung erfolgen.

Für die enzymatische Entesterung gemäß Schritt (e) wird die Fasersuspension mit einer Pektinmethylesterase in Kontakt gebracht und für eine ausreichende Zeitdauer inkubiert.

Durch die Pektinmethylesterase werden im Pektin die Methylester der Galacturonsäuregruppen hydrolysiert unter Bildung von Poly-Galacturonsäure und Methanol. Die dadurch entstehenden niederveresterten Pektine können in Anwesenheit von mehrwertigen Kationen auch ohne Zucker ein Gel bilden und sind zudem in einem breiten pH-Bereich einsetzbar.

Eine Pektinmethylesterase (Abkürzung: PME, EC 3.1.1.11, auch: Pektindemethoxylase, Pektinmethoxylase) ist ein allgemein verbreitetes Enzym in der Zellwand in allen höheren Pflanzen sowie einigen Bakterien und Pilzen, welches die Methylester der Pektine spaltet und dabei Poly-Galacturonsäure bildet und Methanol freisetzt. Die PME wurde in vielen Isoformen isoliert, die gemäß der Erfindung alle für die enzymatische Entesterung eingesetzt werden können. So wurde die PME in vielen Isoformen sowohl aus pflanzenpathogenen Pilzen wie *Aspergillus foetidus* und *Phytophthora infestans* als auch aus höheren Pflanzen, z.B. Tomaten, Kartoffeln und Orangen, isoliert. Die pilzlichen PME entfalten die optimale Aktivität zwischen pH 2,5 und 5,5, während die pflanzlichen PME pH-Optima zwischen pH 5 und 8 aufweisen. Die relative Molekülmasse liegt zwischen 33.000 und 45.000. Das Enzym liegt als Monomer vor und ist glykosyliert. Der $K_M$-Wert liegt zwischen 11 und 40 mM Pektin bei pilzlichen PME und bei 4-22 mM Pektin bei pflanzlichen PME. Die kommerziell erhältlichen Präparationen der PME werden entweder aus den Überständen der pilzlichen Mycelkulturen oder bei Pflanzen aus Früchten (Schalen von Orangen und Zitronen, Tomaten) gewonnen. Die bevorzugt eingesetzten Pektinmethylesterasen haben ein pH-Optimum zwischen 2 und 5 und ein Temperaturoptimum bei 30 bis 50°C, wobei je nach Enzym schon ab 15°C eine nennenswerte Enzymaktivität zu beobachten ist.

Die folgende Tabelle gibt einige Beispiele für kommerziell erhältliche PMEs mit ihren Reaktionsoptima:

| Produktname | Hersteller | Optima |
|---|---|---|
| Rapidase PEP | DSM | pH = 4 - 5; T = 50°C |
| Pectinase 872 L | Biocatalysts | pH = 4 - 5; T = 30 - 50°C |
| Pectinesterase 1508/14 | Erbslöh | pH = 4 - 5; T = 30 - 50°C |

Die Zeitdauer der Inkubation mit der Pektinmethylesterase beträgt zwischen 1 Stunde und 10 Stunden, bevorzugt zwischen 2 Stunden und 5 Stunden.

Aufgrund der vorab durchgeführten Prozessschritte liegt eine Suspension mit geringem Trockensubstanzgehalt (< 20 %TS) vor. Die Enzymbehandlung erfolgt dann zweckmäßigerweise in einem Rührbehälter.

**Saure Entesterung:**

Bei der sauren Entesterung im Schritt (e) des Verfahrens liegt der pH-Wert der Suspension zwischen pH = 1,0 und pH = 2,0. Der saure Entesterung nach Schritt (e) kann beispielsweise bei einem pH-Wert von 1,1, 1,2, 1,3, 1,4, 1,5, 1,6, 1,7, 1,8 oder 1,9 durchgeführt werden.

Die saure Entesterung gemäß Schritt (e) erfolgt bei einer Temperatur von zwischen 30°C und 60°C. Sie kann beispielsweise bei einer Temperatur von 35°C, 40°C, 45°C, 55°C oder 58°C durchgeführt werden.

Die Inkubation erfolgt bei der sauren Entesterung gemäß Schritt (e) über eine Zeitdauer von zwischen 30 min bis 10 Tagen und bevorzugt von zwischen 2 h und 6 Stunden. Der saure Aufschluss nach Schritt (c) kann beispielsweise über eine Zeitdauer von 1 h, 1,5 h, 2,0 h, 2,5 h, 3,0 h, 3,5 h, 4,0 h, 4,5 h, 5,0 h, 5,5 h oder 6,0 h durchgeführt werden.

Im Schritt (f) erfolgt dann ein Waschschritt mit einer Waschflüssigkeit, die ein wassermischbares organisches Lösungsmittel umfasst. Hierbei handelt es sich um ein mindestens zweimaliges Waschen mit der Waschflüssigkeit umfassend ein wassermischbares organisches Lösungsmittel.

Mit einem Lösungsmittel ist hierbei mindestens ein Lösungsmittel gemeint, so dass in der Waschflüssigkeit auch zwei, drei oder mehr wassermischbare organische Lösungsmittel enthalten sein können.

Die Waschflüssigkeit im Schritt (f) besteht bevorzugt zu mehr als 70 Vol.%, besonders bevorzugt zu mehr als 80 Vol.% und insbesondere bevorzugt zu mehr als 85 Vol.% aus dem wassermischbaren organischen Lösungsmittel. Die Waschflüssigkeit kann beispielweise 80%, 81%, 82%, 83%, 84%, 85%, 86%, 87%, 88%, 89%, 90%, 91%, 92%, 93%, 94%, 95%, 96%, 97%, 98%, 99% oder 99,5% an wassermischbarem organischem Lösungsmittel enthalten, wobei die Prozente Volumenprozente darstellen. In einer alternativen Ausführungsform besteht die Waschflüssigkeit aus dem organischen wassermischbaren Lösungsmittel.

Der weitere Bestandteil, der sich mit diesem organischen wassermischbaren Lösungsmittel zu 100% ergänzt, ist zweckmäßigerweise Wasser oder ein wässriger Puffer.

Zur Durchführung des vorliegenden Verfahrens sind vor allem wassermischbare, thermisch stabile, flüchtige, nur Kohlenstoff, Wasserstoff und Sauerstoff enthaltende Lösungsmittel wie Alkohole, Ether, Ester, Ketone und Acetale geeignet. Vorzugsweise werden Ethanol, n-Propanol, Isopropanol, Methylethylketon, 1,2-Butandiol-1-methylether, 1,2-Propandiol-1-n-propylether oder Aceton verwendet.

Ein organisches Lösungsmittel wird vorliegend als "wassermischbar" bezeichnet, wenn sie in einer 1:20 (v/v) Mischung mit Wasser als einphasige Flüssigkeit vorliegt.

Allgemein verwendet man zweckmäßig solche Lösungsmittel, die mindestens zu 10 % wassermischbar sind, einen Siedepunkt unter 100°C aufweisen und/oder weniger als 10 Kohlenstoffatome haben.

Das wassermischbare organische Lösungsmittel als Bestandteil der Waschflüssigkeit ist bevorzugt ein Alkohol, der vorteilhafterweise ausgewählt ist aus der Gruppe bestehend aus Methanol, Ethanol und Isopropanol. In besonders bevorzugter Weise ist es Isopropanol.

Der Waschschritt im Schritt (f) erfolgt bei einer Temperatur von zwischen 40°C und 75°C, bevorzugt von zwischen 50°C und 70°C und besonders bevorzugt von zwischen 60°C und 65°C.

Das Inkontaktbringen mit der das wassermischbare organische Lösungsmittel enthaltenden Waschflüssigkeit im Schritt (f) erfolgt über eine Zeitdauer von zwischen 60 min und 10 h und bevorzugt zwischen 2 h und 8 h.

Jeder Waschschritt mit der ein wassermischbares organisches Lösungsmittel enthaltenden Waschflüssigkeit umfasst ein Inkontaktbringen des Materials mit der Waschflüssigkeit für eine bestimmte Zeitdauer gefolgt von der Abtrennung des Materials von der Waschlösung als Gemisch aus Waschflüssigkeit und vorab vorhandener Flüssigkeit (als Bestandteil der Suspension). Für diese Abtrennung wird bevorzugt ein Dekanter oder eine Presse verwendet.

Bei dem Waschen gemäß Schritt (f) mit einer, ein wassermischbares organisches Lösungsmittel enthaltenden, Waschflüssigkeit beträgt die Trockenmasse in der Waschlösung von zwischen 0,5 Gew% und 15 Gew%, bevorzugt zwischen 1,0 Gew% und 10 Gew%, und besonders bevorzugt zwischen 1,5 Gew% und 5,0 Gew%.

Das Waschen gemäß Schritt (f) mit der ein wassermischbares organisches Lösungsmittel enthaltenden Waschflüssigkeit wird bevorzugt unter mechanischer Bewegung der Waschmixtur durchgeführt. Bevorzugt wird das Waschen in einem Behälter mit Rührwerk durchgeführt.

Bei dem Waschen gemäß Schritt (f) mit der ein wassermischbares organisches Lösungsmittel enthaltenden Waschflüssigkeit wird in vorteilhafter Weise eine Vorrichtung zur Vergleichmäßigung der Suspension verwendet. Diese Vorrichtung ist bevorzugt ein Zahnkranzdispergierer.

Nach einer vorteilhaften Ausführungsform erfolgt das Waschen gemäß Schritt (f) mit der ein wassermischbares organisches Lösungsmittel enthaltenden Waschflüssigkeit im Gegenstromverfahren.

In einer Ausführungsform erfolgt bei dem Waschen gemäß Schritt (f) mit der ein wassermischbares organisches Lösungsmittel enthaltenden Waschflüssigkeit eine partielle Neutralisation durch Zugabe von Na- oder K-Salzen, NaOH oder KOH.

Bei dem Waschen gemäß Schritt (f) mit der ein wassermischbares organisches Lösungsmittel enthaltenden Waschflüssigkeit kann zusätzlich auch eine Entfärbung des Materials durchgeführt werden. Diese Entfärbung kann durch Zugabe eines oder mehrerer Oxidationsmittel erfolgen. Beispielhaft seien hier die Oxidationsmittel Chlordioxid und Wasserstoffperoxid erwähnt, die alleine oder in Kombination angewendet werden können.

Nach einer vorteilhaften Ausführungsform nimmt bei dem mindestens zweimaligen Waschen gemäß Schritt (f) mit einer ein wassermischbares organisches Lösungsmittel enthaltenden Waschflüssigkeit die finale Konzentration des organischen Lösungsmittels in der Lösung mit jedem Waschschritt zu. Durch diesen inkrementell steigenden Anteil an wassermischbarem organischem Lösungsmittel wird der Wasseranteil in dem Fasermaterial kontrolliert verringert, so dass die rheologischen Eigenschaften der Fasern bei den nachfolgenden Schritten zur Lösungsmittelentziehung und Trocknung erhalten bleiben und kein Kollabieren der partiell-aktivierten Faserstruktur erfolgt.

Vorzugsweise beträgt die finale Konzentration des wassermischbaren organischen Lösungsmittels in der gesamten Waschlösung (also der Fasersuspension zusammen mit der zugegebenen Waschflüssigkeit) im ersten Waschschritt zwischen 60 bis 70 Vol.-%, im zweiten Waschschritt zwischen 70 und 85 Vol.-% und in einem optionalen dritten Waschschritt zwischen 80 und 90 Vol.-%.

Gemäß einer Ausführungsform kann bei dem mindestens zweimaligen Waschen im Schritt (f) mit der das organische wassermischbare Lösungsmittel enthaltenden Waschflüssigkeit, diese Waschflüssigkeit beim ersten Waschschritt einen sauren pH-Wert aufweist, der bevorzugt zwischen pH 0,5 und pH 3,0 liegt. Durch diesen aciden pH-Wert werden auch Calcium-Ionen aus der Faser herausgewaschen.

In einem solchen Fall ist es bevorzugt, dass ein zweiter Waschschritt einen schwach sauren bis schwach alkalischen pH-Wert aufweist, so dass die erhaltene Faser bevorzugt zwischen pH 4,0 und pH 6,0 liegt. Durch den weniger sauren pH-Wert wird erreicht, dass die Löslichkeit des Pektins verbessert wird und in der Endanwendung der für ein Lebensmittel typische pH-Wert nicht zu sehr in Richtung sauer verschoben wird.

Gemäß dem optionalen Schritt (g) kann das Lösungsmittel zusätzlich durch Inkontaktbringen des Materials mit Wasserdampf verringert werden. Dies wird vorzugsweise mit einem Stripper durchgeführt, bei dem das Material im Gegenstrom mit Wasserdampf als Strippgas in Kontakt gebracht wird.

Nach einer vorteilhaften Ausführungsform wird das Material nach dem Schritt (f) oder (g) vor dem Trocknen mit Wasser befeuchtet. Dies geschieht bevorzugt durch Einbringen des Materials in eine Befeuchtungsschnecke und Besprühen mit Wasser.

Im Schritt (h) erfolgt das Trocknen des gewaschenen Materials aus Schritt (f) oder des gestrippten Materials aus Schritt (g), wobei das Trocknen eine Trocknung unter Normaldruck oder mittels Vakuumtrocknung umfasst.

Beispiele für geeignete Trocknungsverfahren mittels Normaldruck sind Wirbelschichttrocknung, Fließbetttrocknung, Bandtrockner, Trommeltrockner oder Schaufeltrockner. Besonders bevorzugt ist hier die Fließbetttrocknung. Diese hat den Vorteil, dass das Produkt aufgelockert getrocknet wird, was den anschließenden Vermahlschritt vereinfacht. Zudem vermeidet die Trocknungsart durch den gut dosierbaren Wärmeeintrag eine Schädigung des Produktes durch lokale Überhitzung.

Die Trocknung unter Normaldruck im Schritt (h) erfolgt zweckmäßigerweise bei einer Temperatur von zwischen 50°C und 130°C, bevorzugt von zwischen 60°C und 120°C und besonders bevorzugt von zwischen 70°C und 110°C. Im Anschluss an die Trocknung wird das Produkt zweckmäßigerweise auf Raumtemperatur abgekühlt.

In einer alternativen Ausführungsform umfasst das Trocknen gemäß Schritt (h) eine Vakuumtrocknung und besteht bevorzugt aus einer Vakuumtrocknung. Bei der Vakuumtrocknung wird das gewaschene Material als Trockengut einem Unterdruck ausgesetzt, was den Siedepunkt reduziert und somit auch bei niedrigen Temperaturen zu einer Verdampfung des Wassers führt. Die dem Trockengut kontinuierlich entzogene Verdampfungswärme wird geeigneterweise bis zur Temperaturkonstanz von außen nachgeführt. Die Vakuumtrocknung hat den Effekt, dass sie den Gleichgewichtsdampfdruck erniedrigt, was den Kapillartransport begünstigt. Dies hat sich insbesondere für das vorliegende Apfelfasermaterial als vorteilhaft herausgestellt, da hierdurch die aktivierten geöffneten Faserstrukturen und damit die hieraus resultierenden rheologischen Eigenschaften erhalten bleiben. Vorzugsweise erfolgt die Vakuumtrocknung bei einem absoluten Unterdruck von weniger als 400 mbar, bevorzugt von weniger als 300 mbar, weiterhin bevorzugt von weniger als 250 mbar und insbesondere bevorzugt von weniger als 200 mbar.

Die Trocknung unter Vakuum im Schritt (h) erfolgt zweckmäßigerweise bei einer MantelTemperatur von zwischen 40°C und 100°C, bevorzugt von zwischen 50°C und 90°C und besonders bevorzugt von zwischen 60°C und 80°C. Im Anschluss an die Trocknung wird das Produkt zweckmäßigerweise auf Raumtemperatur abgekühlt.

Gemäß einer vorteilhaften Ausführungsform umfasst das Verfahren nach dem Trocknen in Schritt (h) zusätzlich einen Zerkleinerungs-, Vermahlungs- oder Siebschritt. Dieser ist vorteilhafterweise so ausgestaltet, dass als Ergebnis 90 Gew% der Partikel eine Korngröße von weniger 450 $\mu$m, bevorzugt eine Korngröße von weniger als 350 $\mu$m und insbesondere eine Korngröße von weniger als 100 $\mu$m aufweisen. Bei dieser Korngröße ist die Faser gut dispergierbar und zeigt ein optimales Quellvermögen. Bei einer Korngröße von kleiner als 100 $\mu$m ist sie zudem besonders für die Injektion geeignet.

Die für die erfindungsgemäße Verwendung eingesetzte aktivierbare, entesterte, pektin-konvertierte Fruchtfaser und ein Verfahren zu ihrer Herstellung wird in der Anmeldung DE 10 2020 120 606.2 offenbart.

In einem zweiten Aspekt betrifft die Erfindung eine Zusammensetzung zur Herstellung einer Kochpökelware, wobei die Zusammensetzung die aktivierbare, entesterte, pektin-konvertierte Fruchtfaser enthält. Vorteilhafterweise enthält die Zusammensetzung hierbei die aktivierbare, entesterte, pektin-konvertierte Fruchtfaser in eine Menge zwischen 1 und 30 Gew.-%, bevorzugt zwischen 10 und 25 Gew,-% und besonders bevorzugt zwischen 15 und 20 Gew.-%. Diese Fruchtfaser ist eine aktivierbare, entesterte, pektin-konvertierte Citrusfaser oder eine aktivierbare, entesterte, pektin-konvertierte Apfelfaser gemäß der vorliegenden Erfindung.

In einer bevorzugten Ausführungsform handelt es sich bei der erfindungsgemäßen Zusammensetzung um eine phosphatfreie Zusammensetzung. Dies bedeutet, dass kein Phosphatsalz als solches zugegeben wird, sondern maximal als Verunreinigung oder als üblicher Bestandteile einer andersartigen Komponente (wie einem Gewürz oder einem Hefeextrakt) enthalten ist. Als Phosphatsalz wird hierbei nicht nur Ortho-Phosphate, sondern auch Diphosphate und Polyphosphate verstanden.

Es wird vermutet, dass aufgrund der besonderen Eigenschaften der vorliegenden Fruchtfaser auf Phosphat verzichtet werden kann. Die Faser-haltige Zusammensetzung wirkt bei der vorliegenden Verwendung nicht nur als Mittel zur Verbesserung der Wasserbindung, sondern auch als Verdickungsmittel und als Texturgeber. Durch die Kombination dieser drei Eigenschaften führt die erfindungsgemäße Zusammensetzung zu besonders vorteilhaften Kochpökelwaren und es kann auf Phosphat verzichtet werden.

Die erfindungsgemäß verwendete Zusammensetzung enthält übliche Zusätze, wie 0,5 bis 2 Gew.-% Pökelsalz und 0,1 bis 5 Gew.-% übliche Zutaten, wie Gewürze, Zucker, Farbstoff, Antioxidantien, Vitamine, Stabilisatoren und Trennmittel.

In einer Ausgestaltung kann die Zusammensetzung Protein enthalten. Das Protein kann hierbei in Form von Hydrolysat, Konzentrat oder Isolat verwendet werden.

In vorteilhafter Weise enthält die Zusammensetzung hierbei 0,1 bis 5 Gew.-%, bevorzugt 0,2 bis 3,0 Gew.-%, bevorzugter 0,4 bis 1,5 Gew.-% an Protein.

Als Protein kann pflanzliches oder tierisches Protein eingesetzt werden.

In einer Ausgestaltung enthält die Zusammensetzung Pflanzenprotein, um die Gelfestigkeit der Kochpökelware weiter zu steigern. Besonders vorteilhaft ist die Gabe von bis zu 3 Gew.-% an Leguminosenprotein (z.B. aus Erbse, Soja, Lupine, Ackerbohne). Es ist auch der Einsatz anderer Pflanzenproteine möglich. Der Zusatz der pflanzlichen Proteine erfolgt besonders vorteilhaft in Form einer tiefgefrorenen Proteinlösung. Somit liegt bereits gut gelöstes Protein für die Verarbeitung vor. Gleichzeitig wird in Form der gefrorenen Proteinlösung zusätzliche Kälte in das System eingetragen.

In einer bevorzugten Ausgestaltung ist das Protein ein tierisches Protein, bevorzugt ein Schweine-, Rinder und/oder Geflügelprotein, bevorzugter ein hydrolysiertes Schweine-, Rinder und/oder Geflügelprotein.

Die Hydrolyse des tierischen Proteins kann mittels enzymatischer und/oder chemischer Hydrolyse, wie z.B. in Gegenwart von Säure, durchgeführt werden. Der Hydrolysegrad kann mit jedem im Stand der Technik bekannten Verfahren gemessen werden, wie z.B. durch Messen freier Aminogruppen mittels des OPA-(o-Phythaldialdehyd)-Verfahren (Church et al., Anal. Biochem. 146:343, 1985). Durch Hydrolyse von tierischen Proteinen können deren Eigenschaften, wie z.B. das Wasserbindevermögen und organoleptische Eigenschaften, modifiziert bzw. verbessert werden.

In bevorzugter Weise entstammt das Protein derselben Spezies, wie die Fleischsorte, mit der die Kochpökelware hergestellt wird, also Schweine-Protein für Schweinefleisch, Puten-Protein für Putenfleisch usw..

In einer Ausführungsform handelt es sich bei dem Protein um isoliertes Kollagen, das als Bindegewebsprotein unter Wasser- und Fettanbindung die Gelbildung unterstützt.

In einer ebenso bevorzugten Ausgestaltung ist die Zusammensetzung frei an Proteinen, da die erfindungsgemäße Fruchtfaser auch ohne Proteinzusatz eine ausreichende Gelfestigkeit und Texturierung erzielen kann.

Es ist zweckmäßig, wenn die erfindungsgemäße Zusammensetzung ein Trennmittel enthält, das bevorzugt ein Carbonatsalz ist.

Vorteilhafterweise ist bei der Zusammensetzung das Carbonatsalz ausgewählt aus der Gruppe bestehend aus Natriumcarbonat, Natriumhydrogencarbonat, Kaliumcarbonat, Kaliumhydrogencarbonat, wobei das Natriumcarbonat bevorzugt ist.

In einer bevorzugten Ausführungsform enthält die Zusammensetzung Citrat. Unter Citrate werden die Ester, Salze und das Anion der Citronensäure verstanden. Beispiele für Citrate sind Natriumcitrat, Kaliumcitrat, Magnesiumcitrat. Bevorzugt liegt das Citrat in Form von Natriumcitrat vor. In einer bevorzugten Ausführungsform enthält die Zusammensetzung von 10 bis 35 Gew.-% Citrat, bevorzugter von 15 bis 30 Gew.-%, am bevorzugtesten von 20 bis 25 Gew.-%.

In einer bevorzugten Ausführungsform enthält die Zusammensetzung Stärke, bevorzugter Kartoffelstärke.

Unter Stärke ist ein Polysaccharid zu verstehen, welches aus $\alpha$-D-Glucose-Einheiten aufgebaut ist, diese können $\alpha$-1,4- und $\alpha$-1,6-glykosidisch miteinander verknüpft sein. Bevorzugt enthält die Zusammensetzung einen Stärkeanteil von 5 bis 20 Gew.-%, bevorzugter von 8 bis 12 Gew.-%.

In einer bevorzugten Ausführungsform enthält die Zusammensetzung Maltodextrin.

Maltodextrin ist ein wasserlösliches Kohlenhydratgemisch, das durch Hydrolyse von Stärke hergestellt wird. Die Hydrolyse kann durch Säure oder enzymatisch durchgeführt werden. Der Hydrolysegrad wird durch das Dextrose-Äquivalent (DE) angegeben. Bevorzugt ist der DE-Wert des Maltodextrins in der Zusammensetzung zwischen 18 und 20. Bevorzugt ist der Anteil an Maltodextrin in der Zusammensetzung von 10 bis 50 Gew.-%, bevorzugter von 25 bis 45 Gew.-%, am bevorzugtesten von 35 bis 43 Gew.-%.

In einer Ausführungsform enthält die Zusammensetzung klare Brühe.

Unter klarer Brühe ist eine wässrige Lebensmittelzusammensetzung zu verstehen, wobei die gelösten Bestandteile überwiegend Gewürzzutaten sind. Bevorzugt ist der Anteil an klarer Brühe in der Zusammensetzung von 0,1 bis 2 Gew.-%, bevorzugter von 0,5 bis 1 Gew.-%, am bevorzugtesten von 0,7 bis 0,9 Gew.-%.

In einer bevorzugten Ausführungsform enthält die Zusammensetzung einen Entschäumer.

Entschäumer sind chemische Formulierungen mit ausgeprägter Grenzflächenaktivität, die geeignet sind, unerwünschte Schaumbildung in Lebensmitteln bzw. bei dessen Prozessierung zu reduzieren oder zu verhindern. Beispiele für Entschäumer sind Mono- und Diglyceride von Speisefettsäuren. Bevorzugt ist der Anteil an Entschäumer in der Zusammensetzung von 0,1 bis 1 Gew.-%, bevorzugter von 0,2 bis 0,4 Gew.-%.

In einer bevorzugten Ausführungsform enthält die Zusammensetzung Kieselsäure (E 551) als Rieselhilfsmittel. Bevorzugt ist der Anteil an Kieselsäure in der Zusammensetzung von 0,05 bis 0,2 Gew.-%, bevorzugter von 0,08 bis 0,12 Gew.-%.

In einer bevorzugten Ausführungsform enthält die Zusammensetzung Aromastoffe.

Unter Aromastoffe werden chemische Stoffe oder Stoffgemische verstanden, welche einem Lebensmittel einen spezifischen Geruch und/oder Geschmack verleihen können. Bevorzugt ist der Aromastoff ein Puten- und/oder Schweinearoma. Bevorzugt ist der Anteil an Aromastoffen in der Zusammensetzung von 0,1 bis 5 Gew.-%, bevorzugter von 0,5 bis 2,5 Gew.-%, am bevorzugtesten von 1 bis 1,5 Gew.-%. In bevorzugter Weise wird als Aromastoff die Aminosäure Arginin eingesetzt.

In einer bevorzugten Ausführungsform ist die erfindungsgemäße Zusammensetzung Halal und/oder Kosher.

Halal bedeutet, dass die Zusammensetzung mit den Speisevorschriften der islamischen Religion übereinstimmt, Kosher bedeutet, dass die Zusammensetzung mit den Speisevorschriften des jüdischen Glaubens übereinstimmt.

In einer weiteren Ausführungsform haben die Proteine und Pflanzenfasern als wasserunlösliche Bestandteile der erfindungsgemäßen Zusammensetzung eine Korngröße von kleiner als 100 $\mu$m (d.h. 90 Gew% der Partikel sind kleiner als 90 $\mu$m, ermittelt nach der in den Ausführungsbeispielen beschriebenen Sieb-Testmethode). Gerade für Verwendung der Faser in einer Injektionslösung ist eine besonders geringe Korngröße, wie beispielsweise kleiner als 100 $\mu$m, vorteilhaft, weil dies ein Verstopfen der Injektionsnadeln verhindert.

Die Zusammensetzung kann zudem einen Zucker oder einen Zuckerersatzstoff enthalten. Hierbei kann der Fachmann auf alle in der Lebensmittelindustrie verwendbaren Zucker bzw. Zuckersatzstoff zurückgreifen. In einer Ausführungsvariante der Zusammensetzung ist der Zucker bzw. Zuckersatzstoff ausgewählt aus der Gruppe bestehend aus Rohrzucker, Rübenzucker, Ahornzucker, Palmzucker, Agavendicksaft, Invertzucker, Fructose, Saccharose, Dextrose, Maltose, Mannose, Melezitose, Lactose, Rhamnose, Xylit, Sorbit, Mannit, Maltit, Isomalt, Lactit, Erythrit, Acesulfam, Advantam, Aspartam, Cyclamat, Neohesperidin, Neotam, Saccharin, Cucralose, Steviosid, Thaumatin, Alitam, Brazzein, Dulcin, Hemandulcin, Lugdunam, Monellin, Pentadin und 5-Nitro-2-propoxyanilin, und Mischungen davon. Dabei ist der Zucker vorteilhaft Saccharose und/oder Dextrose. Insbesondere im Falle der Herstellung einer biozertifizierten Zusammensetzung ist der Zucker vorteilhaft Saccharose, welche insbesondere als Feststoff oder sirupartige Lösung zur Verfügung gestellt wird, z. B. auch in Form von Kokosblütenzucker. Alternativ oder ergänzend kann der Zucker ausgewählt sein aus der Gruppe bestehend aus Manuka-Honig, Agavensirup, Reissirup, Kokosblütensirup, Tapiokasirup, Yaconsirup, Zuckerrübensirup, Dattelsirup, und Mischungen davon.

In bevorzugter Weise wird als Zucker Dextrose eingesetzt.

Ein einer weiteren Ausführungsform enthält die Zusammensetzung ein Antioxidans. Dieses kann in Verbindung mit dem Nitritpökelsalz das Nitrit zu Stickstoffmonoxid reduzieren und gleichzeitig eventuell vorhandene Nitrosamine abbauen. Als Antioxidans wird bevorzugt Natriumascorbat eingesetzt.

Die erfindungsgemäße Zusammensetzung ist vorteilhafterweise in Pulverform. In dieser Form ist sie lagerstabil und läßt sich problemlos transportieren und portionieren.

In einem weiteren Aspekt betrifft die Erfindung eine Lake zur Herstellung einer Kochpökelware, wobei die Lake ein wässriges Lösungsmittel und die erfindungsgemäße Zusammensetzung aufweist.

Bei der Herstellung von Kochpökelwaren ist das Behandeln der Fleischstücke mit Lake der wesentliche Prozessschritt. Das Einbringen der Lake erfolgt meistens durch Pökelinjektoren. Dabei wird die erforderliche Lake sehr genau in die Teilstücke eingespritzt. Einige andere Produkte wiederum werden geschüttet, das bedeutet, die erforderliche Menge Lake wird dabei auf die Fleischstücke gegeben und benötigt danach Zeit, um absorbiert zu werden. Nach der Injektion oder Zugabe der Lake werden die Fleischstücke entweder getumblet oder massiert.

Bei der herkömmlich bekannten Tumblertechnologie dreht sich eine große Trommel horizontal auf einer Führung. Mittels an der Behälterinnenwand liegenden, flachen Schikanen, wird eine sanfte Bewegung durch Fallen der Fleischstücke erzielt. Eine Bewegung, die häufig auch oft als "Poltern" bezeichnet wird.

Völlig anders wird bei dem Verfahren des Massierens vorgegangen. Der Behälter ist feststehend konstruiert und besitzt eine innere, drehende Welle. Großflächige, spiralförmig angeordnete Paddel sind auf dieser Welle angesetzt und bewegen das Produkt um diese Achse. Da sich diese Paddel innerhalb der Fleischmasse bewegen und nicht wie beim Tumbler nur am äußeren Rand Kontakt zwischen Maschine und Produkt entsteht, wird jeder einzelne Muskel aktiv erreicht. Das Massieren kann auch unter Vakuum in einer Vakuum-Massieranlage durchgeführt werden.

Bei Verwendung der aktivierbaren, entesterten, pektin-konvertierten Faser in der Lake ergibt sich sensorisch eine höhere Lakeviskosität. Die Faser bleibt fein verteilt und setzt sich nicht ab. Mit üblichen Lakemischern lässt sich somit eine Dispersion aus aktivierbaren, entesterten, pektin-konvertierten Faser leichter herstellen als eine Dispersion aus niederverestertem Pektin und einer Pflanzenfaser. Daher ist die vorliegende Zusammensetzung unter Verwendung einer aktivierbaren, entesterten, pektin-konvertierten Faser und damit auch eine die Zusammensetzung aufweisende Lake nicht gleichzusetzen mit einer Zusammensetzung unter Verwendung von niederverestertem Pektin und einer Pflanzenfaser mit einem Pektingehalt von weniger als 10%.

Unter einem wässrigen Lösungsmittel ist insbesondere Wasser zu verstehen, aber auch jedes andere Lösungsmittel, welches einen Teil Wasser enthält, ist davon erfasst.

Das wässrige Lösungsmittel der Lake ist bevorzugt Wasser, das zweckmäßigerweise in Form von klarem Leitungswasser entsprechend der Trinkwasserverordnung oder in Form Mineralwasser eingesetzt wird.

In einer bevorzugten Ausführungsform handelt es sich bei der erfindungsgemäßen Lake um eine phosphatfreie Lake.

In eine bevorzugten Ausführungsform wird die Lake als Injektionsmittel eingesetzt.

In einem zusätzlichen Aspekt betrifft die Erfindung ein Verfahren zur Veredelung des Rohmaterials Fleisch, wobei das Verfahren die folgenden Schritte aufweist:

a.) Vermischen der erfindungsgemäßen Zusammensetzung mit einem wässrigen Lösungsmittel und Nitritpökelsalz, und optional mit Citrat, um ein Injektionsmittel zu erhalten.

b.) Injektion der in Schritt a.) erhaltenen Lake in das Rohmaterial Fleisch; und/oder Einlegen des Rohmaterials Fleisch in die gemäß Schritt a) erhaltene Lake;

c.) Mechanische Behandlung des gemäß Schritt b) behandelten Fleisches mittels Tumblerbehandlung oder Massierbehandlung.

Vorteilhafterweise wird das Verfahren ohne Verwendung eines Phosphatsalzes durchgeführt, so dass im Ergebnis Kochpökelware resultiert, die frei von künstlichem Phosphat ist.

Bei dem erfindungsgemäßen Verfahren ist es bevorzugt, wenn die in Schritt a.) erhaltene Lake, die bevorzugt ein Injektionsmittel ist, das die Zusammensetzung in einer Konzentration von 5 bis 20 Gew.-% und bevorzugt von 15 bis 20 Gew.-% aufweist. Laken mit einem derartigen Gehalt sind noch pumpbar und injizierbar und besitzen eine gute Fleischfunktionalisierung.

Bei dem erfindungsgemäßen Verfahren kann durch das Einlegen oder die Injektion in Schritt b.) die Gesamtmasse des Rohmaterials Fleisch um 5 bis 100 Gew.-%, bevorzugt um 10 bis 40 Gew.-%, um bevorzugter um 15 bis 25 Gew.% zunehmen.

In einem weiteren Aspekt betrifft die Erfindung eine Kochpökelware, die eine aktivierbare, aktivierbare, entesterte, pektin-konvertierte Fruchtfaser enthält. Erfindungsgemäß handelt es sich bei der Fruchtfaser um eine aktivierbare, entesterte, pektin-konvertierte Citrusfaser oder eine aktivierbare, entesterte, pektin-konvertierte Apfelfaser gemäß der vorliegenden Erfindung.

In einer bevorzugten Ausführungsform weist hierbei die Kochpökelware als Rohprodukt die aktivierbare, entesterte, pektin-konvertierte Fruchtfaser in einem Anteil von zwischen 0,1 Gew% und 3 Gew%, bevorzugt zwischen 0,1 und 1 Gew%, besonders bevorzugt von 0,15 bis 0,8 Gew% und insbesondere bevorzugt zwischen 0,15 und 0,5 Gew% auf. Beispielsweise kann der Anteil der aktivierbaren, entesterten, pektin-konvertierten Fruchtfaser 0,16, 0,17, 0,18, 0,19, 0,20, 0,21, 0,22, 0,23 0,24, 0,25, 0,26, 0,27, 0,28, 0,29, 0,30 oder 0,31 Gew.-% betragen, wobei dies Gewichtsprozentangaben sind. Hierbei ist die aktivierbare, entesterte, pektin-konvertierte Fruchtfaser eine entesterte Citrusfaser oder eine entesterte Apfelfaser.

Die obigen Gewichtsanteile sind auf das Rohprodukt bezogen. Eine auf das Endprodukt bezogene Berechnung müsste die Kochverluste berücksichtigt, was wesentlich von der Form und vor allem von der Temperaturführung abhängt, daher ist es besser die Anteile auf das Rohprodukt (= Fleisch + aufgenommene Lake) zu beziehen.

In einem weiteren Aspekt betrifft die Erfindung eine Kochpökelware hergestellt unter Verwendung der erfindungsgemäßen Zusammensetzung.

Die erfindungsgemäß hergestellte Kochpökelware ist hierbei ausgewählt aus der Gruppe bestehend aus Kochschinken, Vorderkochschinken, Kasseler, Kaiserfleisch, Back- und Geflügelschinken, Pökelzunge, Bratenaufschnitt, gekochter Speck/Bacon, gepökelte Rinderbrust, gekochter Rinderschinken oder gepökeltes Eisbein.

**Aspekte der Erfindung**

1. Verwendung einer aktivierbaren, entesterten, pektin-konvertierten Fruchtfaser zur Herstellung einer Kochpökelware, **dadurch gekennzeichnet, dass** die Fruchtfaser eine aktivierbare, entesterte, pektin-konvertierte Citrusfaser ist aufweisend eine Fließgrenze I (Rotation) in der Faserdispersion von mehr als 1,0 Pa und einem wasserlöslichen Pektingehalt von 10 bis 35 Gew%, wobei das wasserlösliche Pektin ein niederverestertes Pektin mit einem Veresterungsgrad von weniger 50% ist, oder die Fruchtfaser eine aktivierbare, entesterte, pektin-konvertierte Apfelfaser ist aufweisend eine Fließgrenze I (Rotation) in der Faserdispersion von mehr als 1,0 Pa und einem wasserlöslichen Pektingehalt von 10 bis 22 Gew%, wobei das wasserlösliche Pektin ein niederverestertes Pektin mit einem Veresterungsgrad von weniger 50% ist.

2. Verwendung gemäß Aspekt 1, **dadurch gekennzeichnet, dass** die aktivierbare, entesterte, pektin-konvertierte Fruchtfaser eine aktivierbare, entesterte, pektin-konvertierte Citrusfaser ist, die eine oder mehrere der folgenden Eigenschaften aufweist:

    a. eine Fließgrenze II (Rotation) in der Fasersuspension von größer 0,1 Pa, vorteilhafterweise von größer 0,6 Pa und besonders vorteilhafterweise von größer 1,0 Pa;
    b. Eine Fließgrenze II (Cross Over) in der Fasersuspension von größer 0,1 Pa, vorteilhafterweise von größer 0,4 Pa und besonders vorteilhafterweise von größer 0,6 Pa;
    c. Eine Fließgrenze I (Rotation) in der Faserdispersion von größer 3,5 Pa und besonders vorteilhafterweise von größer 5,5 Pa;
    d. Eine Fließgrenze I (Cross Over) in der Faserdispersion von größer 1,0 Pa, vorteilhafterweise von größer 4,0 Pa und besonders vorteilhafterweise von größer 6,0 Pa;
    e. Eine dynamische Weissenbergzahl in der Fasersuspension von größer 5,5, vorteilhafterweise von größer 6,5 und besonders vorteilhaft von größer 8,0;
    f. Eine dynamische Weissenbergzahl in der Faserdispersion von größer 6,0, vorteilhafterweise von größer 7,0 und besonders vorteilhaft von größer 8,5;
    g. Eine Festigkeit in einer 4 Gew%igen wässrigen Suspension von größer 100 g hat, bevorzugt von größer 125 g und besonders bevorzugt von größer 150 g;
    h. eine Viskosität von größer 300 mPas, bevorzugt von größer 400 mPas, und besonders bevorzugt von größer 500 mPas aufweist, wobei die aktivierbare, entesterte, pektin-konvertierte Citrusfaser in Wasser als 2,5 Gew%ige Lösung dispergiert wird und die Viskosität mit einer Scherrate von 50 $s^{-1}$ bei 20°C gemessen wird;
    i. ein Wasserbindevermögen von mehr als 22 g/g, bevorzugt von mehr als 24 g/g, besonders bevorzugt von mehr als 26 g/g;
    j. eine Feuchtigkeit von weniger als 15 Gew%, bevorzugt von weniger als 10 Gew% und besonders bevorzugt von weniger als 8%;
    k. in 1,0 %iger wässriger Suspension einen pH-Wert von 3,0 bis 7,0 und bevorzugt von 4,0 bis 6,0;
    l. eine Korngröße, bei der mindestens 90 Gew% der Partikel kleiner als 450 μm sind, bevorzugt mindestens 90 Gew% der Partikel kleiner als 350 μm sind und besonders bevorzugt mindestens 90 Gew% der Partikel kleiner als 100 μm sind;
    m. einen Helligkeitswert L*> 84, bevorzugt von L* > 86 und besonders bevorzugt von L* > 88;
    n. einen Ballaststoffgehalt der aktivierbaren, entesterten, pektin-konvertierten Citrusfasern von 80 bis 95 Gew%;
    o. die aktivierbare, entesterte, pektin-konvertierte Citrusfaser einen wasserlöslichen Pektingehalt von 15 bis 30 Gew% aufweist.

3. Verwendung gemäß Aspekt 1, **dadurch gekennzeichnet, dass** die aktivierbare, entesterte, pektin-konvertierte Fruchtfaser eine aktivierbare, entesterte, pektin-konvertierte Apfelfaser ist, die eine oder mehrere der folgenden Eigenschaften aufweist:

    a. eine Fließgrenze II (Rotation) in der Fasersuspension von größer 0,1 Pa, vorteilhafterweise von größer 0,6 Pa und besonders vorteilhafterweise von größer 1,0 Pa;
    b. Eine Fließgrenze II (Cross Over) in der Fasersuspension von größer 0,1 Pa, vorteilhafterweise von größer 0,4 Pa und besonders vorteilhafterweise von größer 0,6 Pa;
    c. Eine Fließgrenze I (Rotation) in der Faserdispersion von größer 3,5 Pa und besonders vorteilhafterweise von größer 5,5 Pa;
    d. Eine Fließgrenze I (Cross Over) in der Faserdispersion von größer 1,0 Pa, vorteilhafterweise von größer 4,0 Pa und besonders vorteilhafterweise von größer 6,0 Pa;
    e. Eine dynamische Weissenbergzahl in der Fasersuspension von größer 5,5, vorteilhafterweise von größer 6,5 und besonders vorteilhaft von größer 8,0;
    f. Eine dynamische Weissenbergzahl in der Faserdispersion von größer 6,0, vorteilhafterweise von größer 7,0 und besonders vorteilhaft von größer 8,5;

g. Eine Festigkeit in einer 4 Gew%igen wässrigen Suspension von größer 100 g hat, bevorzugt von größer 125 g und besonders bevorzugt von größer 150 g;

h. eine Viskosität von größer 300 mPas, bevorzugt von größer 400 mPas, und besonders bevorzugt von größer 500 mPas aufweist, wobei die aktivierbare, entesterte, pektin-konvertierte Apfelfaser in Wasser als 2,5 Gew%ige Lösung dispergiert wird und die Viskosität mit einer Scherrate von 50 $s^{-1}$ bei 20°C gemessen wird;

i. ein Wasserbindevermögen von mehr als 22 g/g, bevorzugt von mehr als 24 g/g, besonders bevorzugt von mehr als 26 g/g;

j. eine Feuchtigkeit von weniger als 15 Gew%, bevorzugt von weniger als 10 Gew% und besonders bevorzugt von weniger als 8 Gew% aufweist;

k. in 1,0 %iger wässriger Suspension einen pH-Wert von 3,0 bis 7,0 und bevorzugt von 4,0 bis 6,0 aufweist;

l. eine Korngröße, bei der mindestens 90 Gew% der Partikel kleiner als 450 $\mu$m sind, bevorzugt mindestens 90 Gew% der Partikel kleiner als 350 $\mu$m sind und besonders bevorzugt mindestens 90 Gew% der Partikel kleiner als 100 $\mu$m sind;

m. einen Helligkeitswert L* > 60, bevorzugt von L* > 61 und besonders bevorzugt von L* > 62;

n. einen Ballaststoffgehalt der aktivierbaren, entesterten, pektin-konvertierten Apfelfaser von 80 bis 95 Gew%;

o. die aktivierbare, entesterte, pektin-konvertierte Apfelfaser einen wasserlöslichen Pektingehalt von 10 bis 15 Gew% aufweist.

4. Zusammensetzung zur Herstellung einer Kochpökelware aufweisend zwischen 1 und 30,0 Gew.-%, bevorzugt zwischen 10 und 25 Gew.-% und besonders bevorzugt zwischen 16 und 20 Gew.% der aktivierbaren, entesterten, pektin-konvertierten Fruchtfaser gemäß einem der Aspekte 1 bis 3.

5. Zusammensetzung gemäß Aspekt 4, **dadurch gekennzeichnet, dass** die Zusammensetzung zusätzlich Protein enthält.

6. Zusammensetzung gemäß Aspekt 5, **dadurch gekennzeichnet, dass** die Zusammensetzung 0,1 bis 5 Gew.-%, bevorzugt 0,2 bis 3,0 Gew.-%, bevorzugter 0,4 bis 1,5 Gew.-% an Protein enthält.

7. Zusammensetzung gemäß Aspekt 5 oder 6, **dadurch gekennzeichnet, dass** das Protein ein tierisches Protein ist, bevorzugt ein Schweine- und/oder Geflügelprotein, bevorzugter ein hydrolysiertes Schweine- und/oder Geflügelprotein ist.

8. Zusammensetzung gemäß einem der Aspekte 4 bis 7, **dadurch gekennzeichnet, dass** die Zusammensetzung ein Trennmittel enthält, das bevorzugt ein Carbonatsalz ist.

9. Zusammensetzung gemäß Aspekt 8, **dadurch gekennzeichnet, dass** das Carbonatsalz ausgewählt ist aus der Gruppe bestehend aus Natriumcarbonat, Natriumhydrogencarbonat, Kaliumcarbonat, Kaliumhydrogencarbonat, wobei das Natriumcarbonat bevorzugt ist.

10. Zusammensetzung gemäß einem der Aspekte 4 bis 9, **dadurch gekennzeichnet, dass** die Zusammensetzung in Pulverform ist.

11. Lake zur Herstellung einer Kochpökelware aufweisend ein wässriges Lösungsmittel und eine Zusammensetzung gemäß einem der Aspekte 4 bis 10.

12. Verfahren zur Veredelung des Rohmaterials Fleisch, aufweisend die folgenden Schritte:

a.) Vermischen der Zusammensetzung gemäß einer der Aspekte 4 bis 10 mit einem wässrigen Lösungsmittel und Nitritpökelsalz, und optional mit Citrat, um eine Lake zu erhalten;

b.) Injektion der in Schritt a.) erhaltenen Lake in das Rohmaterial Fleisch; und/oder Einlegen des Rohmaterials Fleisch in die gemäß Schritt a) erhaltene Lake;

c.) Mechanische Behandlung des gemäß Schritt b) behandelten Fleisches mittels Tumblerbehandlung oder Massierbehandlung.

13. Verfahren gemäß Aspekt 12, **dadurch gekennzeichnet, dass** die in Schritt a.) erhaltene Lake die Zusammensetzung in einer Konzentration von 5 bis 20 Gew.-% aufweist, bevorzugt von 10 bis 15 Gew.-%.

14. Verfahren gemäß einer der Aspekte 12 oder 13, **dadurch gekennzeichnet, dass** durch die Injektion oder das Einlegen in Schritt b.) die Gesamtmasse des Rohmaterials Fleisch um 5 bis 100 % zunimmt, bevorzugt um 10 bis 40 %, bevorzugter um 15 bis 25 %.

15. Kochpökelware enthaltend eine aktivierbare, aktivierbare, entesterte, pektin-konvertierte Fruchtfaser, **dadurch gekennzeichnet, dass** diese Fruchtfaser eine Citrusfaser gemäß Aspekt 1 oder 2 oder eine Apfelfaser gemäß Aspekt 1 oder 3 ist.

16. Kochpökelware hergestellt unter Verwendung einer Zusammensetzung gemäß einem der Aspekte 4 bis 10.

17. Kochpökelware gemäß Aspekt 15 oder 16, **dadurch gekennzeichnet, dass** die Kochpökelware ausgewählt ist aus der Gruppe bestehend aus Kochschinken, Vorderkochschinken, Kasseler, Kaiserfleisch, Back- und Geflügelschinken, Pökelzunge, Bratenaufschnitt, gekochter Speck/Bacon, gepökelte Rinderbrust oder gepökeltes Eisbein.

## Definitionen

Eine Fruchtfaser gemäß der Erfindung ist eine Pflanzenfaser, also eine Faser, die aus einer nichtverholzten pflanzlichen Zellwand isoliert wird und hauptsächlich aus Cellulose besteht, und die hierbei aus einer Frucht isoliert wird. Unter einer Frucht ist hierbei die Gesamtheit der Organe einer Pflanze zu verstehen, die aus einer Blüte hervorgehen, wobei sowohl die klassischen Obstfrüchte als auch Fruchtgemüse enthalten sind.

Eine "Apfelfaser" gemäß der Anmeldung ist eine hauptsächlich aus Fasern bestehende Komponente, die aus einer nichtverholzten pflanzlichen Zellwand eines Apfels isoliert wird und hauptsächlich aus Cellulose besteht. Der Begriff der Faser stellt in gewisser Hinsicht ein Misnomer dar, weil die Apfelfasern makroskopisch nicht als Fasern in Erscheinung treten, sondern ein pulverförmiges Produkt darstellen. Weitere Bestandteile der Apfelfaser sind unter anderem Hemicellulose und Pektin.

Die Apfelfaser kann aus allen dem Fachmann bekannten Kulturäpfeln (*malus domesticus*) gewonnen werden. Als Ausgangsmaterial können hier vorteilhafterweise Verarbeitungsrückstände von Äpfeln eingesetzt werden. Als Ausgangsmaterial kann entsprechend Apfelschale, Kerngehäuse, Kerne oder Fruchtfleisch oder eine Kombination hiervon verwendet werden. In bevorzugter Weise wird als Ausgangsmaterial Apfeltrester verwendet, also die Pressrückstände von Äpfeln, die neben den Schalen typischerweise auch die oben genannten Bestandteile enthalten.

Eine "Citrusfaser" gemäß der Anmeldung ist eine hauptsächlich aus Fasern bestehende Komponente, die aus einer nichtverholzten pflanzlichen Zellwand einer Citrusfrucht isoliert wird und hauptsächlich aus Cellulose besteht. Der Begriff der Faser stellt in gewisser Hinsicht ein Misnomer dar, weil die Citrusfasern makroskopisch nicht als Fasern in Erscheinung treten, sondern ein pulverförmiges Produkt darstellen. Weitere Bestandteile der Citrusfaser sind unter anderem Hemicellulose und Pektin. Die Citrusfaser kann vorteilhafterweise aus Citruspulpe, Citrusschale, Citrusvesikel, Segmentmembranen oder einer Kombination hiervon gewonnen werden.

Eine aktivierbare, entesterte, pektin-konvertierte Citrusfaser gemäß der vorliegenden Anmeldung ist durch den Gehalt von 10 bis 35 Gew% an wasserlöslichem Pektin definiert, wobei dieses Pektin ein niederverestertes Pektin ist.

Eine aktivierbare, entesterte, pektin-konvertierte Apfelfaser gemäß der vorliegenden Anmeldung ist durch den Gehalt von 10 bis 22 Gew% an wasserlöslichem Pektin definiert, wobei dieses Pektin ein niederverestertes Pektin ist.

Ein lösliches Pektin gemäß der Anmeldung ist definiert als ein pflanzliches Polysaccharid, das als Polyuronid im Wesentlichen aus $\alpha$-1,4-glycosidisch verknüpften D-Galacturonsäure-Einheiten besteht. Die Galacturonsäureeinheiten sind partiell mit Methanol verestert. Der Veresterungsgrad beschreibt den prozentualen Anteil der Carboxylgruppen in den Galacturonsäure-Einheiten des Pektins, welche in veresterter Form vorliegen, z.B. als Methylester.

Unter einem hochveresterten Pektin wird erfindungsgemäß ein Pektin verstanden, das einen Veresterungsgrad von mindestens 50% besitzt. Ein niedrigverestertes Pektin weist hingegen einen Veresterungsgrad von weniger als 50% auf. Der Veresterungsgrad beschreibt den prozentualen Anteil der Carboxylgruppen in den Galacturonsäure-Einheiten des Pektins, welche in veresterter Form vorliegen, z.B. als Methylester. Der Veresterungsgrad kann mittels der Methode nach JECFA (Monograph 19-2016, Joint FAO/WHO Expert Committee on Food Additives) bestimmt werden.

Ein "Ballaststoff" gemäß der Erfindung ist ein weitgehend unverdaulicher Nahrungsbestandteil, meist Kohlenhydrate, die vorwiegend in pflanzlichen Lebensmitteln vorkommen. Der Einfachheit wegen teilt man die Ballaststoffe in wasserlösliche (wie Pektin) und wasserunlösliche (zum Beispiel Cellulose) ein. Ballaststoffe gelten als wichtiger Bestandteil der menschlichen Ernährung. Die EU-Verordnung zur Nährwertkennzeichnung weist ihnen pauschal einen Brennwert von 8 kJ/g zu.

"Geliermittel" gemäß der Erfindung sind Lebensmittelzusatzstoffe, die im Wasser quellen oder Wasser binden, also zu einer Gelierung führen. Sie bilden eine gallertartige Masse und geben Suppen, Saucen oder Pudding eine sämige bis feste Konsistenz.

Unter einem "Texturgeber" im Sinne der vorliegenden Anmeldung versteht man eine Substanz, die die Fähigkeit besitzt, einem Produkt eine besondere Textur zu verleihen. Unter Textur ist hier die in der Lebensmitteltechnologie durch Sensorik (Tast- und Berührungssinne) erfassbaren Oberflächeneigenschaften von Lebensmitteln zu verstehen, insbesondere das Mundgefühl eines Produkts.

Unter einem "Verdickungsmittel" im Sinne der vorliegenden Anmeldung versteht man eine Substanz, die in erster Linie in der Lage ist, Wasser zu binden. Durch Entzug von ungebundenem Wasser kommt es zur Erhöhung der Viskosität. Ab einer für jedes Verdickungsmittel charakteristischen Konzentration treten zu diesem Effekt noch Netzwerkeffekte auf, die zu einer meist überproportionalen Erhöhung der Viskosität führen. Verdickungsmittel besitzen daher die Fähigkeit, einem Produkt eine bestimmte Konsistenz zu verleihen. Eine Verdickung bedeutet hier eine erhöhte Viskosität oder Festigkeit des Produkts als Ergebnis der Verwendung des Verdickungsmittels.

Im Rahmen der vorliegenden Erfindung wird unter einem "Emulgator" ein Hilfsstoff verstanden, der dazu dient, zwei nicht miteinander mischbare Flüssigkeiten, wie zum Beispiel Öl und Wasser, zu einem fein verteilten Gemisch, der sogenannten Emulsion, zu vermengen und zu stabilisieren. Ähnliches gilt für die Aufmischung von festen, nicht löslichen Stoffen in einer Flüssigkeit, um eine sogenannte Suspension zu stabilisieren. In bevorzugter Weise handelt es sich bei dem Emulgator um einen Lebensmittelzusatzstoff.

Ein "Trennmittel" gemäß der Erfindung ist ein Lebensmittelzusatzstoff oder technischer Hilfsstoff, der das Verkleben oder Verklumpen von Lebensmitteln verhindert. Somit gehören Trennmittel auch zu den Stoffen, die die Rieselfähigkeit erhöhen oder erhalten. So verhindern Trennmittel, dass beispielsweise Salz klumpig wird und lose Bonbons zu einem einzigen Zuckerblock verkleben. Als technischer Hilfsstoffe kommt es bei der industriellen Verarbeitung und Herstellung von Lebensmitteln zum Einsatz. Bei den technischen Hilfsstoffen handelt es sich um Lebensmittelzusätze, die zugegeben werden, um technische Prozesse wie beispielsweise das Schneiden und Filtrieren zu erleichtern. Im Endprodukt dürfen die technischen Hilfsstoffe jedoch gar nicht oder nur in unvermeidbaren (geringen) Rückständen vorhanden sein.

Unter "Injektionsmittel" wird eine Mischung an Komponenten verstanden, die in rohes Fleisch eingebracht wird, um dem rohen Fleisch für die Weiterverarbeitung verbesserte technologische Eigenschaften zu verleihen und somit die organoleptischen Eigenschaften der prozessierten Kochpökelware zu verbessern. Zu verbesserten technologischen Eigenschaften zählt insbesondere ein erhöhtes Wasserbindungsvermögen. Unter verbesserten organoleptischen Eigenschaften ist insbesondere eine Verbesserung bezüglich Geschmack, Aussehen, Geruch und Konsistenz zu verstehen.

Unter "Fleisch" ist ein einem Tier entnommener Teil zu verstehen, z.B. ein aus der Hinterkeule des Schweins entnommener Teil, oder ein aus der Brust von Geflügel entnommener Teil. Rohes Fleisch ist indes Fleisch, das noch nicht prozessiert wurde, d.h. das insbesondere noch nicht gekocht wurde, aber auch nicht luftgetrocknet oder geräuchert wurde.

Unter "Protein" ist jedes Protein insbesondere pflanzlichen und tierischen Ursprungs zu verstehen. Ein Protein, auch Eiweiß genannt, ist ein biologisches Makromolekül, das aus Aminosäuren durch Peptidbindungen aufgebaut ist. Proteine, die bis zu 100 via Peptidbindung (Amidbindung) verknüpfte Aminosäuren aufweisen, werden Peptide genannt. Auch hydrolysierte Proteine sind als Proteine zu verstehen.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Sämtliche in den Anmeldungsunterlagen offenbarten Merkmale werden als erfindungswesentlich beansprucht, sofern sie einzeln oder in Kombination miteinander gegenüber dem Stand der Technik neu sind.

Es sei noch ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei..." usw., sofern sich nicht aus dem jeweiligen Kontext ausdrücklich ergibt oder es für den Fachmann offensichtlich oder technisch zwingend ist, dass dort nur "genau ein...", "genau zwei..." usw. gemeint sein können.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**Figurenbeschreibung**

Fig. 1: Fließdiagramm zur schematischen Darstellung eines Herstellungsverfahrens zur Herstellung der erfindungsgemäßen Citrus- bzw. Apfelfaser.

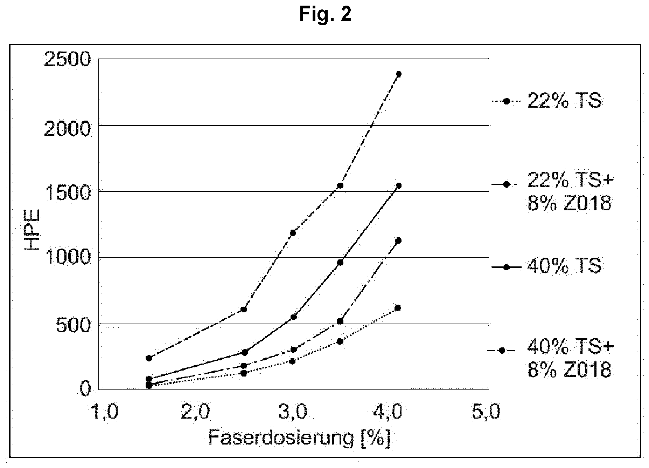

Fig. 2: Graphische Darstellung der Bruchfestigkeit HPE als Funktion der Faserkonzentration. Es wurden Suspensionen mit 1,5, 2,5, 3,0, 3,5 und 4,1 Gew.% Faserkonzentration jeweils für 22° und 40°Brix vermessen. Zudem wurde in einer Testdurchführung 8% an Natriumpolyphosphat (bezogen auf die Faser) zugegeben.

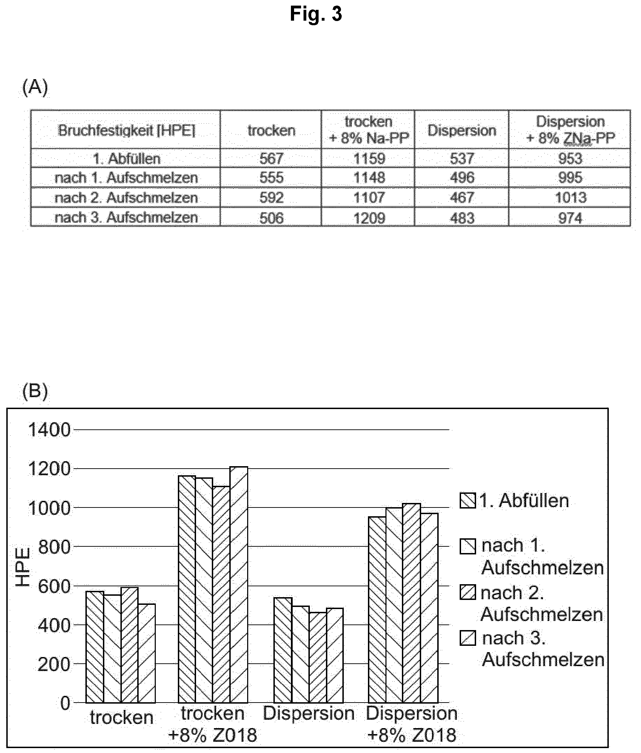

Fig. 3 zeigt in (A) eine tabellarische Darstellung und in (B) eine grafische Darstellung zur Thermoreversibilität der mit der erfindungsgemäßen Citrusfaser erzielten Gelbildung.

Fig. 4 zeigt die Viskosität einer 2,5 Gew.%igen Faserdispersion mit einer erfindungsgemäßen Citrusfaser ohne Zugabe an Natriumpolyphosphat (Na-PP) oder mit Zugabe von 2, 4, 8 oder 10 Gew.% Na-PP. Die Viskositätsbestimmung wurden an Proben durchgeführt, die in der Herstellung in (A) mit 70% Isopropanol (IPA), in (B) mit 60% IPA und in (C) mit 50% IPA gewaschen wurden, wobei folgende Waschbedingungen verglichen wurden:

•Keine Säuren-/Basenzugabe (Angabe 50, 60,70% IPA)
•Zugabe an Salpetersäure im 1. Waschschritt (IPA/HNO3)
•Zugabe an Salpetersäure/Na-PP im 1. Waschschritt (IPA/HNO3/Na-PP)
•Zugabe an Salzsäure im 1. Waschschritt (IPA/HCL)
•Zugabe an Citronensäure im 1. Waschschritt (IPA/CS)
•Zugabe an Ammoniaklösung im 2. Waschschritt (IPA/NH3)
•Zugabe an Ammoniaklösung plus EDTA im 2. Waschschritt (IPA/NH3/EDTA)

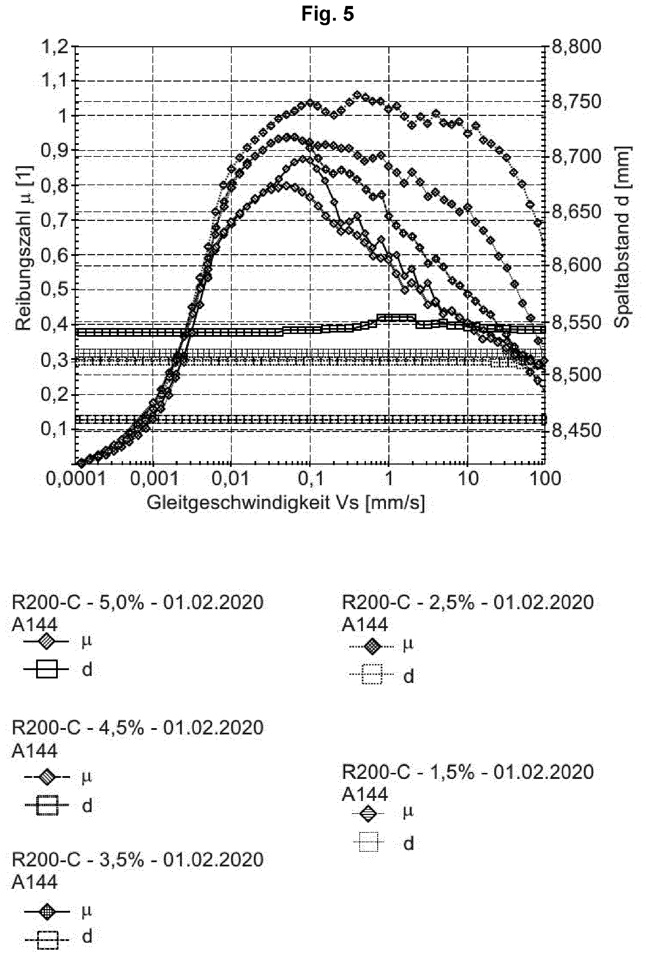

Fig. 5 zeigt eine tribologische Charakterisierung einer Faserdispersion in Abhängigkeit von der Konzentration der Faser in der Dispersion (1,5%, 2.5%, 3,5%, 4,5%, 5%) anhand der Reibzahl µ.

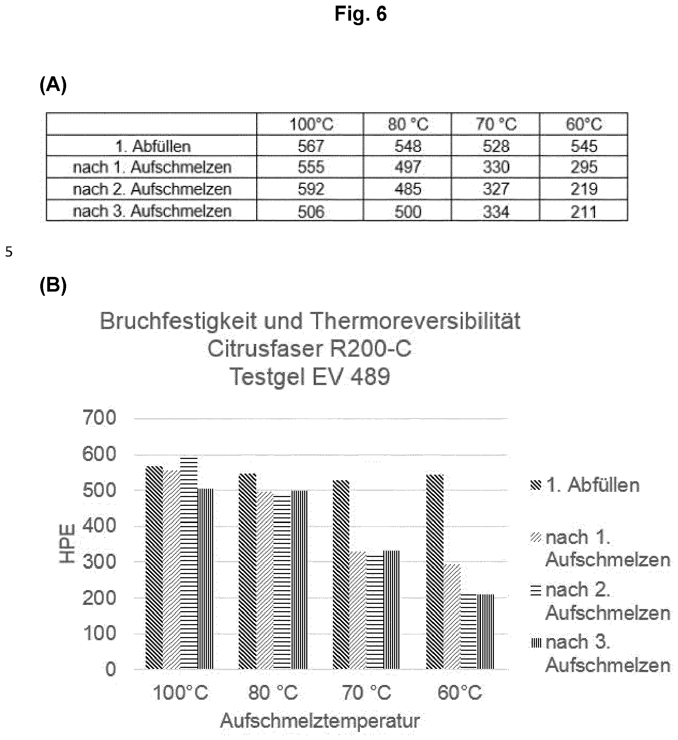

Fig. 6 zeigt in (A) eine tabellarische Darstellung und in (B) eine grafische Darstellung zur Thermoreversibilität der mit der erfindungsgemäßen Citrusfaser erzielten Gelbildung bei verschiedenen Aufschmelztemperaturen, nämlich 60, 70, 80 und 100°C.

**Ausführungsbeispiele**

**1. Beschreibung des Herstellungsverfahrens für eine erfindungsgemäß verwendbare Faser anhand eines Fließdiagramms**

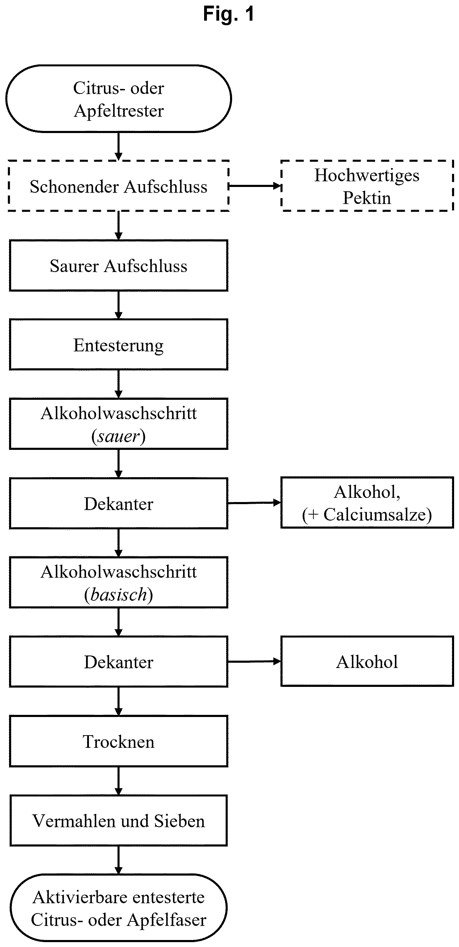

In Figur 1 ist ein Verfahren zur Herstellung einer erfindungsgemäß verwendeten aktivierbaren pektin-konvertierten Citrus- oder Apfelfaser gemäß der Erfindung als Fließdiagramm schematisch dargestellt. Ausgehend von dem Citrus-Trester bzw. Apfeltrester wird der Trester durch den sauren Aufschluss bei einem pH-Wert zwischen 2,5 und 5,0 schonend aufgeschlossen und hierbei ein Teil des vorhandenen Protopektins in Lösung gebracht, das anschließend als hochwertiges Pektin von dem Fasermaterial durch eine Fest-Flüssigtrennung (z.B. mit einem Dekanter oder einem Separator) abgetrennt wird. Da dieser Aufschlussschritt optional ist, wurde er im Diagramm mit einem gestrichelten Rahmen versehen. In dem darauffolgenden Aufschluss wird das Fasermaterial, das nach saurer Vorinkubation und Abtrennung des Pektins anfällt, durch Inkubation in einer aciden Lösung bei einem pH-Wert zwischen 0,5 und 2,5 und einer Temperatur zwischen 70° bis 80°C aufgeschlossen ("saurer Aufschluss") und weiteres Pektin extrahiert. Anschließend wird das sauer aufgeschlossene Fasermaterial durch Behandlung mit einer Pektinmethylesterase entestert ("Entesterung"). Dann werden zwei Waschschritte mit einer alkoholhaltigen Waschflüssigkeit mit jeweils anschließender Fest-Flüssigtrennung mittels Dekanter durchgeführt. Hierbei weist die alkoholhaltige Waschflüssigkeit im ersten Waschschritt einen sauren pH und im zweiten Waschschritt einen basischen pH-Wert auf. Da die pH-Wertanpassung in diesen beiden Waschschritten optional ist, wurde sie kursiv dargestellt. Im nächsten Schritt erfolgt schließlich das schonende Trocknen der Fasern mittels einer Fließbetttrocknung, gefolgt von einem Vermahlungs- und Siebschritt, um dann die erfindungsgemäß verwendbaren Citrus- bzw. Apfelfasern zu erhalten.

**2. Testmethode zur Bestimmung der Fließgrenze (Rotationsmessung)**

Messprinzip:

Diese Fließgrenze macht eine Aussage über die Strukturstärke und wird im Rotationsversuch bestimmt, indem die Schubspannung, die auf die Probe wirkt, über die Zeit so lange erhöht wird, bis die Probe anfängt zu fließen.
Schubspannungen, die unterhalb der Fließgrenze liegen, verursachen lediglich eine elastische Deformation, die erst bei Schubspannungen oberhalb der Fließgrenze in ein Fließen mündet. Bei dieser Bestimmung wird dieses messtechnisch durch das Überschreiten einer festgelegten Mindest-Schergeschwindigkeit $\dot\gamma$ erfasst. Gemäß der vorliegenden Methode ist die Fließgrenze $\tau_o$ [Pa] bei der Schergeschwindigkeit $\dot\gamma \geq 0.1$ s$^{-1}$ überschritten.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |
| Anzahl Messabschnitte: | 3 |
| Messtemperatur: | 20 °C |

Messparameter:

<u>1. Abschnitt (Ruhephase):</u>

| | | |
|---|---|---|
| Abschnittseinstellungen: | - Vorgabegröße: | Schubspannung [Pa] |
| | - Wert: | 0 Pa konstant |
| | - Abschnittsdauer: | 180 s |
| | - Temperatur: | 20 °C |

<u>2. Abschnitt (Bestimmung der Fließgrenze nach Rotationsmessung):</u>

| | | |
|---|---|---|
| Abschnittseinstellungen: | - Vorgabegröße: | Schubspannung [Pa] |
| | - Profil: | Rampe log. |
| | - Startwert: | 0,1 Pa |
| | - Endwert: | 80 Pa |
| | - Abschnittsdauer: | 180 s |
| | - Temperatur: | 20 °C |

<u>Auswertung:</u>

Die Fließgrenze $\tau_o$ (Einheit [Pa] wird in Abschnitt 2 abgelesen und ist die Schubspannung (Einheit: [Pa]), bei der die Schergeschwindigkeit zum letzten Mal $\dot\gamma \leq 0{,}10$ s$^{-1}$ beträgt.

Die mit der Rotationsmethode gemessene Fließgrenze wird auch als "Fließgrenze (Rotation)" bezeichnet.

Die Fließgrenze (Rotation) wurde anhand einer Fasersuspension (einfaches Einrühren der Faser mit einem Löffel = entspricht einer nicht aktivierten Faser) gemessen und wird im Rahmen der Erfindung auch als "Fließgrenze Rotation II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Rotation I" bezeichnet.

**3. Testmethode zur Bestimmung der Fließgrenze (Oszillationsmessung)**

<u>Messprinzip:</u>

Diese Fließgrenze macht ebenfalls eine Aussage über die Strukturstärke und wird im Oszillationsversuch bestimmt, indem die Amplitude bei konstanter Frequenz so lange erhöht wird, bis die Probe durch die immer größer werdende Auslenkung zerstört wird und dann anfängt zu fließen.

Dabei verhält sich die Substanz unterhalb der Fließgrenze wie ein elastischer Festkörper, das heißt, die elastischen Anteile (G') liegen über den viskosen Anteilen (G"), während bei Überschreiten der Fließgrenze die viskosen Anteile der Probe ansteigen und die elastischen Anteile abnehmen.

Per Definition ist die Fließgrenze bei der Amplitude überschritten, wenn gleich viele viskose wie elastische Anteile vorliegen G' = G" (Cross Over), die zugehörige Schubspannung ist der entsprechende Messwert.

| | |
|---|---|
| Messgerät: | Rheometer Physica MCR-Serie (z.B. MCR 301, MCR 101) |
| Messsystem: | Z3 DIN bzw. CC25 |
| Messbecher: | CC 27 P06 (geriffelter Messbecher) |

Messparameter:

| | | |
|---|---|---|
| Abschnittseinstellungen: | - Amplitudenvorgaben: | Deformation |
| | - Profil: | Rampe log. |
| | - Wert: | 0,01 - 1000% |
| | - Frequenz: | 1,0 Hz |
| | - Temperatur: | 20 °C |

Auswertung:

Mit Hilfe der Rheometersoftware Rheoplus wird die Schubspannung am Cross-Over nach Überschreiten des linear-viskoelastischen Bereiches ausgewertet.

Die mit der Oszillationsmethode gemessene Fließgrenze wird auch als "Fließgrenze Cross Over" bezeichnet.

Die Fließgrenze Cross Over wurde anhand einer Fasersuspension (einfaches Einrühren der Faser mit einem Löffel = entspricht einer nicht aktivierten Faser) gemessen und wird im Rahmen der Erfindung auch als "Fließgrenze Cross Over II" bezeichnet. Die Fließgrenze wurde zudem anhand einer Faserdispersion (eingerührt unter Einwirkung hoher Scherkräfte; z.B. mit Ultra Turrax = entspricht einer aktivierten Faser) gemessen und wird im Rahmen der Erfindung auch als "Fließgrenze Cross Over I" bezeichnet.

Messergebnisse und ihre Bedeutung:

Betrachtet man die Fließgrenze für die Suspension der erfindungsgemäß verwendeten Fasern, eingerührt mit dem Löffel (entsprechend einer nicht aktivierten Faser), mit einer Faserdispersion eingerührt mit hohen Scherkräften z.B. Ultra Turrax (entsprechend einer aktivierten Faser), kann man eine Aussage über die Vorteilhaftigkeit/Notwendigkeit einer Aktivierung treffen. Die Messergebnisse sind in der folgenden Tabelle zusammengefasst. Erwartungsgemäß steigt die Fließgrenze jeweils durch die Scher-Aktivierung in der Dispersion an. Aufgrund der relativ geringen Fließgrenzen der Fasersuspensionen $\tau_o$ II ist für das vollständige Implementierung der Fasereigenschaften eine Aktivierung der Faser erforderlich, um die gewünschte homogene Textur zu erhalten.

| Faser | Rotation | | Cross Over | | Aktivierung |
|---|---|---|---|---|---|
| | $\tau_o$ II [Pa] Suspension | $\tau_o$ I [Pa] Dispersion | $\tau_o$ II [Pa] Suspension | $\tau_o$ I [Pa] Dispersion | |
| erfindungsgemäß verwendete aktivierbare, entesterte, pektin-konvertierte Citrusfaser | 0,7 | 4,8 | 0,4 | 5,5 | erforderlich |
| erfindungsgemäß verwendete aktivierbare, entesterte, pektin-konvertierte Apfelfaser | 2,0 | 4,3 | 2,8 | 5,2 | erforderlich |

## 4. Testmethode zur Bestimmung der dynamischen Weißenbergzahl

Messprinzip und Bedeutung der dynamischen Weissenbergzahl:

Die dynamische Weissenbergzahl W' (Windhab E, Maier T, Lebensmitteltechnik 1990, 44: 185f) ist eine abgeleitete Größe, bei der die im Oszillationsversuch im linear-viskoelastischen Bereich ermittelten elastischen Anteile (G') mit den viskosen Anteilen (G") ins Verhältnis gesetzt werden:

$$W' = \frac{G'(\omega)}{G''(\omega)} = \frac{1}{\tan \delta}$$

Mit der dynamischen Weissenbergzahl erhält man eine Größe, die besonders gut mit der sensorischen Wahrnehmung der Konsistenz korreliert und relativ unabhängig von der absoluten Festigkeit der Probe betrachtet werden kann.

Ein hoher Wert für W' bedeutet, dass die Fasern eine überwiegend elastische Struktur aufgebaut haben, während ein tiefer Wert für W' auf Strukturen mit deutlich viskosen Anteilen spricht. Die für Fasern typische homogene Textur wird erreicht, wenn die W' Werte im Bereich von ca. 6 - 8 liegen, bei tieferen Werten wird die Probe als wässrig (weniger stark angedickt) beurteilt.

Material und Methoden:

| Messgerät: | Rheometer Physica MCR-Serie, z.B. MCR 301, MCR 101 |
| Messsystem: | Z3 DIN bzw. CC25 |
| Messbecher: | CC 27 P06 (geriffelter Messbecher) |

Messparameter:

| Abschnittseinstellungen: | - Amplitudenvorgaben: | Deformation |
| | - Profil: | Rampe log |
| | - Wert: | 0,01 - 1000 % |
| | - Frequenz: | 1,0 Hz |
| | - Temperatur: | 20 °C |

Auswertung:

Der Phasenverschiebungswinkel δ wird im linear-viskoelastischen Bereich abgelesen. Die dynamische Weissenbergzahl W' wird anschließend mit folgender Formel berechnet:

$$W' = \frac{1}{tan\,\delta}$$

Messergebnisse und ihre Bedeutung:

Betrachtet man die dynamische Weissenbergzahl W' für die Suspension einer erfindungsgemäß verwendeten Faser, eingerührt mit dem Löffel (entsprechend einer nicht aktivierten Faser), mit einer Faserdispersion eingerührt mit hohen Scherkräften z.B. Ultra Turrax (entsprechend einer aktivierten Faser), kann man eine Aussage über die Textur und darüber hinaus über die Notwendigkeit einer Aktivierung treffen. Die Messergebnisse sind in der folgenden Tabelle zusammengefasst. Die erfindungsgemäß verwendeten aktivierbaren, entesterten, pektin-konvertierten Citrus- und Apfelfasern liegen mit W' Werten von 8,6 bzw. 6,3 in der Suspension und 8,8 bzw. 7,0 für die Dispersion jeweils im idealen Bereich und weisen damit eine optimale Textur auf. Sie ist in beiden Fällen von cremiger Textur. Die Ergebnisse zur dynamischen Weißenbergzahl zeigen, dass hinsichtlich der erwünschten cremigen Textur eine Aktivierung der Fasern nicht unbedingt erforderlich ist.

| Faser | W' Suspension | W' Dispersion | Textur |
|---|---|---|---|
| erfindungsgemäß verwendete aktivierbare entesterte, pektin-konvertierte Citrusfaser | 8,6 | 8,8 | mit und ohne Aktivierung cremig, Viskosität/Fließgrenze wird über die Dosierung reguliert |
| erfindungsgemäß verwendete aktivierbare entesterte, pektin-konvertierte Apfelfaser | 6,3 | 7,0 | mit und ohne Aktivierung cremig, Viskosität/Fließgrenze wird über die Dosierung reguliert |

## 5. Testmethode zur Bestimmung der Festigkeit

Durchführung:

150 ml destilliertes Wasser werden in einem Becherglas vorgelegt. Dann rührt man mit einem Löffel 6,0 g entestete Citrusfasern bzw. entestete Apfelfasern klumpenfrei in das Wasser ein. Zum Ausquellen lässt man dieses Faser-Wasser-Gemisch 20 min stehen. Man überführt die Suspension in ein Gefäß (Ø 90 mm). Anschließend wird die Festigkeit mit der folgenden Methode gemessen.

Messgerät: Texture Analyser TA-XT 2 (Fa. Stable Micro Systems, Godalming, UK)

Test-Methode/Option: Messung der Kraft in Druckrichtung / einfacher Test

Parameter:
- Test-Geschwindigkeit: 1,0 mm/s
- Weg: 15,0 mm/s

Messwerkzeug:     P/50

Gemäß der vorliegenden Methode entspricht die Festigkeit der Kraft, die der Messkörper braucht, um 10 mm in die Suspension einzudringen. Diese Kraft wird aus dem Kraft-ZeitDiagramm abgelesen. Es ist zu erwähnen, dass sich aus der Historie der Festigkeitsmessung die Einheit der gemessenen Festigkeit in Gramm (g) manifestiert hat.

## 6. Testmethode zur Bestimmung der Bruchfestigkeit bzw. Bruchfestigkeitstest

Rezeptur für 22°Brix
5,7, 9,5 11,4 13,3, 15,6 g Faser (entspricht 1,5, 2,5, 3,0, 3,5 und 4,1 Gew% im Endprodukt)
320,0 g 0,65 mol/L Kaliumacetat-Milchsäure-Pufferlösung
60 g Zucker (Saccharose) bei
2 - 3 Tropfen Entschäumer

| | |
|---|---|
| Einwaage: | ca. 390 g |
| Auswaage: | 380 g |
| pH-Wert: | 3,0 ± 0,1 |
| Trockensubstanzgehalt: | 22,0 ± 1,0 % |

Rezeptur für 40°Brix
5,7, 9,5 11,4 13,3, 15,6 g Faser (entspricht 1,5, 2,5, 3,0, 3,5 und 4,1 Gew% im Endprodukt)
320 g 0,65 mol/L Kaliumacetat-Milchsäure-Pufferlösung
135 g Zucker (Saccharose) bei
2 - 3 Tropfen Entschäumer

| | |
|---|---|
| Einwaage: | ca. 465 g |
| Auswaage: | 380 g |
| pH-Wert: | 3,0 ± 0,1 |
| Trockensubstanzgehalt: | 40,0 ± 1,0 % |

Messmethode:

- Die Kochung wird auf einem Induktionskochfeld bei mittlerer Hitze durchgeführt.
- Pufferlösung in einem Edelstahltopf vorlegen.
- Faser mit einem Teil des Gesamtzuckers (ca. 30 g) homogen in Mischflasche oder Glasschale vermischen.
- Faser-Zuckermischung unter Rühren in die kalte Pufferlösung einstreuen und den Ansatz bei mittlerer Hitze zum Kochen bringen. Unter Rühren bei mittlerer Hitze weiterkochen.
- Mischflasche bzw. Glasschale zweimal mit je ca. 10 - 15 g Zucker (aus Gesamtzuckermenge) reinigen und den Zucker unter Rühren in den Ansatz geben.

- Restzuckermenge nacheinander in 3 Portionen (je ca. 50 g) zugeben und nach jeder Zugabe unter Rühren bis zum Sieden erhitzen. Dann bei mittlerer Hitze auf Auswaage auskochen.
- Nach Erreichen der Auswaage werden sofort je $100 \pm 1$ g der Kochung rasch in drei Lüers-Becher mit eingesetzter Zerreißfigur eingewogen.
- Becher unter Vermeidung von Erschütterungen in ein unmittelbar neben der Kochstelle platziertes Wasserbad ($20 \pm 1$ °C) stellen und temperieren. Die Lüers-Becher müssen bis zur Füllhöhe des Gels im Wasser stehen. Das Wasserniveau muss reguliert werden, wenn zahlreiche Proben in das Wasserbad gestellt bzw. aus dem Wasserbad genommen werden.
- Nach genau 2 Stunden wird die Bruchfestigkeit mit dem Herbstreith-Pektinometer Mark III oder Nachfolgemodelle gemessen. Das Ergebnis ist der Mittelwert der drei Einzelwerte.

Auswertung:

Wie die folgenden beiden Tabellen zeigen, nimmt mit steigender Faserdosierung die Bruchfestigkeit sowohl bei einem löslichen Trockensubstanzgehalt von 22% TS als auch bei 40 % TS stark zu. Die Bruchfestigkeiten steigen außerdem durch die Zugabe eines Komplexbildners/löslichen Ionenaustauschers wie in diesem Fall durch die Zugabe von Natriumpolyphosphat mit einer Kettenlänge von ca. 30 an.

Hintergrund für diesen Anstieg ist vermutlich das Binden der in der Faser natürlicherweise enthaltenen Calciumionen, wodurch die Vorgelierung des in der Faser enthaltenen niederveresterten Pektins zurückgedrängt wird.

Tabelle 1: Bruchfestigkeit bei 22°Brix (Na-PP = Natriumpolyphosphat)

| Faser | Na-PP [%] bezogen auf Fasern | Faserdos. [%] | Ø HPE | Ø K-Wert | pH-Wert | TS [%] |
|---|---|---|---|---|---|---|
| Aktivierbare, entesterte, pektin-konvertierte erfindungsgemäß verwendete Citrusfaser | - | 1,5 | **27** | 9,3 | 3,05 | 20,4 |
| | 8,0 | 1,5 | **43** | 5,3 | 3,07 | 20,2 |
| | - | 2,5 | **132** | 7,3 | 3,12 | 20,0 |
| | 8,0 | 2,5 | **178** | 5,1 | 3,10 | 20,4 |
| | - | 3,0 | **215** | 8,6 | 3,10 | 20,2 |
| | - | 3,0 | **312** | 18,3 | 3,12 | 21,4 |
| | 8,0 | 3,0 | **305** | 6,3 | 3,11 | 20,4 |
| | - | 3,5 | **369** | 8,2 | 3,12 | 20,4 |
| | 8,0 | 3,5 | **516** | 5,6 | 3,11 | 20,4 |
| | - | 4,1 | **673** | 6,4 | 3,14 | 18,0 |
| | 8,0 | 4,1 | **1130** | 22,9 | 3,22 | 18,4 |

Tabelle 2: Bruchfestigkeit bei 40°Brix (Na-PP = Natriumpolyphosphat)

| Faser | Na-PP [%] bezogen auf Fasern | Faserdos. [%] | Ø HPE | Ø K-Wert | pH-Wert | TS [%] |
|---|---|---|---|---|---|---|
| Aktivierbare, entesterte, pektin-konvertierte | - | 1,5 | **78** | 6,6 | 3,08 | 39,8 |
| | 8,0 | | **240** | 6,1 | 3,05 | 39,8 |
| | - | 2,5 | **282** | 7,2 | 3,08 | 40,2 |
| | 8,0 | | **611** | 5,1 | 3,06 | 40,4 |
| erfindungsgemäß verwendete Citrusfaser | - | 3,0 | **543** | 9,2 | 3,09 | 40,1 |
| | 8,0 | | **1187** | 7,0 | 3,10 | 40,8 |
| | - | 3,5 | **964** | 10,5 | 3,11 | 40,2 |
| | 8,0 | | **1545** | 6,9 | 3,10 | 40,0 |
| | - | 4,1 | **1540** | 10,0 | 3,11 | 40,2 |
| | 8,0 | | **2393** | 8,4 | 3,12 | 40,9 |

Bestimmung der Thermoreversibilität der Gelbildung anhand Bruchfestigkeit:

Die Testgele, welche nach der obigen Rezeptur mit 40°Brix und 3,0 Gew% Faserkonzentration hergestellt wurden, wurden nach dem ersten Abfüllen auf Bruchfestigkeit wie vorab beschreiben getestet. Dann wurde das Gel unter Rühren zum Sieden erhitzt und aufgeschmolzen und durch Lagerung auf Raumtemperatur wieder verfestigt. Dies wurde insgesamt drei Mal durchgeführt und die Bruchfestigkeit im jeweils abgekühlten Zustand vermessen. Hierbei zeigte sich, dass die Fasern nach dem ersten Abkühlen für insgesamt drei Mal aufgeschmolzen werden konnten, und nach Abkühlung wieder ein Gel bilden konnten, ohne signifikant an Festigkeit zu verlieren.

Dabei spielte es im Rahmen der Schwankungsbreite der Messergebnisse keine Rolle, ob die Fasern trocken oder als Dispersion (über Ultra Turrax, s. Methode 8) zur Gelrezeptur gegeben wurden.

Die Bruchfestigkeit konnte auch in diesen Thermoreversibilitätsuntersuchungen durch die Zugabe von Natriumpolyphosphat deutlich erhöht werden und auch diese erhöhte Festigkeit blieb nach dreimaligem Aufschmelzen und Abkühlen erhalten.

In einem weiteren Experiment wurde die Thermoreversibilität anhand der Bruchfestigkeit bei verschiedenen Aufschmelztemperaturen gemessen werden. Die Ergebnisse sind in Figur 6 dargestellt. Hier zeigt sich, dass die Bruchfestigkeit mit der Aufschmelztemperatur zunimmt.

### 7. Testmethode zur Bestimmung der Korngröße

Messprinzip:

In einer Siebmaschine ist ein Satz von Sieben, deren Maschenweite vom unteren Sieb zum oberen stets ansteigt, übereinander angeordnet. Die Probe wird auf das oberste Sieb - das mit der größten Maschenweite gegeben. Die Probeteilchen mit größerem Durchmesser als die Maschenweite bleiben auf dem Sieb zurück; die feineren Teilchen fallen auf das nächste Sieb durch. Der Anteil der Probe auf den verschiedenen Sieben wird ausgewogen und in Prozent angegeben.

Durchführung:

Die Probe wird auf zwei Stellen nach dem Komma genau eingewogen. Die Siebe werden mit Siebhilfen versehen und mit steigender Maschenweite übereinander aufgebaut. Die Probe wird auf das oberste Sieb quantitativ überführt, die Siebe werden eingespannt und nach definierten Parametern verläuft der Siebprozess. Die einzelnen Siebe werden mit Probe und Siebhilfe sowie leer mit Siebhilfe gewogen. Soll bei einem Produkt nur ein Grenzwert im Korngrößenspektrum überprüft werden (z. B. 90 Gew% < 250 $\mu$m), dann wird nur ein Sieb mit der entsprechenden Maschenweite verwendet.

Messvorgaben:

|  |  |
|---|---|
| Probemenge: | 15 g |
| Siebhilfen: | 2 pro Siebboden |
| Siebmaschine: | AS 200 digit, Fa. Retsch GmbH |
| Siebbewegung: | dreidimensional |
| Schwingungshöhe: | 1,5 mm |
| Siebdauer: | 15 min |

Der Siebaufbau besteht aus den folgenden Maschenweite in µm: 1400, 1180, 1000, 710, 500, 355, 250 gefolgt vom Boden.

Die Berechnung der Korngröße erfolgt anhand folgender Formel:

$$Anteil\ pro\ Sieb\ in\ \% = \frac{Auswaage\ in\ g\ auf\ dem\ Sieb\ x\ 100}{Probeeinwaage\ in\ g}$$

## 8. Herstellung einer 2,5 Gew%igen Faserdispersion

Rezeptur:

2,50 g Faserstoffe
97,5 g demineralisiertes Wasser (Raumtemperatur)
Einstreudauer: 15 Sekunden

In einem 250 ml Becherglas wird die jeweilige Menge an dem. Wasser (Raumtemperatur) vorgelegt. Die genau abgewogene Menge an Faserstoffen wird bei laufendem Rührwerk (Ultra Turrax) bei 8000 U/Min. (Stufe 1) langsam direkt in den Rührsog eingestreut. Die Einstreudauer richtet sich nach der Menge an Fasern, sie soll pro 2,5 g Probe 15 Sekunden dauern. Dann wird die Dispersion genau 60 Sek. bei 8000 U/Min. (Stufe 1) gerührt. Soll die Probe zur Bestimmung der Viskosität bzw. zur Bestimmung der Fließgrenze I (Rotation), der Fließgrenze I (Cross Over) oder zur Bestimmung der dynamischen Weißenbergzahl verwendet werden, wird sie in ein temperiertes Wasserbad bei 20°C gestellt.

Zur Messung der Viskosität bzw. zur Messung der Fließgrenze I (Rotation), der Fließgrenze I (Cross Over) oder zur Messung der dynamischen Weißenbergzahl wird die Probe nach genau 1 Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

## 9. Herstellung einer 2,5 Gew%igen Fasersuspension

Rezeptur:

2,50 g Faserstoffe
97,5 g demineralisiertes Wasser (Raumtemperatur)

In einem 250 ml Becherglas wird die jeweilige Menge an dem. Wasser (Raumtemperatur) vorgelegt. Die genau abgewogene Menge an Faserstoffen wird unter ständigem Rühren mit einem Kunststofflöffel langsam eingestreut. Dann wird die Suspension so lange gerührt, bis alle Fasern mit Wasser benetzt sind. Soll die Probe zur Bestimmung der Viskosität bzw. zur Bestimmung der Fließgrenze II (Rotation), der Fließgrenze II (Cross Over) oder zur Bestimmung der dynamischen Weißenbergzahl verwendet werden, wird sie in ein temperiertes Wasserbad bei 20°C gestellt.

Zur Messung der Viskosität bzw. zur Messung der Fließgrenze II (Rotation), der Fließgrenze II (Cross Over) oder zur Messung der dynamischen Weißenbergzahl wird die Probe nach genau 1 Stunde vorsichtig in das Messsystem des Rheometers gefüllt und die jeweilige Messung gestartet. Falls sich die Probe absetzt, wird sie unmittelbar vor dem Abfüllen mit Hilfe eines Löffels vorsichtig aufgerührt.

**10. Testmethode zur Bestimmung des Wasserbindevermögens**

Durchführung für Wasserbindungsvermögen von nicht vorbehandelten Proben:

Man lässt die Probe mit einem Wasserüberschuss 24 Stunden bei Raumtemperatur quellen. Nach Zentrifugation und anschließendem Abdekantieren des Überstandes kann das Wasserbindungsvermögen in g H2O / g Probe gravimetrisch bestimmt werden. Der pH-Wert in der Suspension ist zu messen und zu dokumentieren.

Folgende Parameter sind einzuhalten:

Probeeinwaage:

|  |  |
|---|---|
| - Pflanzenfaser: | 1,0 g (in Zentrifugenglas) |
| - Wasserzugabe: | 60 ml |
| - Zentrifugation: | 4000 g |
| - Zentrifugierdauer | 10 min |

20 Minuten nach Zentrifugierbeginn (bzw. 10 Minuten nach Zentrifugierende) trennt man den Wasserüberstand von der gequollenen Probe ab. Die Probe mit dem gebundenen Wasser wird ausgewogen.
Das Wasserbindungsvermögen (WBV) in g H$_2$O / g Probe kann nun nach folgender Formel berechnet werden:

$$WBV\ (g\ H_2O/g\ Probe) = \frac{Probe\ mit\ gebundenem\ Wasser\ (g) - 1,0\ g}{1,0\ g}$$

**11. Testmethode zur Bestimmung der Viskosität**

|  |  |
|---|---|
| Messgerät: | Physica MCR-Serie (z.B. MCR 301, MCR 101) |
| Messsystem: | Z3 DIN bzw. CC25 |
|  | (Anmerkung: Die Messsysteme Z3 DIN und CC25 sind identische Messsysteme) |
| Anzahl Abschnitte: | 4 |

Messparameter:

1. Abschnitt:

| Abschnittseinstellungen: | - Vorgabegröße: | Schergeschwindigkeit [s$^{-1}$] |
|---|---|---|
|  | - Profil: | konstant |
|  | - Wert: | 0 s$^{-1}$ |
|  | - Abschnittsdauer: | 60 s |
|  | - Temperatur: | 20 °C |

2. Abschnitt:

| Abschnittseinstellungen: | - Vorgabegröße: | Schergeschwindigkeit [s$^{-1}$] |
|---|---|---|
|  | - Profil: | Rampe lin |
|  | - Wert: | 0,1 - 100 s$^{-1}$ |
|  | - Abschnittsdauer: | 120 s |

(fortgesetzt)

| | |
|---|---|
| - Temperatur: | 20 °C |

3. Abschnitt:

| | | |
|---|---|---|
| Abschnittseinstellungen: | - Vorgabegröße: | Schergeschwindigkeit $[s^{-1}]$ |
| | - Profil: | konstant |
| | - Wert: | 100 $s^{-1}$ |
| - Abschnittsdauer: | 10 s | |
| - Temperatur: | 20 °C | |

4. Abschnitt:

| | | |
|---|---|---|
| Abschnittseinstellungen: | - Vorgabegröße: | Schergeschwindigkeit $[s^{-1}]$ |
| | - Profil: | Rampe lin |
| | - Wert: | 100 - 0,1 $s^{-1}$ |
| | - Abschnittsdauer: | 120 s |
| | - Temperatur: | 20 °C |

Auswertung:

Die Viskosität (Einheit [mPas]) wird wie folgt abgelesen: 4. Abschnitt bei = 50 $s^{-1}$

Bestimmung der Viskosität in Abhängigkeit von verschiedenen Waschflüssigkeiten:

Es wurde eine aktivierbare, entesterte, pektin-konvertierte Citrusfaser anhand des vorher beschriebenen und in Fig. 1 dargestellten Verfahrens hergestellt und dabei der zweistufige Waschschritt mit der Waschflüssigkeit enthaltend 50, 60 oder 70 Vol.% Isopropanol (IPA) wie folgt: variiert:

- Keine Säuren-/Basenzugabe (Angabe 50, 60, 70% IPA)
- Zugabe an Salpetersäure im 1. Waschschritt (IPA/HNO$_3$)
- Zugabe an Salpetersäure/Na-PP im 1. Waschschritt (IPA/HNO$_3$/Na-PP)
- Zugabe an Salzsäure im 1. Waschschritt (IPA/HCl)
- Zugabe an Citronensäure im 1. Waschschritt (IPA/Citronensäure)
- Zugabe an Ammoniaklösung im 2. Waschschritt (IPA/NH$_3$)
- Zugabe an Ammoniaklösung plus EDTA im 2. Waschschritt (IPA/NH3/EDTA)

Anschließend wurde für die aus dem Herstellungsverfahren erhaltenen aktivierbaren, entesterten, pektin-konvertierten Citrusfasern die Viskosität in einer gemäß Methode 8 hergestellten 2,5Gew%igen Dispersion bei 20°C und D= 50 $s^{-1}$ bestimmt. Hierbei wurde die Dispersion ohne Zugabe an Natriumpolyphosphat (Na-PP) oder mit Zugabe von 2, 4, 8 oder 10 Gew% Na-PP hergestellt.

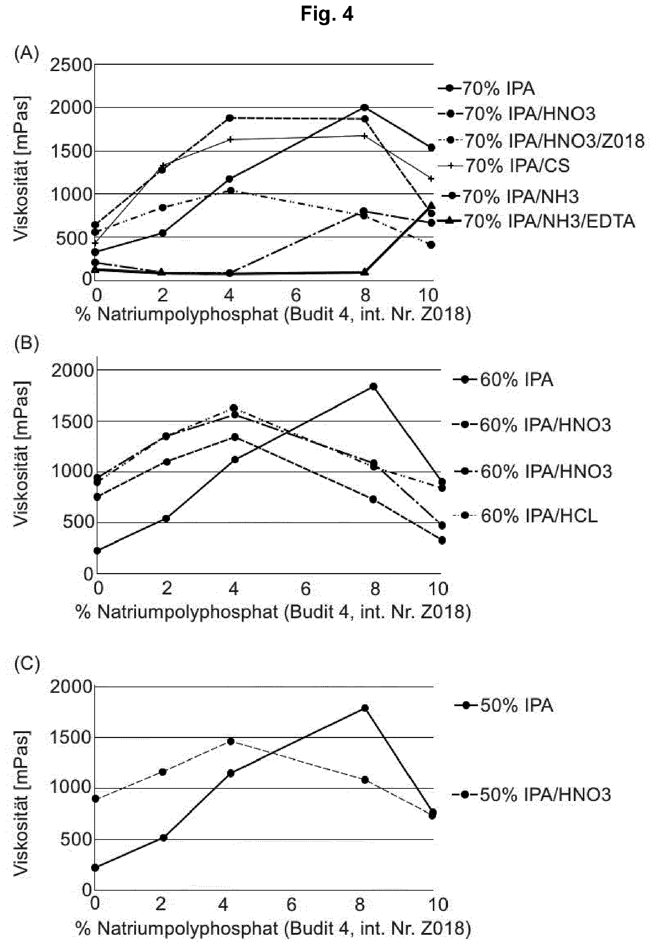

Die Ergebnisse sind grafisch in der Figur 4, A bis C, dargestellt.

Diese Versuche wurden aufgrund der Zunahme der Gel-Bruchfestigkeit durch Zugabe des Calcium-Chelators Na-PP durchgeführt, die auf eine Anwesenheit residualer Calciumionen und damit einer festigkeitsinhibierenden Vorgelierung schließen ließ. Durch das Waschen der Faser mit saurem Alkohol sollte das in der Faser enthaltene Calcium entfernt und somit die vermutete Vorgelierung reduziert werden. Wenn das der Fall ist, sollte die Viskosität ohne Zugabe von Natriumpolyphosphat (entsprechend 0% Na-PP) höher als bei der Vergleichsprobe (Waschen ohne Säurezugabe) liegen und der Kurvenverlauf in Abhängigkeit der Na-PP-Konzentration deutlich flacher ausfallen. Der Effekt müsste umso stärker sein, je höher der Wassergehalt beim Waschen gewählt wurde.

Mit allen drei gewählten IPA-Konzentrationen im Waschalkohol (50 Vol%, 60 Vol% und 70 Vol%) wurde das erwartete Verhalten erreicht. Der Viskositätsanstieg war bei Verwendung von 60 Vol% IPA und 50 Vol% IPA mit Säure vergleichbar und deutlich höher als mit 70 Vol% IPA plus Säure. Die Säureart (HCl, HNO$_3$, Citronensäure) hatte einen geringen Einfluss auf die erzielten Viskositäten.

Die Zugabe von Natriumpolyphosphat beim Waschen mit 70 Vol% IPA/HNO$_3$ führte vermutlich aufgrund des höheren pH-Wertes zu einer geringeren Viskosität.

### 12. Testmethode zur Bestimmung des Veresterungsgrads

Diese Methode entspricht der JECFA (Joint FAO/WHO Expert Committee on Food Additives) veröffentlichten Methode. Abweichend von der JECFA-Methode wird das entaschte Pektin nicht im Kalten gelöst, sondern erhitzt. Als Alkohol wird Isopropanol anstelle von Ethanol verwendet.

### 13. Bestimmung der Gelierkraft

Die Gelierkraft kann mittels der Standardprozedur für die Grad-Bewertung des Pektins in einem Gel mit 65 % Trockensubstanz festgestellt werden. Sie entspricht der Methode 5-54 des IFT-Komitees für Pektinstandardisierung (IFT Committee on Pectin Standardisation, Food Technology, 1959, 13: 496 - 500).

### 14. Testmethode zur Bestimmung des Ballaststoffgehalts

Diese Methode stimmt im Wesentlichen sachlich überein mit der von der AOAC veröffentlichten Methode (Official Method 991.43: Total, Soluble and Insoluble Dietary Fiber in Foods; Enzymatic-Gravimetric Method, MES-TRIS Buffer, First Action 1991, Final Action 1994.). Hier wurde lediglich mit Isopropylalkohol anstatt mit Ethanol gearbeitet.

### 15. Testmethode zur Bestimmung der Feuchtigkeit

Prinzip:

Unter dem Feuchtigkeitsgehalt der Probe wird die nach definierten Bedingungen ermittelte Massenabnahme nach der Trocknung verstanden. Es wird der Feuchtigkeitsgehalt der Probe mittels Infrarot-Trocknung mit dem Feuchtebestimmer Sartorius MA-45 (Fa. Sartorius, Göttingen, BRD) bestimmt.

Durchführung:

Es werden ca. 2,5 g der Faserprobe auf den Sartorius Feuchtebestimmer eingewogen. Die Einstellungen des Gerätes sind den entsprechenden werkseitigen Messvorschriften zu entnehmen. Die Proben sollen zur Bestimmung etwa Raumtemperatur haben. Der Feuchtigkeitsgehalt wird vom Gerät automatisch in Prozent [% M] angegeben. Der Trockensubstanzgehalt wird vom Gerät automatisch in Prozent [% S] angegeben.

### 14. Testmethode zur Bestimmung der Farbe und Helligkeit

Prinzip:

Die Farb- und Helligkeitsmessungen werden mit dem Minolta Chromameter CR 300 bzw. CR 400 durchgeführt. Die Bestimmung der spektralen Eigenschaften einer Probe erfolgt anhand von Normfarbwerten. Die Farbe einer Probe wird mit dem Farbton, der Helligkeit und der Sättigung beschrieben. Mit diesen drei Basiseigenschaften lässt sich die Farbe dreidimensional darstellen:
Die Farbtöne liegen auf dem Außenmantel des Farbkörpers, die Helligkeit verändert sich auf der senkrechten Achse und der Sättigungsgrad verläuft horizontal. Bei Verwendung des L*a*b*-Messsystems (sprich L-Stern, a-Stern, b-Stern) steht L* für die Helligkeit, während a* und b* sowohl den Farbton als auch die Sättigung angeben. a* und b* nennen die Positionen auf zwei Farbachsen, wobei a* der Rot-Grün-Achse und b* der Blau-Gelb-Achse zugeordnet ist. Für die Farbmessanzeigen wandelt das Gerät die Normfarbwerte in L*a*b*-Koordinaten um.

Durchführung der Messung:

Die Probe wird auf ein weißes Blatt Papier gestreut und mit einem Glasstopfen geebnet. Zur Messung wird der Messkopf des Chromameters direkt auf sie Probe gesetzt und der Auslöser betätigt. Von jeder Probe wird eine Dreifachmessung durchgeführt und der Mittelwert berechnet. Die L*-, a*-, b*-Werte werden vom Gerät mit zwei Stellen nach dem Komma angegeben.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

**15. Testmethode zur Bestimmung des wasserlöslichen Pektins in faserhaltigen Proben**

Prinzip:

Durch eine wässrige Extraktion wird das in faserhaltigen Proben enthaltene Pektin in die flüssige Phase übergeführt. Durch Zugabe von Alkohol wird das Pektin als alkoholunlösliche Substanz (AIS, alcohol insoluble substance) aus dem Extrakt ausgefällt.

Extraktion:

10,0 g der zu untersuchenden Probe werden in eine Glasschale eingewogen. 390 g kochendes destilliertes Wasser werden in einem Becherglas vorgelegt und die vorher abgewogene Probe wird mittels Ultra-Turrax 1 min auf höchster Stufe eingerührt.

Die auf Raumtemperatur abgekühlte Probensuspension wird auf vier 150 ml Zentrifugenbecher aufgeteilt und 10 min bei 4000 x g zentrifugiert. Der Überstand wird gesammelt. Das Sediment eines jeden Bechers wird mit 50 g destilliertem Wasser resuspendiert und erneut für 10 min bei 4000 x g zentrifugiert. Der Überstand wird gesammelt, das Sediment wird verworfen.

Die vereinigten Zentrifugate werden in ca. 4 l Isopropanol (98 %) zur Ausfällung der alkoholunlöslichen Substanz (AIS) gegeben. Nach einer ½ Stunde filtriert man über ein Filtertuch und presst die AIS manuell ab. Im Filtertuch wird dann die AIS in ca. 3 l Isopropanol (98 %) gegeben und von Hand unter Verwendung von Handschuhen aufgelockert.

Der Abpressvorgang wird wiederholt, die AIS quantitativ vom Filtertuch genommen, aufgelockert und bei 60 °C 1 Stunde im Trockenschrank getrocknet.

Die abgepresste, getrocknete Substanz wird zur Berechnung der alkoholunlöslichen Substanz (AIS) auf 0,1 g ausgewogen.

Berechnung:

Die Berechnung des wasserlöslichen Pektins bezogen auf die faserhaltige Probe erfolgt anhand der folgenden Formel, wobei das wasserlösliche Pektin als alkoholunlösliche Substanz (AIS) anfällt:

$$AIS\ in\ der\ Probe\ in\ Gew.\%\ (\frac{g}{100g}) = \frac{getrocknete\ AIS\ [g]\ x\ 100}{Probeneinwaage\ in\ g}$$

**16. Tribologische Charakterisierung einer Faserdispersion in Abhängigkeit von der Konzentration anhand der Reibzahl $\mu$**

Messdurchführung:

Rheometer Physica MCR 302, Tribologie-Messzelle T-PTD200, 3 PDMS-Pins unten, Natronglaskugel oben

1. Abschnitt:
Konditionierung $F_N$ = 1 N t = 60 s

2. Abschnitt

Gleitgeschwindigkeitsrampe
$F_N$ = 1 N
T = 25 °C

$$v_s = 10^{-4} - 100\ mm/s\ (log)$$

t = 250 s

Ergebnisse

Die Ergebnisse sind in der Figur 5 grafisch dargestellt. Bei Gleitgeschwindigkeiten von $v_s$ = 0,01 - 0,05 mm/s, also im Bereich kurz unterhalb des Losbrechmomentes (Maximum der Stribeckkurve) liegt die Reibungszahl $\mu$ der 1,5%igen Faserdispersionen (dunkelblaue Kurve) oberhalb der beiden Dispersionen mit einer Dosierung von 2,5 % und 3,5 % (grüne und gelbe Kurve) und oberhalb der beiden Dispersionen mit den niedrigsten Werten mit einer Dosierung von 4,5 % und 5,0 % hellblaue und pinkfarbene Kurve).

Dieses entspricht einer sensorisch empfundenen höheren Cremigkeit der Faserdispersionen mit steigender Konzentration.

Oberhalb des Losbrechmomentes bei Gleitgeschwindigkeiten im Bereich ab $v_s$ > 0,1 mm/s liegen die Kurven in der Reihenfolge entsprechend der eingesetzten Konzentration - je höher der Faseranteil, desto geringer die Reibungszahlen, das heißt desto cremiger das Mundgefühl.

**17. Bestimmung des Garverlustes bei Kochschinken**

Fragestellung:

Es sollte ermittelt werden, wie der Kochverlust bei Einsatz der erfindungsgemäßen Zusammensetzung ist. Als Rohmaterial wurden hierbei Unterschale und Oberschale aus dem Schwein sowie Putenbrust eingesetzt.

Versuchsdurchführung:

Es wurde eine Zusammensetzung verwendet, die 15 Gew.-% der erfindungsgemäßen Faser enthält. Weitere Bestandteile sind mit abnehmender Konzentration Dextrose, Kochsalz, Carbonatsalze, Natriumascorbat, Arginin und Entschäumer. Es wurde eine wasserbasierte Lake hergestellt, die 9,52 Gew.-% dieser Zusammensetzung enthält. Die Lake enthält zudem Kochsalz, Nitritpökelsalz, Hefeextrakt und Gewürze.

Das Fleisch wurde mit der Lake bei einer Injektionsrate von 20,73 Gew.-% (Schweineschinken) bzw. 17,65% (Putenschinken) injiziert, bezogen auf das originale Fleischgewicht. Das Fleisch wurde nach dem Injizieren zart gemacht ("tenderized"), im Vakuum getumbelt (Intervallprogramm mit Pause für insgesamt ca. 16 Stunden bei einer Temperatur von -1 °C - 0 °C), in eine Form gepresst und dann gekocht. Die Masse des eingesetzten Fleisches wurde im unbehandelten Zustand bestimmt. Die Massebestimmung des behandelten Fleisches erfolgte nach dem vor und nach dem Kochen und ergab einen Garverlust von nur 4,62 Gew.-% (Schweineschinken) bzw. 6,42 Gew.% (Putenschinken) bezogen auf das Gewicht vor dem Kochen. Somit ergibt sich eine entsprechende Ausbeute von 110,26 Gew.-% (Schweineschinken) bzw. 106,90 Gew.-%(Putenschinken) bezogen auf das ursprüngliche Fleischgewicht.

Ergebnisse

Der ermittelte Garverlust beträgt lediglich 4,62 Gew.% (Schweineschinken) bzw. 6,42 Gew.% (Putenschinken). Mit der entsprechenden Ausbeute von 110,26 Gew.-% (Schweineschinken) bzw. 106,90 Gew.-% (Putenschinken) bezogen auf das originale Fleischgewicht, ist eine hohe Aufnahmerate zu verzeichnen.

**Patentansprüche**

**1.** Verwendung einer aktivierbaren, entesterten, pektin-konvertierten Fruchtfaser zur Herstellung einer Kochpökelware, **dadurch gekennzeichnet, dass** die Fruchtfaser eine aktivierbare, entesterte, pektin-konvertierte Citrusfaser ist aufweisend eine Fließgrenze I (Rotation) in der Faserdispersion von mehr als 1,0 Pa und einem wasserlöslichen Pektingehalt von 10 bis 35 Gew%, wobei das wasserlösliche Pektin ein niederverestertes Pektin mit einem Veresterungsgrad von weniger 50% ist, oder die Fruchtfaser eine aktivierbare, entesterte, pektin-konvertierte Apfelfaser ist aufweisend eine Fließgrenze I (Rotation) in der Faserdispersion von mehr als 1,0 Pa und einem wasserlöslichen Pektingehalt von 10 bis 22 Gew%, wobei das wasserlösliche Pektin ein niederverestertes Pektin mit einem Veresterungsgrad von weniger 50% ist.

**2.** Verwendung gemäß Anspruch 1, **dadurch gekennzeichnet, dass** die aktivierbare, entesterte, pektin-konvertierte Fruchtfaser eine aktivierbare, entesterte, pektin-konvertierte Citrusfaser ist, die eine oder mehrere der folgenden Eigenschaften aufweist:

    a. eine Fließgrenze II (Rotation) in der Fasersuspension von größer 0,1 Pa, vorteilhafterweise von größer 0,6 Pa und besonders vorteilhafterweise von größer 1,0 Pa;
    b. Eine Fließgrenze II (Cross Over) in der Fasersuspension von größer 0,1 Pa, vorteilhafterweise von größer 0,4 Pa und besonders vorteilhafterweise von größer 0,6 Pa;

c. Eine Fließgrenze I (Rotation) in der Faserdispersion von größer 3,5 Pa und besonders vorteilhafterweise von größer 5,5 Pa;

d. Eine Fließgrenze I (Cross Over) in der Faserdispersion von größer 1,0 Pa, vorteilhafterweise von größer 4,0 Pa und besonders vorteilhafterweise von größer 6,0 Pa;

e. Eine dynamische Weissenbergzahl in der Fasersuspension von größer 5,5, vorteilhafterweise von größer 6,5 und besonders vorteilhaft von größer 8,0;

f. Eine dynamische Weissenbergzahl in der Faserdispersion von größer 6,0, vorteilhafterweise von größer 7,0 und besonders vorteilhaft von größer 8,5;

g. Eine Festigkeit in einer 4 Gew%igen wässrigen Suspension von größer 100 g hat, bevorzugt von größer 125 g und besonders bevorzugt von größer 150 g;

h. eine Viskosität von größer 300 mPas, bevorzugt von größer 400 mPas, und besonders bevorzugt von größer 500 mPas aufweist, wobei die aktivierbare, entesterte, pektin-konvertierte Citrusfaser in Wasser als 2,5 Gew%ige Lösung dispergiert wird und die Viskosität mit einer Scherrate von 50 s$^{-1}$ bei 20°C gemessen wird;

i. ein Wasserbindevermögen von mehr als 22 g/g, bevorzugt von mehr als 24 g/g, besonders bevorzugt von mehr als 26 g/g;

j. eine Feuchtigkeit von weniger als 15 Gew%, bevorzugt von weniger als 10 Gew% und besonders bevorzugt von weniger als 8%;

k. in 1,0 %iger wässriger Suspension einen pH-Wert von 3,0 bis 7,0 und bevorzugt von 4,0 bis 6,0;

l. eine Korngröße, bei der mindestens 90 Gew% der Partikel kleiner als 450 $\mu$m sind, bevorzugt mindestens 90 Gew% der Partikel kleiner als 350 $\mu$m sind und besonders bevorzugt mindestens 90 Gew% der Partikel kleiner als 100 $\mu$m sind;

m. einen Helligkeitswert L*> 84, bevorzugt von L* > 86 und besonders bevorzugt von L* > 88;

n. einen Ballaststoffgehalt der Citrusfaser von 80 bis 95 Gew%;

o. die Citrusfaser einen wasserlöslichen Pektingehalt von 15 bis 30 Gew% aufweist.

3. Verwendung gemäß Anspruch 1, **dadurch gekennzeichnet, dass** die aktivierbare, entesterte, pektin-konvertierte Fruchtfaser eine aktivierbare, entesterte, pektin-konvertierte Apfelfaser ist, die eine oder mehrere der folgenden Eigenschaften aufweist:

a. eine Fließgrenze II (Rotation) in der Fasersuspension von größer 0,1 Pa, vorteilhafterweise von größer 0,6 Pa und besonders vorteilhafterweise von größer 1,0 Pa;

b. Eine Fließgrenze II (Cross Over) in der Fasersuspension von größer 0,1 Pa, vorteilhafterweise von größer 0,4 Pa und besonders vorteilhafterweise von größer 0,6 Pa;

c. Eine Fließgrenze I (Rotation) in der Faserdispersion von größer 3,5 Pa und besonders vorteilhafterweise von größer 5,5 Pa;

d. Eine Fließgrenze I (Cross Over) in der Faserdispersion von größer 1,0 Pa, vorteilhafterweise von größer 4,0 Pa und besonders vorteilhafterweise von größer 6,0 Pa;

e. Eine dynamische Weissenbergzahl in der Fasersuspension von größer 5,5, vorteilhafterweise von größer 6,5 und besonders vorteilhaft von größer 8,0;

f. Eine dynamische Weissenbergzahl in der Faserdispersion von größer 6,0, vorteilhafterweise von größer 7,0 und besonders vorteilhaft von größer 8,5;

g. Eine Festigkeit in einer 4 Gew%igen wässrigen Suspension von größer 100 g hat, bevorzugt von größer 125 g und besonders bevorzugt von größer 150 g;

h. eine Viskosität von größer 300 mPas, bevorzugt von größer 400 mPas, und besonders bevorzugt von größer 500 mPas aufweist, wobei die aktivierbare, entesterte, pektin-konvertierte Apfelfaser in Wasser als 2,5 Gew%ige Lösung dispergiert wird und die Viskosität mit einer Scherrate von 50 s$^{-1}$ bei 20°C gemessen wird;

i. ein Wasserbindevermögen von mehr als 22 g/g, bevorzugt von mehr als 24 g/g, besonders bevorzugt von mehr als 26 g/g;

j. eine Feuchtigkeit von weniger als 15 Gew%, bevorzugt von weniger als 10 Gew% und besonders bevorzugt von weniger als 8 Gew% aufweist;

k. in 1,0 %iger wässriger Suspension einen pH-Wert von 3,0 bis 7,0 und bevorzugt von 4,0 bis 6,0 aufweist;

l. eine Korngröße, bei der mindestens 90 Gew% der Partikel kleiner als 450 $\mu$m sind, bevorzugt mindestens 90 Gew% der Partikel kleiner als 350 $\mu$m sind und besonders bevorzugt mindestens 90 Gew% der Partikel kleiner als 100 $\mu$m sind;

m. einen Helligkeitswert L* > 60, bevorzugt von L* > 61 und besonders bevorzugt von L* > 62;

n. einen Ballaststoffgehalt der Apfelfaser von 80 bis 95 Gew%;

o. die Apfelfaser einen wasserlöslichen Pektingehalt von 10 bis 15 Gew% aufweist.

**4.** Zusammensetzung zur Herstellung einer Kochpökelware aufweisend zwischen 1 und 30,0 Gew.-%, bevorzugt zwischen 10 und 25 Gew.-% und besonders bevorzugt zwischen 16 und 20 Gew.-% der aktivierbaren, entesterten, pektin-konvertierten Fruchtfaser gemäß einer der in den Ansprüchen 1 bis 3 verwendeten Fasern und ein Carbonatsalz als Trennmittel.

**5.** Zusammensetzung gemäß Anspruch 4, **dadurch gekennzeichnet, dass** die Zusammensetzung zusätzlich Protein enthält, wobei das Protein bevorzugt ein hydrolysiertes Protein ist, und wobei das hydrolysierte Protein besonders bevorzugt ein hydrolysiertes Schweine- und/oder Geflügelprotein ist.

**6.** Zusammensetzung gemäß Anspruch 5, **dadurch gekennzeichnet, dass** die Zusammensetzung 0,1 bis 5 Gew.-%, bevorzugt 0,2 bis 3,0 Gew.-%, bevorzugter 0,4 bis 1,5 Gew.-% an Protein enthält.

**7.** Zusammensetzung gemäß einem der Ansprüche 4 bis 6, **dadurch gekennzeichnet, dass** das Carbonatsalz ausgewählt ist aus der Gruppe bestehend aus Natriumcarbonat, Natriumhydrogencarbonat, Kaliumcarbonat, Kaliumhydrogencarbonat, wobei das Natriumcarbonat bevorzugt ist.

**8.** Zusammensetzung gemäß einem der Ansprüche 4 bis 7, **dadurch gekennzeichnet, dass** die Zusammensetzung in Pulverform ist.

**9.** Lake zur Herstellung einer Kochpökelware aufweisend ein wässriges Lösungsmittel und eine Zusammensetzung gemäß einem der Ansprüche 4 bis 8.

**10.** Verfahren zur Veredelung des Rohmaterials Fleisch, aufweisend die folgenden Schritte:

a.) Vermischen der Zusammensetzung gemäß einem der Ansprüche 4 bis 8 mit einem wässrigen Lösungsmittel und Nitritpökelsalz, und optional mit Citrat, um eine Lake zu erhalten;
b.) Injektion der in Schritt a.) erhaltenen Lake in das Rohmaterial Fleisch; und/oder Einlegen des Rohmaterials Fleisch in die gemäß Schritt a) erhaltene Lake;
c.) Mechanische Behandlung des gemäß Schritt b) behandelten Fleisches mittels Tumblerbehandlung oder Massierbehandlung.

**11.** Verfahren gemäß Anspruch 10, **dadurch gekennzeichnet, dass** die in Schritt a.) erhaltene Lake die Zusammensetzung in einer Konzentration von 5 bis 20 Gew.-% aufweist, bevorzugt von 10 bis 15 Gew.-%.

**12.** Kochpökelware enthaltend eine aktivierbare, entesterte, pektin-konvertierte Fruchtfaser, **dadurch gekennzeichnet, dass** diese Fruchtfaser eine verwendete Citrusfaser gemäß Anspruch 1 oder 2, oder eine verwendete Apfelfaser gemäß Anspruch 1 oder 3 ist.

**13.** Kochpökelware hergestellt unter Verwendung einer Zusammensetzung gemäß einem der Ansprüche 4 bis 8

**14.** Kochpökelware gemäß Anspruch 12 oder 13, **dadurch gekennzeichnet, dass** die Kochpökelware ausgewählt ist aus der Gruppe bestehend aus Kochschinken, Vorderkochschinken, Kasseler, Kaiserfleisch, Back- und Geflügelschinken, Pökelzunge, Bratenaufschnitt, gekochter Speck/Bacon, gepökelte Rinderbrust oder gepökeltes Eisbein.

**Claims**

**1.** Use of an activatable, de-esterified, pectin-converted fruit fibre for the manufacture of a cooked cured product, **characterized in that** the fruit fibre is an activatable, de-esterified, pectin-converted citrus fibre having a yield point I (rotation) in the fibre dispersion greater than 1.0 Pa and a water-soluble pectin content of 10 to 35 wt.%, wherein the water-soluble pectin is a low-esterified pectin with a degree of esterification of less than 50%, or the fruit fibre is a deesterified, pectin-converted apple fibre, having a yield point I (rotation) in the fibre dispersion of more than 1.0 Pa and a water-soluble pectin content of 10 to 22% by weight, wherein the water-soluble pectin is a low-esterified pectin with a degree of esterification of less than 50%.

**2.** Use according to claim 1, **characterized in that** the de-esterified, activatable pectin-converted fruit fibre is a de-esterified, activatable pectin-converted citrus fibre which has one or more of the following properties:

a. a yield point II (rotation) in the fibre suspension greater than 0.1 Pa, advantageously greater than 0.6 Pa and particularly advantageously greater than 1.0 Pa ;

b. a yield point II (cross over) in the fibre suspension greater than 0.1 Pa, advantageously greater than 0.4 Pa and particularly advantageously greater than 0.6 Pa ;

c. a yield point I (rotation) in the fibre dispersion greater than 3.5 Pa and particularly advantageously greater than 5.5 Pa ;

d. a yield point I (cross over) in the fibre dispersion greater than 1.0 Pa, advantageously greater than 4.0 Pa and particularly advantageously greater than 6.0 Pa ;

e. a dynamic Weissenberg index in the fibre suspension greater than 5.5, advantageously greater than 6.5 and particularly advantageously greater than 8.0 ;

f. a dynamic Weissenberg index in the fibre dispersion greater than 6.0, advantageously greater than 7.0 and particularly advantageously greater than 8.5 ;

g. a resistance in a 4% aqueous suspension greater than 100 g, preferably greater than 125 g and particularly preferably greater than 150 g;

h. a viscosity greater than 300 mPas, preferably greater than 400 mPas, and particularly preferably greater than 500 mPas, wherein the activatable, deesterified, pectin-converted citrus fibre is dispersed in water as a 2.5% solution and the viscosity is measured at a shear rate of 50 s$^{-1}$ at 20 °C ;

i. a water-binding capacity greater than 22 g/g, preferably greater than 24 g/g, particularly preferably greater than 26 g/g ;

j. a moisture content of less than 15% by weight, preferably less than 10% by weight and particularly preferably less than 8% by weight;

k. in a 1.0% aqueous suspension a pH value of 3.0 to 7.0, preferably 4.0 to 6.0;

l. a grain size, for which at least 90% by weight of the particles are smaller than 450 $\mu$m, particularly preferably at least 90% by weight of the particles are smaller than 350 $\mu$m and particularly preferably at least 90% by weight of the particles are smaller than 100 $\mu$m ;

m. a brightness value L* > 84, preferably L* > 86 and particularly preferably L* > 88 ;

n. a dietary fibre content of 80 to 95% by weight;

o. citrus fibre with a water-soluble pectin content of 15 to 30% by weight.

3. Use according to claim 1, **characterized in that** the activatable de-esterified pectin-converted fruit fibre is an activatable de-esterified pectin-converted apple fibre which has one or more of the following properties:

a. a yield point II (rotation) in the fibre suspension greater than 0.1 Pa, advantageously greater than 0.6 Pa and particularly advantageously greater than 1.0 Pa ;

b. a yield point II (cross over) in the fibre suspension greater than 0.1 Pa, advantageously greater than 0.4 Pa and particularly advantageously greater than 0.6 Pa ;

c. a yield point I (rotation) in the fibre dispersion greater than 3.5 Pa and particularly advantageously greater than 5.5 Pa ;

d. a yield point I (cross over) in the fibre dispersion greater than 1.0 Pa, advantageously greater than 4.0 Pa and particularly advantageously greater than 6.0 Pa ;

e. a dynamic Weissenberg index in the fibre suspension greater than 5.5, advantageously greater than 6.5 and particularly advantageously greater than 8.0 ;

f. a dynamic Weissenberg index in the fibre dispersion greater than 6.0, advantageously greater than 7.0 and particularly advantageously greater than 8.5 ;

g. a resistance in a 4% aqueous suspension greater than 100 g, preferably greater than 125 g and particularly preferably greater than 150 g;

h. a viscosity greater than 300 mPas, preferably greater than 400 mPas, and particularly preferably greater than 500 mPas, wherein the deesterified, activatable apple fibre converted to pectin is dispersed in water as a 2.5% solution and the viscosity is measured at a shear rate of 50 s$^{-1}$ at 20°C;

i. a water-binding capacity greater than 22 g/g, preferably greater than 24 g/g, particularly preferably greater than 26 g/g ;

j. a moisture content of less than 15% by weight, preferably less than 10% by weight and particularly preferably less than 8% by weight;

k. in a 1.0% aqueous suspension a pH value of 3.0 to 7.0, preferably 4.0 to 6.0;

l. a grain size, for which at least 90% by weight of the particles are smaller than 450 $\mu$m, particularly preferably at least 90% by weight of the particles are smaller than 350 $\mu$m and particularly preferably at least 90% by weight of the particles are smaller than 100 $\mu$m ;

m. a brightness value L* > 60, preferably L* > 61 and particularly preferably L* > 62 ;

n. an apple fibre dietary fibre content of 80 to 95% by weight;

o. apple fibre with a water-soluble pectin content of 10 to 15% by weight.

4. Composition for the manufacture of a cooked cured product, comprising between 1 and 30.0 wt.%, preferably between 10 and 25 wt.% and particularly preferably between 16 and 20 wt.% of the activatable, de-esterified, pectin-converted fruit fibre according to one of the fibres used in claims 1 to 3, as well as a carbonate salt as separating agent.

5. Composition according to claim 4, **characterized in that** the composition additionally contains protein, wherein the protein is preferably hydrolysed protein, and wherein the hydrolysed protein is particularly preferably hydrolysed pork and/or poultry protein.

6. Composition according to claim 5, **characterized in that** the composition contains 0.1 to 5% by weight, preferably 0.2 to 3.0% by weight, more preferably 0.4 to 1.5% by weight protein.

7. Composition according to any one of claims 4 to 6, **characterized in that** the carbonate salt is selected from the group consisting of sodium carbonate, sodium hydrogen carbonate, potassium carbonate, potassium hydrogen carbonate, wherein sodium carbonate is preferred.

8. Composition according to any one of claims 4 to 7, **characterized in that** the composition is in powder form.

9. Brine for the manufacture of a cooked cured product, comprising an aqueous solvent and a composition according to any one of claims 4 to 8.

10. Method for refining meat raw material, comprising the following steps:

a.) mixing the composition according to any one of claims 4 to 8 with an aqueous solvent and nitrite curing salt, and optionally citrate to obtain a brine;

b.) injection of the brine obtained in step a.) into the meat raw material; and/or
inserting the meat raw material into the brine obtained in step a);

c.) mechanical treatment of the meat processed in step b) by tumbling or massaging.

11. Method according to claim 10, **characterized in that** the brine obtained in step a.) has the composition in a concentration of 5 to 20% by weight, preferably 10 to 15% by weight.

12. Cooked cured product containing a fruit fibre converted into activatable deesterified pectin, **characterized in that** said fruit fibre is a citrus fibre used according to claim 1 or 2, or an apple fibre used according to claim 1 or 3.

13. Cooked cured product, made using a composition according to any one of claims 4 to 8.

14. Cooked cured product according to claim 12 or 13, **characterized in that** the cooked cured product is selected from the group consisting of cooked ham, cooked ham shoulder, smoked pork, Kaiserfleisch [smoked pork belly], cooked ham and poultry, salted tongue, sliced roasted charcuterie, cooked bacon, cured beef belly or cured pork shank.

**Revendications**

1. Utilisation d'une fibre de fruit convertie en pectine, désestérifiée, pouvant être activée pour fabriquer un produit de salaison cuit, **caractérisée en ce que** la fibre de fruit est une fibre d'agrume convertie en pectine, désestérifiée, pouvant être activée présentant une limite d'élasticité I (rotation) dans la dispersion de fibres supérieure à 1,0 Pa et une teneur en pectine hydrosoluble de 10 à 35 % en poids, dans laquelle la pectine hydrosoluble est une pectine faiblement estérifiée avec un degré d'estérification inférieur à 50 % ou la fibre de fruit est une fibre de pomme convertie en pectine, désestérifiée, pouvant être activée présentant une limite d'élasticité I (rotation) dans la dispersion de fibres supérieure à 1,0 Pa et une teneur en pectine hydrosoluble de 10 à 22 % en poids, dans laquelle la pectine hydrosoluble est une pectine faiblement estérifiée avec un degré d'estérification inférieur à 50 %.

2. Utilisation selon la revendication 1, **caractérisée en ce que** la fibre de fuit convertie en pectine, désestérifiée, pouvant être activée est une fibre d'agrume convertie en pectine désestérifiée, pouvant être activée, qui présente une ou plusieurs des propriétés suivantes :

a. une limite d'élasticité II (rotation) dans la suspension de fibres supérieure à 0,1 Pa, de manière avantageuse supérieure à 0,6 Pa et de manière particulièrement avantageuse supérieure à 1,0 Pa ;

b. une limite d'élasticité II (cross over) dans la suspension de fibres supérieure à 0,1 Pa, de manière avantageuse supérieure à 0,4 Pa et de manière particulièrement avantageuse supérieure à 0,6 Pa ;

c. une limite d'élasticité I (rotation) dans la dispersion de fibres supérieure à 3,5 Pa et de manière particulièrement avantageuse supérieure à 5,5 Pa ;

d. une limite d'élasticité I (cross over) dans la dispersion de fibres supérieure à 1,0 Pa, de manière avantageuse supérieure à 4,0 Pa et de manière particulièrement avantageuse supérieure à 6,0 Pa ;

e. un indice de Weissenberg dynamique dans la suspension de fibres supérieur à 5,5, de manière avantageuse supérieur à 6,5 et de manière particulièrement avantageuse supérieur à 8,0 ;

f. un indice de Weissenberg dynamique dans la dispersion de fibres supérieur à 6,0, de manière avantageuse supérieur à 7,0 et de manière particulièrement avantageuse supérieur à 8,5 ;

g. une résistance dans une suspension aqueuse à 4 % supérieure à 100 g, de manière préférée supérieure à 125 g et de manière particulièrement préférée supérieure à 150 g ;

h. une viscosité supérieure à 300 mPas, de manière préférée supérieure à 400 mPas, et de manière particulièrement préférée supérieure à 500 mPas, dans laquelle la fibre d'agrume convertie en pectine, désestérifiée, pouvant être activée est dispersée dans l'eau en tant que solution à 2,5 % et la viscosité est mesurée avec un taux de cisaillement de 50 s$^{-1}$ à 20 °C ;

i. une capacité de liaison à l'eau supérieure à 22 g/g, de manière préférée supérieure à 24 g/g, de manière particulièrement préférée supérieure à 26 g/g ;

j. une humidité inférieure à 15 % en poids, de manière préférée inférieure à 10 % en poids et de manière particulièrement préférée inférieure à 8 % ;

k. dans une suspension aqueuse à 1,0 % une valeur pH de 3,0 à 7,0 et de manière préférée de 4,0 à 6,0 ;

l. une taille de grain, pour laquelle au moins 90 % en poids des particules sont inférieurs à 450 $\mu$m, de manière particulièrement préférée au moins 90 % en poids des particules sont inférieurs à 350 $\mu$m et de manière particulièrement préférée au moins 90 % en poids des particules sont inférieurs à 100 $\mu$m ;

m. une valeur de luminosité L* > 84, de manière préférée L* > 86 et de manière particulièrement préférée L* > 88 ;

n. une teneur en fibres alimentaires de la fibre d'agrume de 80 à 95 % en poids ;

o. la fibre de citrus présentant une teneur en pectine hydrosoluble de 15 à 30 % en poids.

**3.** Utilisation selon la revendication 1, **caractérisée en ce que** la fibre de fruit convertie en pectine, désestérifiée, pouvant être activée est une fibre de pomme convertie en pectine désestérifiée pouvant être activée, qui présente une ou plusieurs des propriétés suivantes :

a. une limite d'élasticité II (rotation) dans la suspension de fibres supérieure à 0,1 Pa, de manière avantageuse supérieure à 0,6 Pa et de manière particulièrement avantageuse supérieure à 1,0 Pa ;

b. une limite d'élasticité II (cross over) dans la suspension de fibres supérieure à 0,1 Pa, de manière avantageuse supérieure à 0,4 Pa et de manière particulièrement avantageuse supérieure à 0,6 Pa ;

c. une limite d'élasticité I (rotation) dans la dispersion de fibres supérieure à 3,5 Pa et de manière particulièrement avantageuse supérieure à 5,5 Pa ;

d. une limite d'élasticité I (cross over) dans la dispersion de fibres supérieure à 1,0 Pa, de manière avantageuse supérieure à 4,0 Pa et de manière particulièrement avantageuse supérieure à 6,0 Pa ;

e. un indice de Weissenberg dynamique dans la suspension de fibres supérieur à 5,5, de manière avantageuse supérieur à 6,5 et de manière particulièrement avantageuse supérieur à 8,0 ;

f. un indice de Weissenberg dynamique dans la dispersion de fibres supérieur à 6,0, de manière avantageuse supérieur à 7,0 et de manière particulièrement avantageuse supérieur à 8,5 ;

g. une résistance dans une suspension aqueuse à 4 % supérieure à 100 g, de manière préférée supérieure à 125 g et de manière particulièrement préférée supérieure à 150 g ;

h. une viscosité supérieure à 300 mPas, de manière préférée supérieure à 400 mPas, et de manière particulièrement préférée supérieure à 500 mPas, dans laquelle la fibre de pomme convertie en pectine, désestérifiée, pouvant être activée est dispersée dans l'eau en tant que solution à 2,5 % et la viscosité est mesurée avec un taux de cisaillement de 50 s$^{-1}$ à 20 °C ;

i. une capacité de liaison à l'eau supérieure à 22 g/g, de manière préférée supérieure à 24 g/g, de manière particulièrement préférée supérieure à 26 g/g ;

j. une humidité inférieure à 15 % en poids, de manière préférée inférieure à 10 % en poids et de manière particulièrement préférée inférieure à 8 % en poids ;

k. dans une suspension aqueuse à 1,0 % une valeur pH de 3,0 à 7,0 et de manière préférée de 4,0 à 6,0 ;

l. une taille de grain, pour laquelle au moins 90 % en poids des particules sont inférieurs à 450 $\mu$m, de manière

particulièrement préférée au moins 90 % en poids des particules sont inférieurs à 350 μm et de manière particulièrement préférée au moins 90 % en poids des particules sont inférieurs à 100 μm ;

m. une valeur de luminosité L* > 60, de manière préférée L* > 61 et de manière particulièrement préférée L* > 62 ;

n. une teneur en fibres alimentaires de la fibre de pomme de 80 à 95 % en poids ;

o. la fibre de pomme présentant une teneur en pectine hydrosoluble de 10 à 15 % en poids.

4. Composition pour la fabrication d'un produit de salaison cuit présentant entre 1 et 30,0 % en poids, de manière préférée entre 10 et 25 % en poids et de manière particulièrement préférée entre 16 et 20 % en poids de la fibre de fruit convertie en pectine, désestérifiée, pouvant être activée selon l'une des fibres utilisées dans les revendications 1 à 3 et un sel de carbonate en tant qu'agent de séparation.

5. Composition selon la revendication 4, **caractérisée en ce que** la composition contient en supplément de la protéine, dans laquelle la protéine est de manière préférée une protéine hydrolysée, et dans laquelle la protéine hydrolysée est de manière particulièrement préférée une protéine de porc et/ou de volaille hydrolysée.

6. Composition selon la revendication 5, **caractérisée en ce que** la composition contient 0,1 à 5 % en poids, de manière préférée 0,2 à 3,0 % en poids, de manière davantage préférée 0,4 à 1,5 % en poids de protéine.

7. Composition selon l'une quelconque des revendications 4 à 6, **caractérisée en ce que** le sel de carbonate est choisi parmi le groupe constitué de carbonate de sodium, d'hydrogénocarbonate de sodium, de carbonate de potassium, d'hydrogénocarbonate de potassium, dans laquelle le carbonate de sodium est préféré.

8. Composition selon l'une quelconque des revendications 4 à 7, **caractérisée en ce que** la composition est en forme de poudre.

9. Saumure destinée à fabriquer un produit de salaison cuit présentant un solvant aqueux et une composition selon l'une quelconque des revendications 4 à 8.

10. Procédé d'affinage de la matière première viande, présentant les étapes suivantes :

a.) de mélange de la composition selon l'une quelconque des revendications 4 à 8 à un solvant aqueux et à du sel de salaison de nitrite, et en option à du citrate pour obtenir une saumure ;

b.) d'injection de la saumure obtenue à l'étape a.) dans la matière première viande ; et/ou d'insertion de la matière première viande dans la saumure obtenue selon l'étape a) ;

c.) de traitement mécanique de la viande traitée selon l'étape b) par un traitement au tumbler ou par un traitement par massage.

11. Procédé selon la revendication 10, **caractérisé en ce que** la saumure obtenue à l'étape a.) présente la composition en une concentration de 5 à 20 % en poids, de manière préférée de 10 à 15 % en poids.

12. Produit de salaison cuit contenant une fibre de fruit convertie en pectine désestérifiée pouvant être activée, **caractérisé en ce que** ladite fibre de fruit est une fibre d'agrume utilisée selon la revendication 1 ou 2, ou une fibre de pomme utilisée selon la revendication 1 ou 3.

13. Produit de salaison cuit fabriqué en utilisant une composition selon l'une quelconque des revendications 4 à 8.

14. Produit de salaison cuit selon la revendication 12 ou 13, **caractérisé en ce que** le produit de salaison cuit est choisi parmi le groupe constitué de jambon cuit, d'épaule de jambon cuit, de porc fumé, de Kaiserfleisch [poitrine de porc fumée], de jambon cuit et de volaille, de langue salée, de charcuterie rôtie tranchée, de lard cuit, de poitrine de boeuf traitée en salaison ou de jarret de porc traité en salaison.

## Fig. 1

```
                    ┌─────────────────────┐
                    │    Citrus- oder     │
                    │    Apfeltrester     │
                    └─────────────────────┘
                               │
                               ▼
        ┌─────────────────────────┐      ┌─────────────────────┐
        ┊  Schonender Aufschluss  ┊─────▶┊   Hochwertiges      ┊
        ┊                         ┊      ┊      Pektin         ┊
        └─────────────────────────┘      └─────────────────────┘
                               │
                               ▼
        ┌─────────────────────────┐
        │    Saurer Aufschluss    │
        └─────────────────────────┘
                               │
                               ▼
        ┌─────────────────────────┐
        │       Entesterung       │
        └─────────────────────────┘
                               │
                               ▼
        ┌─────────────────────────┐
        │   Alkoholwaschschritt   │
        │        (sauer)          │
        └─────────────────────────┘
                               │
                               ▼
        ┌─────────────────────────┐      ┌─────────────────────┐
        │        Dekanter         │─────▶│      Alkohol,        │
        │                         │      │  (+ Calciumsalze)   │
        └─────────────────────────┘      └─────────────────────┘
                               │
                               ▼
        ┌─────────────────────────┐
        │   Alkoholwaschschritt   │
        │        (basisch)        │
        └─────────────────────────┘
                               │
                               ▼
        ┌─────────────────────────┐      ┌─────────────────────┐
        │        Dekanter         │─────▶│      Alkohol         │
        └─────────────────────────┘      └─────────────────────┘
                               │
                               ▼
        ┌─────────────────────────┐
        │        Trocknen         │
        └─────────────────────────┘
                               │
                               ▼
        ┌─────────────────────────┐
        │  Vermahlen und Sieben   │
        └─────────────────────────┘
                               │
                               ▼
        ┌─────────────────────────┐
        │ Aktivierbare entesterte │
        │ Citrus- oder Apfelfaser │
        └─────────────────────────┘
```

EP 4 223 144 B1

Fig. 2

# Fig. 3

(A)

| Bruchfestigkeit [HPE] | trocken | trocken + 8% Na-PP | Dispersion | Dispersion + 8% ZNa-PP |
|---|---|---|---|---|
| 1. Abfüllen | 567 | 1159 | 537 | 953 |
| nach 1. Aufschmelzen | 555 | 1148 | 496 | 995 |
| nach 2. Aufschmelzen | 592 | 1107 | 467 | 1013 |
| nach 3. Aufschmelzen | 506 | 1209 | 483 | 974 |

(B)

## Fig. 4

(A)

(B)

(C)

## Fig. 5

R200-C - 5,0% - 01.02.2020
A144
  μ
  d

R200-C - 2,5% - 01.02.2020
A144
  μ
  d

R200-C - 4,5% - 01.02.2020
A144
  μ
  d

R200-C - 1,5% - 01.02.2020
A144
  μ
  d

R200-C - 3,5% - 01.02.2020
A144
  μ
  d

# Fig. 6

**(A)**

|  | 100°C | 80 °C | 70 °C | 60°C |
|---|---|---|---|---|
| 1. Abfüllen | 567 | 548 | 528 | 545 |
| nach 1. Aufschmelzen | 555 | 497 | 330 | 295 |
| nach 2. Aufschmelzen | 592 | 485 | 327 | 219 |
| nach 3. Aufschmelzen | 506 | 500 | 334 | 211 |

**(B)**

Bruchfestigkeit und Thermoreversibilität
Citrusfaser R200-C
Testgel EV 489

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020221400 A

- DE 102020120606

**In der Beschreibung aufgeführte Nicht-Patentliteratur**

- **CHURCH et al.** *Anal. Biochem.,* 1985, vol. 146, 343

- *Food Technology,* 1959, vol. 13, 496-500